# EUROPEAN PATENT APPLICATION

(11) **EP 4 822 434 A1**
(43) Date of publication of application: **14.10.2026**
(21) Application number: 26170903.4
(22) Date of filing: 07.04.2026
(51) Int. Cl.: G02F 1/13357, G02F 1/1335

(54) **BACKLIGHT UNIT FOR DISPLAY DEVICE**

(30) Priority: 08.04.2025 KR 20250045710; 11.07.2025 KR 20250093450
(71) Applicant: LG Electronics Inc., Yeongdeungpo-gu Seoul 07336 (KR)
(72) Inventor: LEE, Uihyung, Seoul (KR); KIM, Minho, Seoul (KR); KIM, Geunhwan, Seoul (KR)
(74) Representative: Schott, Jakob Valentin

(57) **Abstract**

A backlight unit for a display device includes: a plurality of light sources arranged in a matrix pattern on at least one substrate, each of the light sources including a red light emitting diode (LED), a green LED, and a blue LED; a frame accommodating the substrate, the frame including a receiving portion at which the substrate is disposed, and a side portion extending obliquely from edges of the receiving portion; a reflective sheet covering the substrate, the reflective sheet including a central portion that covers the substrate and a chamfer portion that covers the side portion; and a phosphor on the chamfer portion.

## Description

### CROSS-REFERENCE TO RELATED APPLICATION

This application claims the priority benefit of Korean Patent Application No. 10-2025-0045710, filed on April 8, 2025 and Korean Patent Application No. 10-2025-0093450, filed on July 11, 2025, the disclosure of which is incorporated herein by reference.

### TECHNICAL FIELD

The following description relates to a backlight unit for a display device.

### BACKGROUND

With the development of the information society, there have been growing demands for various types of display devices, and in order to meet these demands, various display devices, such as a liquid crystal display (LCD), a plasma display panel (PDP), an electroluminescent display (ELD), a vacuum fluorescent display (VFD), an organic light emitting diode (OLED), etc., have been studied and used recently.

Among these devices, the LCD panel includes a TFT substrate and a color substrate which are positioned opposite each other with a liquid crystal layer interposed therebetween, and displays an image by using light provided by a backlight unit.

Recently, amid a growing interest in image quality of display devices, color expression or color gamut close to true color is receiving great interest, and many studies are being conducted on a backlight unit for a display device to improve light uniformity and realize true color.

### SUMMARY

It is an objective of the present disclosure to solve the above and other problems.

It is another objective of the present disclosure to provide a backlight unit for a display device capable of improving image quality.

It is yet another objective of the present disclosure to provide a backlight unit for a display device capable of improving color gamut.

It is yet another objective of the present disclosure to provide a backlight unit for a display device capable of improving luminance.

It is yet another objective of the present disclosure to provide a backlight unit for a display device capable of improving stereoscopic or three-dimensional (3D) effect.

It is yet another objective of the present disclosure to provide a backlight unit for a display device capable of increasing a viewing angle.

It is yet another objective of the present disclosure to provide a backlight unit for a display device capable of improving the ability to produce white light.

It is yet another objective of the present disclosure to provide a backlight unit for a display device including a red light emitting diode (LED), a green LED, and a blue LED.

It is yet another objective of the present disclosure to provide a backlight unit for a display device capable of improving color separation.

It is yet another objective of the present disclosure to provide a backlight unit for a display device capable of reducing manufacturing costs.

In accordance with an aspect of the present disclosure, the above and other objectives can be accomplished by providing a backlight unit for a display device including: a plurality of light sources arranged in a matrix pattern on at least one substrate, each of the light sources including a red light emitting diode (LED), a green LED, and a blue LED; a frame accommodating the substrate, the frame including a receiving portion at which the substrate is disposed, and a side portion extending obliquely from edges of the receiving portion; a reflective sheet covering the substrate, the reflective sheet including a central portion that covers the substrate and a chamfer portion that covers the side portion; and a phosphor on the chamfer portion.

In accordance with another aspect of the present disclosure, the above and other objectives can be accomplished by providing a backlight unit for a display device including: a plurality of light sources arranged in a matrix pattern on a substrate, each of the light sources including a red light emitting diode (LED), a green LED, and a blue LED; a frame accommodating the substrate, the frame including a receiving portion at which the substrate is disposed, and a side portion extending obliquely from edges of the receiving portion; and a reflective sheet including a central portion that covers the substrate and a chamfer portion that covers the side portion, wherein the light sources include: first outer light sources arranged in a first row of the matrix pattern; and second outer light sources arranged in a last row of the matrix pattern, wherein the red, green, and blue LEDs of each of at least some of the first and second outer light sources are arranged in a row direction of the matrix pattern regardless of order.

In accordance with yet another aspect of the present disclosure, the above and other objectives can be accomplished by providing a backlight unit for a display device including: a plurality of light sources arranged in a matrix pattern on at least one substrate; a frame accommodating the substrate, the frame including a receiving portion at which the substrate is disposed, and a side portion extending obliquely from edges of the receiving portion; a reflective sheet covering the substrate, the reflective sheet including a central portion that covers the substrate and a chamfer portion that covers the side portion; and a phosphor on the chamfer portion, wherein the light sources include: outer light sources arranged in a first row, a last row, a first column, and a last column of the matrix pattern; and inner light sources including a red light emitting diode (LED), a green LED, and a blue LED and surrounded by the outer light sources, wherein at least some of the outer light sources correspond to the blue LED.

### BRIEF DESCRIPTION OF THE DRAWINGS

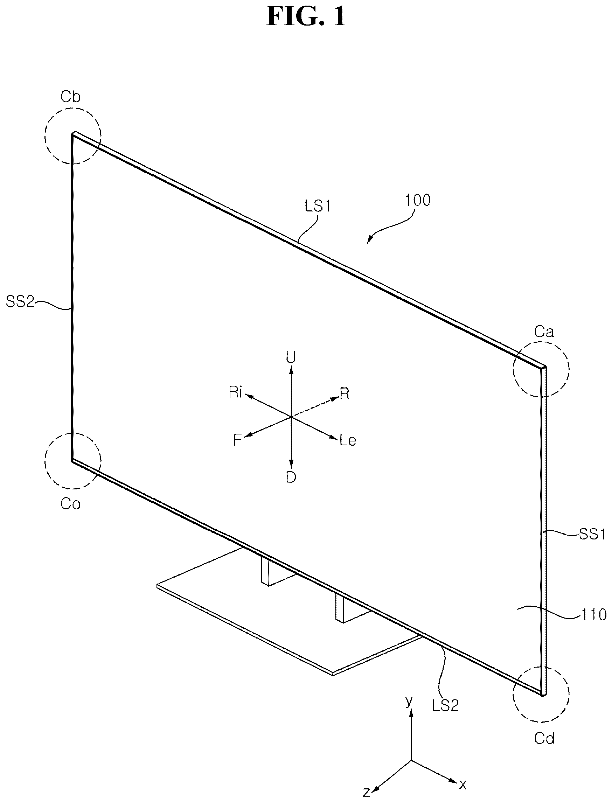

FIGS. 1 to 61 are diagrams illustrating examples of a backlight unit for a display device according to embodiments of the present disclosure.

### DETAILED DESCRIPTION

Hereinafter, the present disclosure will be described in detail with reference to the accompanying drawings, in which the same reference numerals are used throughout the drawings to designate the same or similar components, and a redundant description thereof will be omitted.

The suffixes, such as "module" and "unit," for elements used in the following description are given simply in view of the ease of the description, and do not have a distinguishing meaning or role.

In addition, it will be noted that a detailed description of known arts will be omitted if it is determined that the detailed description of the known arts can obscure the embodiments of the present disclosure. Further, the accompanying drawings are used to help understand various technical features and the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

A singular representation may include a plural representation unless context clearly indicates otherwise.

It should be understood that the terms, "comprise," "include," "have," etc. when used in this specification, specify the presence of stated features, integers, steps, operations, elements, components, or combinations thereof but do not preclude the presence or addition of one or more other features, integers, steps, operations, elements, components, or combinations thereof.

References to directions, such as up (U), down (D), left (Le), right (Ri), front (F), and rear (R), shown in the drawings are provided merely for convenience of explanation and are not intended for limiting the scope of the present disclosure.

Referring to FIG. 1, a display device 100 includes a display panel 110. The display panel 10 may display an image.

The display device 100 includes a first long side LS1, a second long side LS2 opposite to the first long side LS1, a first short side SS1 adjacent to the first long side LS1 and the second long side LS2, and a second short side SS2 opposite to the first short side SS1. For convenience of explanation, it is illustrated and described that the first and second long sides LS1 and LS2 are longer than the first and second short sides SS1 and SS2, but it is also possible that the lengths of the first and second long sides LS1 and LS2 are approximately the same as the lengths of the first and second short sides SS1 and SS2.

A direction parallel to the long sides LS1 and LS2 of the display device 100 may be referred to as a left-right direction. A direction parallel to the short sides SS1 and SS2 of the display device 100 may be referred to as an up-down direction. A direction perpendicular to the long sides LS1 and LS2 and the short sides SS1 and SS2 of the display device 100 may be referred to as a front-rear direction.

A side on which the display panel 110 displays an image may be referred to as a front side (F, z), and a side opposite thereto may be referred to as a rear side (R). The first long side LS1 may be referred to as an upper side (U, y), and the second long side LS2 may be referred to as a lower side (D). The first short side SS1 may be referred to as a left side (Le, x), and the second short side SS2 may be referred to as a right side (Ri).

The first long side LS1, the second long side LS2, the first short side SS1, and the second short side SS2 may be referred to as edges of the display device 100. Further, positions where the first long side LS1, the second long side LS2, the first short side SS1, and the second short side SS2 meet each other may be referred to as corners.

A position where the first short side SS1 and the first long side LS1 meet may be referred to as a first corner Ca. A position where the first long side LS1 and the second short side SS2 meet may be referred to as a second corner Cb. A position where the second short side SS2 and the second long side LS2 meet may be referred to as a third corner Cc. A position where the second long side LS2 and the first short side SS1 meet may be referred to as a fourth corner Cd.

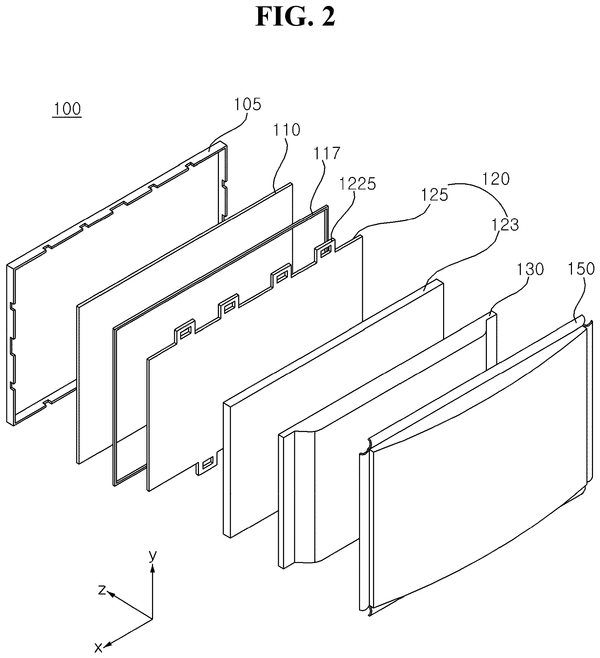

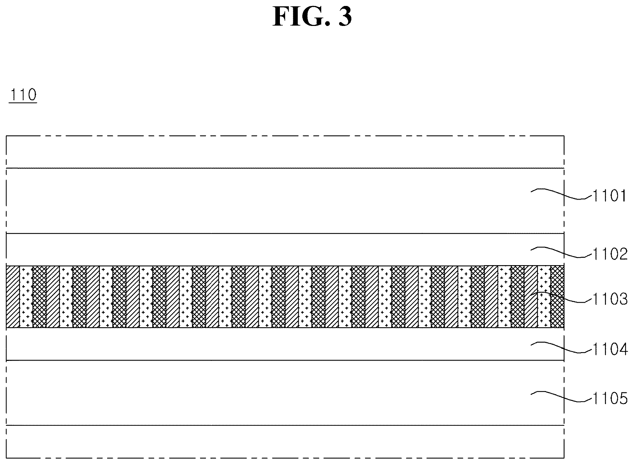

Referring to FIGS. 2 and 3, the display device 100 may include a display panel 110, a front cover 105, a guide panel 117, a backlight unit 120, a frame 130, and a back cover 150.

The display panel 110 may define a front surface of the display device 100 and display an image. The display panel 110 may display an image in such a manner that a plurality of pixels output red, green or blue (RGB) for each pixel in time.

The display panel 110 may have a rectangular shape. The display panel 110 may be provided in various sizes. The size of the display panel 110 may be obtained by measuring a diagonal length of the screen in inches. For example, the display panel 110 may have a size of about 115 inches, about 100 inches, about 86 inches, or about 75 inches.

The display panel 110 may be divided into an active area in which an image is displayed, and a de-active area in which no image is displayed.

The display panel 110 may include a front plate 1101 and a rear plate 1105 that are opposite each other with a liquid crystal layer 1103 interposed therebetween. The front plate 1101 of the display panel 110 may be referred to as a first polarizing plate 1101, and the rear plate 1105 thereof may be referred to as a second polarizing plate 1105. The display panel 110 may be referred to as an LCD panel.

The front plate 1101 may include a plurality of pixels composed of red (R), green (G), and blue (B) subpixels. The front plate 1101 may output light corresponding to red, green, or blue color in response to a control signal.

The rear plate 1105 may include switching elements. The rear plate 1105 may switch on or off pixel electrodes. For example, the pixel electrode may change a molecular arrangement of a liquid crystal layer in response to a control signal received from the outside.

The liquid crystal layer 1103 may include liquid crystal molecules. The arrangement of the liquid crystal molecules may be changed depending on a voltage difference between the pixel electrode and a common electrode. The liquid crystal layer 1103 may transmit light, provided from a backlight unit 120, to the front plate 1101 or may block the light.

The front plate 1101 may be adhered to the liquid crystal layer 1103 by a first adhesive layer 1102, and the rear plate 1105 may be adhered to the liquid crystal layer 1103 by a second adhesive layer 1103.

The front cover 105 may cover the front surface of the display panel 110 and at least a portion of the side surface of the display panel 110. The front cover 105 may be divided into a front cover disposed on the front surface of the display panel 110, and a side cover disposed on the side surface of the display panel 110. At least one of the front cover and the side cover may be omitted.

The guide panel 117 may surround the perimeter of the display panel 110 and cover the side surface of the display panel 110. The guide panel 117 may be coupled to the display panel 110 or may support the display panel 110.

The backlight unit 120 may be disposed at the rear of the display panel 110. The backlight unit 120 may include light sources. The backlight unit 120 may be coupled to the frame 130 at the front of the frame 130. The backlight unit 120 may be driven by a full driving scheme or a partial driving scheme such as local dimming, impulsive driving, or the like. The backlight unit 120 may include an optical sheet 125 and an optical layer 123.

The optical sheet 125 may enable light from the light sources to be uniformly transmitted to the display panel 110. The optical sheet 125 may be composed of a plurality of layers. For example, the optical sheet 125 may include a prism layer, a diffusion layer and the like. For example, the optical sheet 125 may include a Double Brightness Enhance Film (DBEF). Further, a coupling portion 125e of the optical sheet 125 may be coupled to the front cover 105, the frame 130, or the back cover 150.

The frame 130 may be disposed at the rear of the backlight unit 120 and may support the components of the display device 100. For example, components, such as the backlight unit 120, a printed circuit board (PCB) on which a plurality of electronic components are mounted, etc., may be coupled to the frame 130. The frame 130 may be referred to as a cover bottom 130.

The back cover 150 may cover the rear of the frame 130. The back cover 150 may be coupled to the frame 130 and/or the front cover 105.

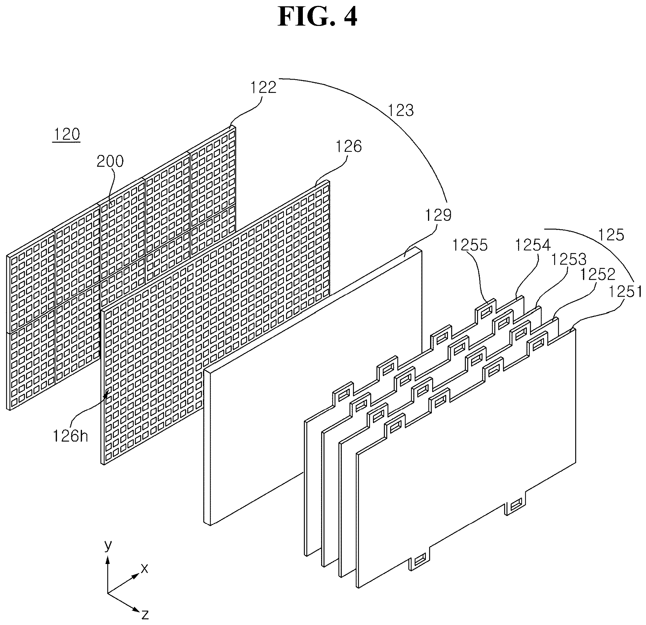

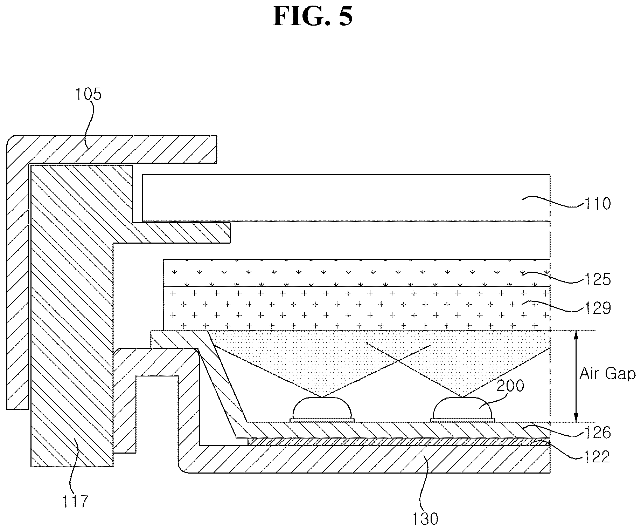

Referring to FIGS. 4 and 5, the backlight unit 120 may include the optical layer 123 and the optical sheet 125. The optical layer 123 may include at least one substrate 122, at least one light source 200, a reflective sheet 126, and a diffusion plate 129.

At least one substrate 122 may be coupled to the front surface of the frame 130. Each of a plurality of substrates 122 may be formed in the shape of a plate. However, the substrates 122 are not limited thereto, and may include a plurality of straps which are vertically spaced apart from each other. Alternatively, each of the plurality of substrates 122 may be formed in the shape of a fork including a first plate that is elongated, and a plurality of second plates that intersect the first plate.

The substrate 122 may be made of at least one selected from among polyethylene terephthalate (PET), glass, polycarbonate (PC), and silicon (Si). The substrate 122 may be a printed circuit board (PCB).

At least one light source 200 may be mounted on the substrate 122. A plurality of light sources 200 may be spaced apart from each other on the substrate 122. An electrode pattern may be formed on the substrate 122. The electrode pattern may electrically connect an adapter and the light sources 200. For example, the electrode pattern may connect the light sources 200 and an adapter, and may be a carbon nano tube (CNT) electrode pattern.

The light source 200 may be a light-emitting diode (LED) chip or a light-emitting diode package including at least one light-emitting diode chip. The light source 200 may be a colored LED that emits light of at least one color of red, green, and blue. For example, the light source 200 may include a red LED, a green LED, and a blue LED that emit red, green, and blue light.

Accordingly, the light source 200 may provide white light by mixing red light, green light, and blue light. For example, the light source 200 may provide white light, corresponding to a color coordinate of (about 0.281, about 0.288) and/or a color temperature of about 10000K, by mixing the red, green, and blue light.

The light sources 200 may be arranged in a matrix pattern. For example, the light sources 200 may be arranged in a direction of long sides and short sides of the display device 100. A row direction of the matrix pattern may be parallel to the direction of long sides of the display device 100. A column direction of the matrix pattern may be parallel to the direction of short sides of the display device 100. For example, the column direction of the matrix pattern may be parallel to the up-down direction, and the row direction of the matrix pattern may be parallel to the left-right direction.

However, the row direction and the column direction of the matrix pattern are not limited thereto, and may also be parallel to the short-side direction and the long-side direction, respectively, of the display device 100.

The reflective sheet 126 may be disposed at the front of the substrates 122. The reflective sheet 126 may have holes 126h through which the light sources 200 pass. For example, the light sources 200 may be exposed to the reflective sheet 126 through the holes 126h of the reflective sheet 126.

The reflective sheet 126 may include at least one of a metal or a metal oxide which is a reflective material. For example, the reflective sheet 126 may include a metal having a high reflectance such as at least one of aluminum (Al), silver (Ag), gold (Au), or titanium dioxide (TiO2), and/or a metal oxide. The reflective sheet 60 may reflect light provided from the light sources 200 or light reflected from the diffusion plate 129 in a forward direction.

The diffusion plate 129 may be disposed at the front of the reflective sheet 126. The diffusion plate 129 may receive light from the light sources 200. The diffusion plate 129 may diffuse light from the light sources 200. A supporter (not shown) may be disposed between the reflective sheet 126 and the diffusion plate 129, and may support the rear surface of the diffusion plate 129. An air gap may be formed between the reflective sheet 126 and the diffusion plate 129, and the light from the light sources 200 may be spread widely by the air gap. The diffusion plate 129 may be referred to as an optical plate 129.

The optical sheet 125 may be disposed at the front of the diffusion plate 129. The optical sheet 125 may be provided between the diffusion plate 129 and the display panel 110. The rear surface of the optical sheet 125 may be in close contact with the diffusion plate 129, and the front surface of the optical sheet 125 may be in close contact with or adjacent to the rear surface of the display panel 110. The optical sheet 125 may include at least one layer.

For example, the optical sheet 125 may include a plurality of layers having different functions. A first optical layer 1251 may be a diffusion layer, and a second optical layer 1252 and a third optical layer 1253 may be prism layers. The prism layer may collect light emitted from the diffusion plate 129 and provide the collected light to the display panel 110. The diffusion layer may prevent light, emitted from the diffusion plate 129, from being partially concentrated, thereby making light distribution uniform. The number and/or position of the prism layer and the diffusion layer may vary.

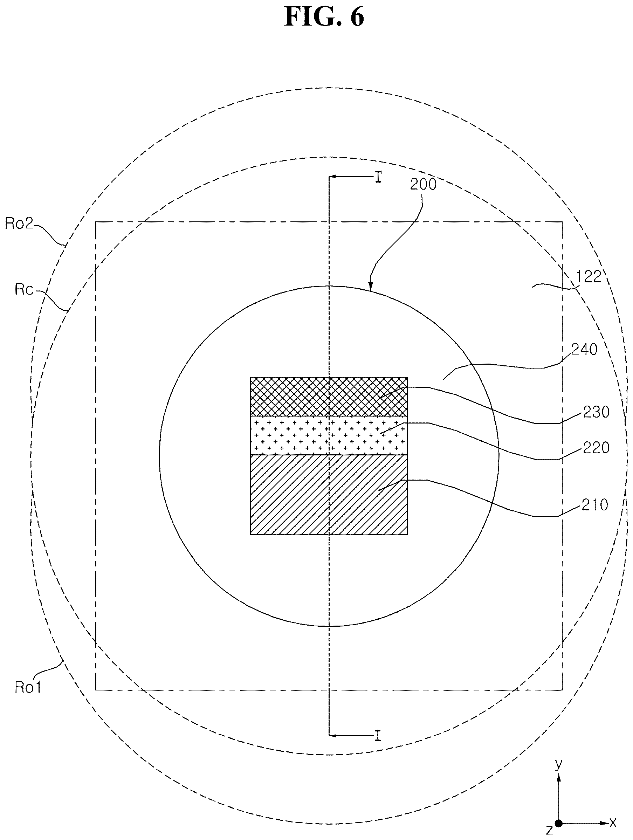

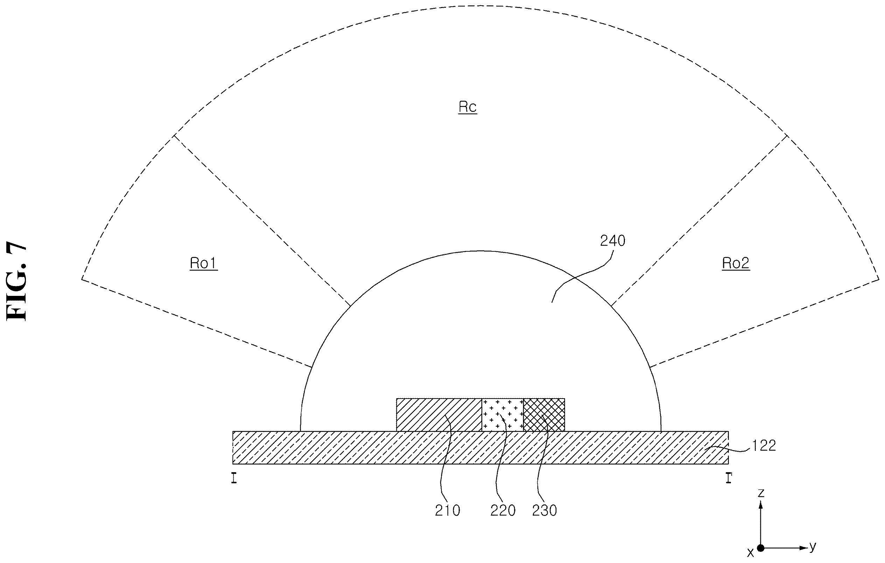

Referring to FIGS. 6 and 7, each of the light sources 200 may include a plurality of light emitting diodes (LEDs) configured to emit light of different colors. Each of the light sources 200 may include at least one of a red LED 210, a green LED 220, or a blue LED 230. For example, each of the light sources 200 may include the red LED 210, the green LED 220, or the blue LED 230. For example, the light source 200 may be referred to as an RGB light source 200 or RGB LED(s).

Each of the light sources 200 may provide white light by mixing red, green, and blue light emitted by the red, green, and blue LEDs 210, 220, and 230. For example, each of the light sources 200 may provide white light corresponding to a color coordinate of (about 0.281, about 0.288) and/or a color temperature of about 10000K.

Each of the red, green, and blue LEDs 210, 220, and 230 may include a light-emitting region. The light-emitting region may indicate a sum of paths of light emitted by the LEDs. For example, the red LED 210 may include a red light-emitting region, the green LED 220 may include a green light-emitting region, and a blue LED 230 may include a blue light-emitting region.

The light-emitting regions of the red, green, and blue LEDs 210, 220, and 230 may be formed in an arrangement order of the red, green, and blue LEDs 210, 220, and 230. For example, the red, green, and blue LEDs 210, 220, and 230 may be arranged sequentially in a y direction, and the red, green, and blue light-emitting regions may also be arranged sequentially in the y direction.

The red, green, and blue light-emitting regions may overlap each other. A region in which the red, green, and blue light-emitting regions overlap each other may be referred to as a white light-emitting region Rc. The red, green, and blue light may be mixed in the white light-emitting region Rc to produce white light.

Some of the red, green, and blue light-emitting regions may not overlap each other. For example, the red, green, and blue light-emitting regions may be formed sequentially in the y direction, a portion Ro1 of the red light-emitting regions located at the edge may not overlap other light-emitting regions, and the portion of the red light-emitting regions may be referred to as a first colored light-emitting region Ro1. In addition, a portion Ro2 of the blue light-emitting regions located at the edge may not overlap other light-emitting regions, and the portion of the blue light-emitting regions may be referred to as a second colored light-emitting region Ro2. The first colored light-emitting region Ro1 may have red color, and the second colored light-emitting region Ro2 may have blue color.

However, the colors of the first colored light-emitting region and the second colored light-emitting region are not limited thereto, and may vary depending on the arrangement of the LEDs.

In addition, in one embodiment, the arrangement of the light-emitting regions may be different from the arrangement of the LEDs according to the characteristics (curvature, refractive index, etc.) of a protective lens. For example, the red, green, and blue LEDs 210, 220, and 230 may be arranged sequentially in the y direction, and the blue, green, and red light-emitting regions may also be arranged sequentially in the y direction. This is because light from the LEDs may be refracted while passing through a protective lens 240.

For convenience of explanation, FIGS. 6 and 7 illustrate that the red, green, and blue LEDs 210, 220, and 230 are provided in a single number, but in one embodiment, each of the red, green, and blue LEDs 210, 220, and 230 may also be provided in a single number or in plurality depending on design.

Hereinafter, the red, green, and blue LEDs 210, 220, and 230 may be referred to as LEDs, and one of the red, green, and blue LEDs 210, 220, and 230 may be referred to as an LED.

The LEDs may be mounted directly on the substrate 122. For example, the light source 200 may be a chip-on-board (COB) type light source.

The substrate 122 may include an electrode pattern (not shown) configured to supply power to the LEDs 210, 220, and 230. The electrode pattern may be electrically connected to the LEDs 210, 220, and 230. The electrode pattern may include a conductive material. For example, the electrode pattern may include copper (Cu).

The substrate 122 may further include an insulating layer (not numbered) formed on one surface on which the LEDs 210, 220, and 230 are mounted. The insulating layer may be referred to as a Photoimageable Solder Resist (PSR) layer. The insulating layer may cover most of the electrode pattern of the substrate 122. A portion of the electrode pattern may be exposed by the insulating layer. The LEDs 210, 220, and 230 may be provided on the exposed portion of the electrode pattern. The LEDs 210, 220, and 230 may directly or indirectly contact or connect to a portion of the electrode pattern. For example, electrode pads may be provided between the LEDs 210, 220, and 230 and the electrode pattern, and may electrically connect the LEDs 210, 220, and 230 with the electrode pattern. The electrode pad may include a conductive material. For example, the electrode pad may include lead (Pb).

Each of the light sources 200 may further include the protective lens 240 covering the LEDs 210, 220, and 230. The protective lens 240 may be mounted on one surface of the substrate 122. The protective lens 240 may protrude from one surface of the substrate 122. The protective lens 240 may have a dome shape or a hemispherical shape. Thus, the protective lens 240 may protect the LEDs 210, 220, and 230. In addition, the protective lens 240 may also diffuse the light emitted from the LEDs 210, 220, and 230. The protective lens 240 may include a transparent material or a translucent material. For example, the protective lens 240 may include silicone or synthetic polymer material.

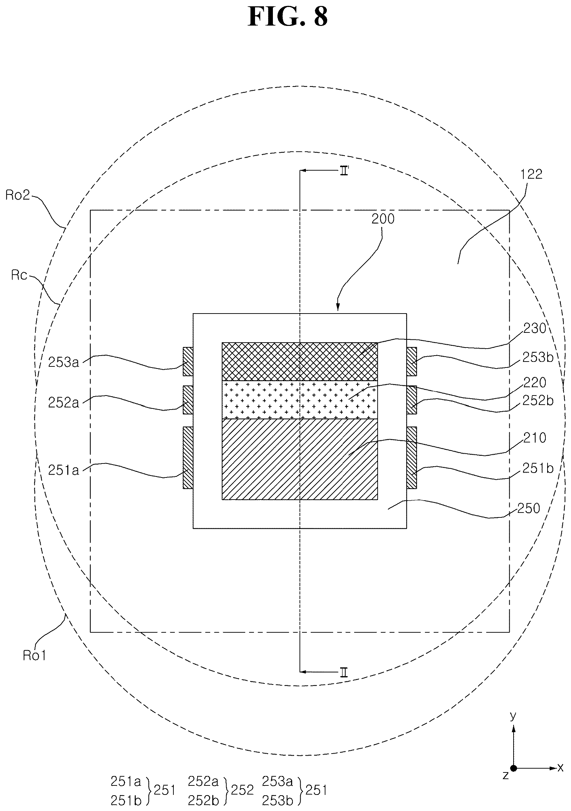

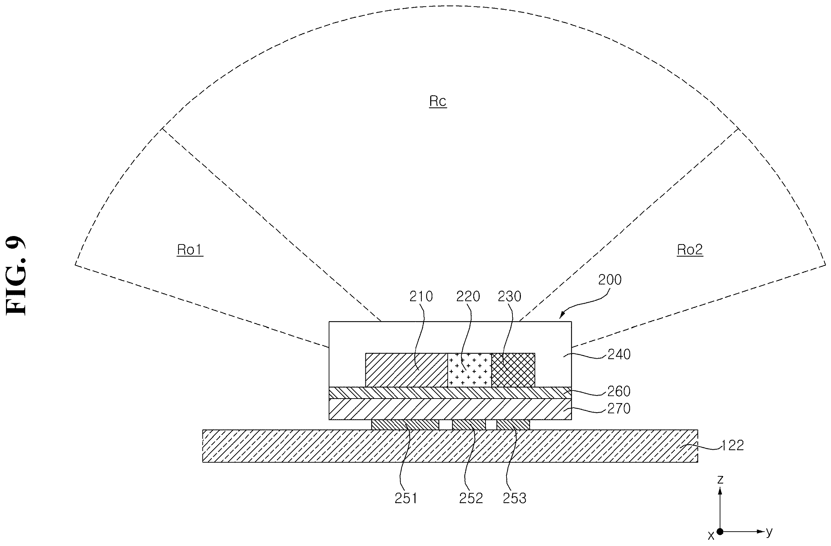

Referring to FIGS. 8 and 9, in one embodiment, each of the light sources 200 may further include a chip substrate 270 on which the LEDs 210, 220, and 230 are mounted, and a protective lens 250 on the chip substrate 270. The LEDs 210, 220, and 230 may be directly mounted on the chip substrate 270. The chip substrate 270 may be mounted on the substrate 122. For example, the light source 200 may be a Chip Scale Package (CSP) type light source.

The chip substrate 270 may be electrically connected to the substrate 122. Electrode pads 251, 252, and 253 may be provided between the chip substrate 270 and the substrate 122. The electrode pads 251, 252, and 253 may electrically connect the substrate 122 with the LEDs 210, 220, and 230 mounted on the chip substrate 270. The electrode pads 251, 252, and 253 may include a conductive material. For example, the electrode pads 251, 252, and 253 may include lead (Pb).

The electrode pads 251, 252, and 253 may include a first electrode pad 251 electrically connected to the red LED 210, a second electrode pad 252 electrically connected to the green LED 220, and a third electrode pad 253 electrically connected to the blue LED 230. The first electrode pad 251 may be provided below the red LED 210. The second electrode pad 252 may be provided below the green LED 220. The third electrode pad 253 may be provided below the blue LED 230.

Each of the light sources 200 may further include the protective lens 250 covering the LEDs 210, 220, and 230. The protective lens 250 may be provided on one surface of the chip substrate 270. The protective lens 250 may have a hex-ahedral shape. Thus, the protective lens 250 may protect the LEDs 210, 220, and 230. The protective lens 250 may include a transparent material or a translucent material. For example, the protective lens 250 may include silicone or synthetic polymer material.

Likewise, the light source may include first and second colored light-emitting regions Ro1 and Ro2 and a white light-emitting region Rc based on the red, green, and blue light-emitting regions. The arrangement of the red, green, and blue light-emitting regions may correspond to the arrangement of the red, green, and blue LEDs 210, 220, and 230. However, the arrangement of the red, green, and blue light-emitting regions is not limited thereto, and may be different from the arrangement of the red, green, and blue LEDs 210, 220, and 230.

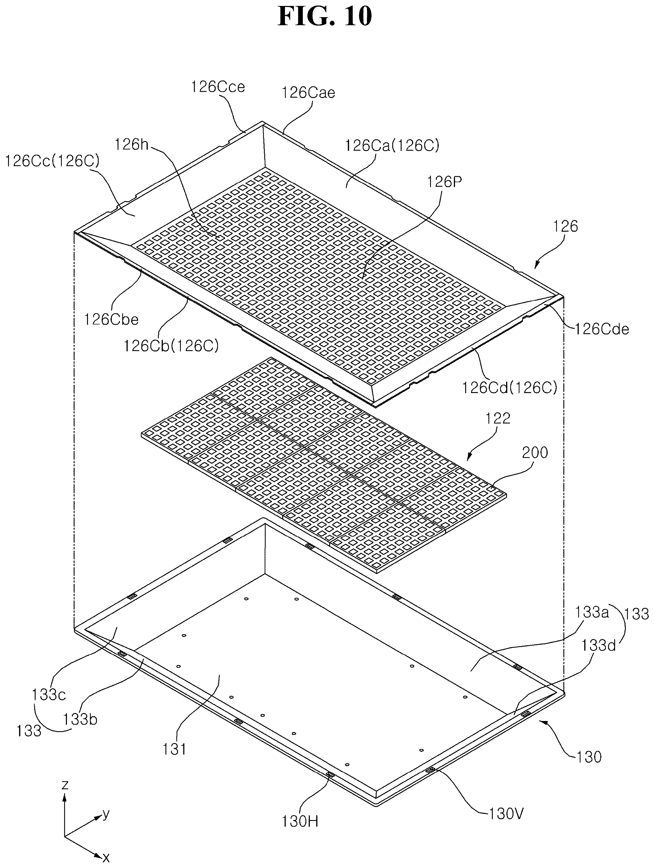

Referring to FIG. 10, a plurality of substrates 122 may be spaced apart from each other. The plurality of substrates 122 may be accommodated in the frame 130. The plurality of substrates 122 may be provided between the frame 130 and the reflective sheet 126. For example, ten substrates 122 may be arranged in a 5x2 matrix pattern.

The frame 130 may have a generally rectangular tray shape. The frame 130 may include a receiving portion 131, a side portion 133, and a seating portion 130H and 130V.

The receiving portion 131 may be a rectangular plate, and the substrate 122 may be coupled to the front surface of the receiving portion 131. The receiving portion 131 may be referred to as a base 131.

The side portion 133 may extend forward at an angle from the edge of the receiving portion 131. A first side portion 133a may extend forward at an angle from an upper side of the receiving portion 131. An angle between the first side portion 133a and a front surface of the receiving portion 131 may be an obtuse angle. A second side portion 133b may extend forward at an angle from a lower side of the receiving portion 131. An angle between the second side portion 133b and the front surface of the receiving portion 131 may be an obtuse angle. A third side portion 133c may extend forward at an angle from a right side of the receiving portion 131. An angle between the third side portion 133c and the front surface of the receiving portion 131 may be an obtuse angle. A fourth side portion 133d may extend forward at an angle from a left side of the receiving portion 131. The first to fourth side portions 133a, 133b, 133c, and 133d may be connected to each other.

The seating portion 130H and 130V may extend from an end of the side portion 133 in a direction parallel to the receiving portion 131. A vertical portion 130V may extend in a vertical direction (i.e., up-down direction), and may define the left and right sides of the frame 130. A horizontal portion 130H may extend in a horizontal direction (i.e., left-right direction), and may define the upper and lower sides of the frame 130.

The reflective sheet 126 may cover the substrate 122, and the light sources 200 on the substrate 122 may be disposed in the holes 126h of the reflective sheet 126. The reflective sheet 126 may have a shape corresponding to the frame 130. The reflective sheet 126 may include a central portion 126P and a chamfer portion 126C. The central portion 126P may have a rectangular sheet shape. The central portion 126P may have a shape corresponding to the receiving portion 131, and the substrate 122 may be covered by the central portion 126P.

The chamfer portion 126C may be obliquely bent forward from the edge of the central portion 126P. The chamfer portion 126C may have a shape corresponding to the side portion 131, and the chamfer portion 126C may cover the side portion 133 of the frame 130.

A first chamfer portion 126Ca may be obliquely bent forward from an upper side of the central portion 126P. The first chamfer portion 126Ca may cover the first side portion 133a. A portion 126Cae of the first chamfer portion 126Ca may be bent so as to be seated on the horizontal portion 130H extending from the first side portion 133a. A second chamfer portion 126Cb may be obliquely bent forward from a lower side of the central portion 126P. The second chamfer portion 126Cb may cover the second side portion 133b. A portion 126Cbe of the second chamfer portion 126Cb may be bent so as to be seated on the horizontal portion 130H extending from the second side portion 133b. A third chamfer portion 126Cc may be obliquely bent forward from a right side of the central portion 126P. The third chamfer portion 126Cc may cover the third side portion 133c. A portion 126Cce of the third chamfer portion 126Cc may be bent so as to be seated on the vertical portion 130V extending from the third side portion 133c. A fourth chamfer portion 126Cd may be obliquely bent forward from a left side of the central portion 126P. The fourth chamfer portion 126Cd may cover the fourth side portion 133d. A portion 126Cde of the fourth chamfer portion 126Cd may be bent so as to be seated on the vertical portion 130V extending from the fourth side portion 133d.

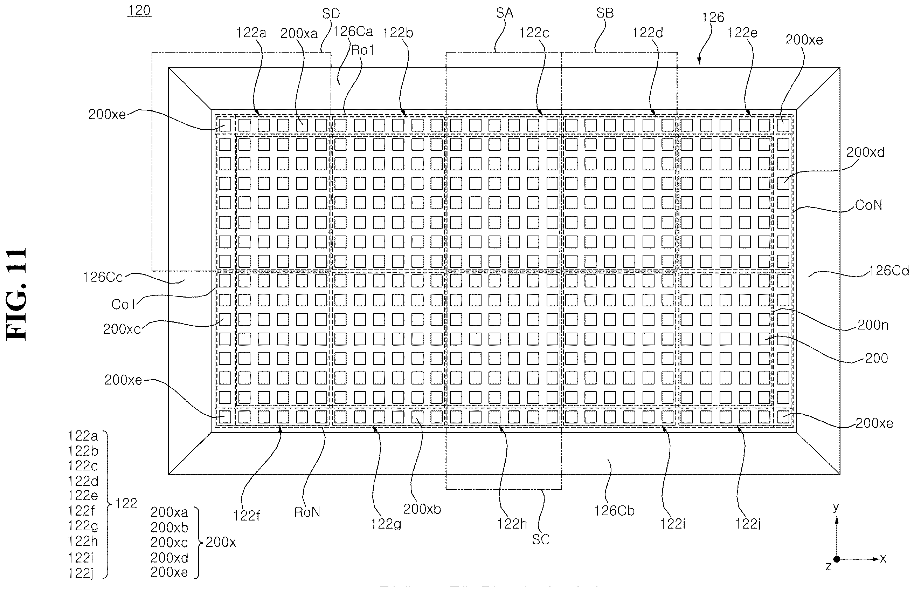

Referring to FIG. 11 together with FIG. 10, a plurality of substrates 122 may be provided under the reflective sheet 126. The reflective sheet 126 may cover the plurality of substrates 122. For example, the central portion 126P of the reflective sheet 126 may cover ten substrates 122 arranged in a 5x2 matrix pattern. For example, first to fifth substrates 122a to 122e may be arranged adjacent to the first chamfer portion 126Ca, and sixth to tenth substrates 122f to 122j may be arranged adjacent to the second chamfer portion 126Cb. However, this is merely exemplary, and the number and arrangement of the substrates 122 may vary depending on the design and size of the display device 100.

The light sources 200 may be mounted on the substrates 122 under the reflective sheet 126. The light sources 200 may pass through the reflective sheet 126. The light sources 200 may protrude onto the central portion 126P of the reflective sheet 126. Holes of the reflective sheet 126 may be arranged in a matrix pattern. The arrangement of the holes of the reflective sheet 126 may correspond to the arrangement of the light sources 200.

The light sources 200 may be arranged in a matrix pattern. The light sources 200 may be arranged in a plurality of rows along a row direction of the matrix pattern. The light sources 200 may be arranged in a plurality of columns along a column direction of the matrix pattern. The rows of the matrix pattern may be parallel to the first and second chamfer portions 126Ca and 126Cb. The columns of the matrix pattern may be parallel to the third and fourth chamfer portions 126Cc and 126Cd. The number of rows of the matrix pattern may be less than the number of columns of the matrix pattern. However, the number of rows of the matrix pattern is not limited thereto, and may be greater than the number of columns of the matrix pattern.

The light sources 200 may include outer light sources 200x arranged on the edges of the matrix pattern. The outer light sources 200x may include first outer light sources 200xa arranged in a first row Ro1 of the matrix pattern. The first outer light sources 200xa may be adjacent to the first chamfer portion 126Ca of the reflective sheet 126. The first outer light sources 200xa may be arranged in a row along the first chamfer portion 126Ca of the reflective sheet 126.

The outer light sources 200x may include second outer light sources 200xb arranged in a last row RoN of the matrix pattern. The second outer light sources 200xb may be adjacent to the second chamfer portion 126Cb of the reflective sheet 126. The second outer light sources 200xb may be arranged in a row along the second chamfer portion 126Cb of the reflective sheet 126.

The outer light sources 200x may include third outer light sources 200xc arranged in a first column Co1 of the matrix pattern. The third outer light sources 200xc may be adjacent to the third chamfer portion 126Cc of the reflective sheet 126. The third outer light sources 200xc may be arranged in a row along the third chamfer portion 126Cc of the reflective sheet 126.

The outer light sources 200x may include fourth outer light sources 200xd arranged in a last column CoN of the matrix pattern. The fourth outer light sources 200xb may be adjacent to the fourth chamfer portion 126Cd of the reflective sheet 126. The fourth outer light sources 200xb may be arranged in a row along the fourth chamfer portion 126Cd of the reflective sheet 126.

The outer light sources 200x may include corner light sources 200xe arranged at four corners of the matrix pattern. A portion of the corner light sources 200xe may be included in the first outer light sources 200xa, and a remaining portion of the corner light sources 200xe may be included in the second outer light sources 200xb. In addition, a portion of the corner light sources 200xe may be included in the third outer light sources 200xc, and a remaining portion of the corner light sources 200xe may be included in the fourth outer light sources 200xd. For example, one of the corner light sources 200xe may be located in the first row Ro1 and the first column Co1, another one of the corner light sources 200xe may be located in the first row Ro1 and the last column CoN, still another one of the corner light sources 200xe may be located in the last row RoN and the first column Co1, and a remaining one of the corner light sources 200xe may be located in the last row RoN and the last column CoN.

The first outer light sources 200xa may include the corner light sources 200xe, and the rest of the first outer light sources 200xa except the corner light sources 200xe may be disposed between the corner light sources 200xe. The second outer light sources 200xb may include the corner light sources 200xe, and the rest of the second outer light sources 200xb except the corner light sources 200xe may be disposed between the corner light sources 200xe. The third outer light sources 200xc may include the corner light sources 200xe, and the rest of the third outer light sources 200xc except the corner light sources 200xe may be disposed between the corner light sources 200xe. The fourth outer light sources 200xd may include the corner light sources 200xe, and the rest of the fourth outer light sources 200xd except the corner light sources 200xe may be disposed between the corner light sources 200xe.

The light sources 200 may include inner light sources 200n surrounded by the outer light sources 200x. The outer light sources 200x may be provided between the inner light sources 200n and the chamfer portion 126C. The inner light sources 200n may be separated from the chamfer portion 126C by the outer light sources 200x.

The light sources 200 may be provided on each of the plurality of substrates 122. For example, the light sources 200 may be mounted on each of the substrates 122 in an 8x6 matrix pattern. That is, the light sources 200 may be mounted on each of the substrates 122 in a matrix pattern having eight rows and six columns. However, this is merely exemplary, and the number and arrangement of the light sources 200 may vary depending on the design and size of the display device 100.

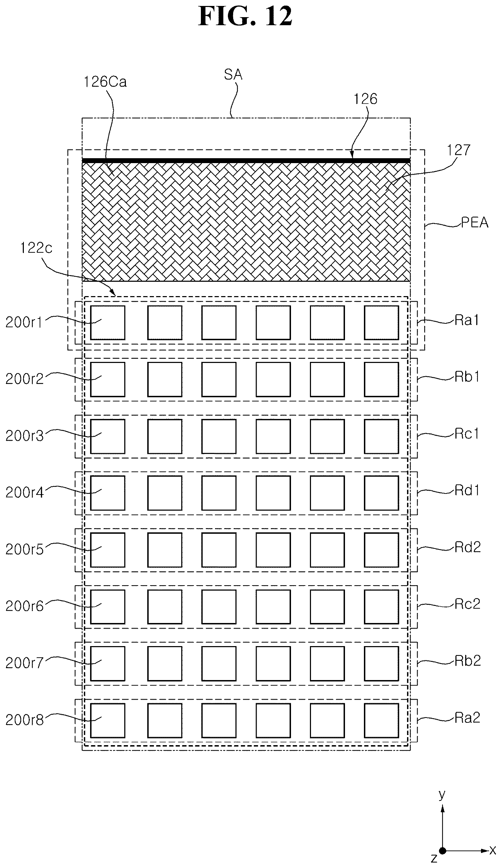

FIG. 12 is an enlarged view of a region SA of FIG. 11.

Referring to FIG. 12, the plurality of light sources 200 may be mounted on a third substrate 122c. The third substrate 122c may be provided under the reflective sheet 126. The plurality of light sources 200 may be arranged on the third substrate 122c in a matrix pattern. For example, the plurality of light sources 200 may be arranged on the third substrate 122c in an 8x6 matrix pattern.

The matrix pattern may have a plurality of rows. The light sources 200 may be arranged in a plurality of rows. For example, six light sources 200 may be arranged in each of first to eighth rows Ra1, Rb1, Rc1, Rd1, Rd2, Rc2, Rb2, and Ra2.

Some of the lights emitted from the first outer light sources 200xa may be irradiated to the first chamfer portion 126Ca. For example, colored light of colored light-emitting regions of the first outer light sources 200xa may be irradiated to the first chamfer portion 126Ca.

A phosphor 127 may be provided on the first chamfered portion 126Ca. The phosphor 127 may be coated on the first chamfer portion 126Ca. The phosphor 127 may be printed on the first chamfered portion 126Ca. The phosphor 127 may convert colored light, irradiated to the first chamfer portion 126Ca, into white light. For example, the phosphor 127 may absorb the colored light irradiated to the first chamfer portion 126Ca and emit white light. The phosphor 127 may include a yellow phosphor, a cyan phosphor, and a magenta phosphor.

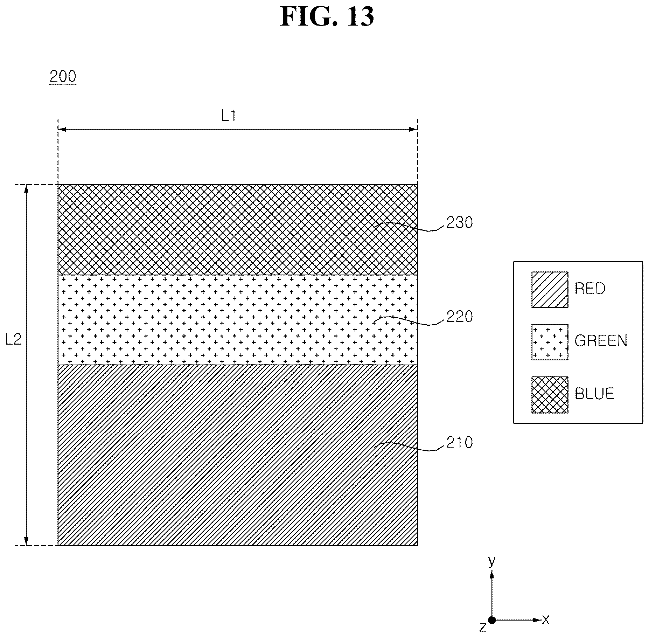

Referring to FIG. 13, each of the light sources 200 may include a red LED 210, a green LED 220, and a blue LED 230. The red, green, and blue LEDs 210, 220, and 230 may be arranged in one direction regardless of order. For example, the red, green, and blue LEDs 210, 220, and 230 may be arranged sequentially in the y direction. The green LED 220 may be provided between the red and blue LEDs 220 and 230.

Each of the red, green, and blue LEDs 210, 220, and 230 may be elongated. For example, the red, green, and blue LEDs 210, 220, and 230 may be elongated in the x direction. A longitudinal direction of each of the red, green, and blue LEDs 210, 220, and 230 may intersect the arrangement direction of the red, green, and blue LEDs 210, 220, and 230. For example, the red, green, and blue LEDs 210, 220, and 230 may be elongated in the x direction, and the red, green, and blue LEDs 210, 220, and 230 may be arranged sequentially in the y direction.

Lengths of the red, green, and blue LEDs 210, 220, and 230 may be substantially equal to each other. For example, each of the red, green, and blue LEDs 210, 220, and 230 may be elongated in the x direction, and lengths L1 of the red, green, and blue LEDs 210, 220, and 230 may be substantially equal to each other.

Widths of the red, green, and blue LEDs 210, 220, and 230 may be measured in a direction intersecting the longitudinal direction. For example, the widths of the red, green, and blue LEDs 210, 220, and 230 may be measured in the y direction intersecting the longitudinal direction. The width of the red LED 210 may be greater than the widths of the green and blue LEDs 220 and 230. The width of the green LED 220 may be substantially the same as the width of the blue LED 230.

Each of the red, green, and blue LEDs 210, 220, and 230 may have a square shape. An aspect ratio of the red LED 210 may be smaller than aspect ratios of the green and blue LEDs 220 and 230. The aspect ratios of the green and blue LEDs 220 and 230 may be substantially equal to each other. The aspect ratio may be defined as the ratio of the width to the height. For example, the aspect ratio may be defined as the ratio of the length to the width of the LED.

Each of the red, green, and blue LEDs 210, 220, and 230 may have a light-emitting surface. The light-emitting surfaces of the red, green, and blue LEDs 210, 220, and 230 may face the display panel 110. The light-emitting surfaces of the red, green, and blue LEDs 210, 220, and 230 may be defined from a plan view perspective. The plan view perspective indicates a view seen in a direction facing the light-emitting surfaces of the red, green, and blue LEDs 210, 220, and 230.

A light-emitting area of the red LED 210 may be greater than or equal to light-emitting areas of the green and/or blue LEDs 220 and 230. The light-emitting area of the red LED 210 may be about 1.3 times larger than the light-emitting area of the green LED 220 or the blue LED 230. For example, the light-emitting area of the red LED 210 may be about 2.0 times larger than the light-emitting areas of the green LED 220 and the blue LED 230. The light-emitting area may refer to the area of the light-emitting surface of the LED.

The light-emitting area of the blue LED 230 may be substantially the same as the light-emitting area of the green LED 230.

Accordingly, heat dissipation performance of the red LED 210 can be improved.

In addition, performance degradation of the red LED 210 due to heat can be minimized.

Further, the ability of the light source 200 to produce white light can be improved.

Moreover, the backlight unit 120 for the display device capable of improving color gamut and/or luminance can be provided.

The red, green, and blue LEDs 210, 220, and 230 may be arranged in the width direction. The red, green, and blue LEDs 210, 220, and 230 may be arranged in the width direction regardless of order. For example, the red, green, and blue LEDs 210, 220, and 230 may be arranged sequentially in the width direction.

The red, green, and blue LEDs 210, 220, and 230 may be in contact with each other in the arrangement order. For example, the green, red, and blue LEDs 220, 210, and 230 may be arranged sequentially without spacing. Adjacent sides of the red, green, and blue LEDs 210, 220, and 230 may overlap each other. For example, one side of the green LED 220 may overlap one side of the red LED 210, and the other side of the red LED 210 may overlap one side of the blue LED 230. The light-emitting areas of the red, green, and blue LEDs 210, 220, and 230 may be arranged continuously. The light-emitting surfaces of the red, green, and blue LEDs 210, 220, and 230 may form a single light-emitting surface.

The red, green, and blue LEDs 210, 220, and 230 may form a perimeter of a quadrilateral in a plan view. For example, the red, green, and blue LEDs 210, 220, and 230 may form a perimeter of a square in a plan view.

The light source 200 may have a quadrilateral shape in a plan view. A sum of the widths of the red, green, and blue LEDs 210, 220, and 230 may correspond to the width of the light source 200. The length L1 of the red, green, or blue LEDs 210, 220, or 230 may correspond to the length L1 of the light source 200. For example, the length L1 of the light source 200 may correspond to about 0.75 to 1.25 times the width L2 of the light source 200.

The light source 200 may have a square shape in a plan view. For example, the width L1 of the light source 200 may be substantially the same as the length L2 of the light source 200. For example, a sum L2 of the widths of the red, green, and blue LEDs 210, 220, and 230 may be substantially the same as the length L1 of the red, green, or blue LEDs 210, 220, or 230.

Accordingly, the light-emitting region of the red LED 210, the light-emitting region of the green LED 220, and the light-emitting region of the blue LED 230 may maximally overlap each other.

Further, the ability of the light source 200 to produce white light can be improved.

In addition, the backlight unit 120 for the display device capable of improving image quality can be provided.

Moreover, the backlight unit 120 for the display device capable of improving color gamut can be provided.

In addition, the backlight unit 120 for the display device capable of improving luminance can be provided.

Further, the backlight unit 120 for the display device capable of improving stereoscopic effect can be provided.

In addition, the backlight unit 120 for the display device capable of improving color separation can be provided.

Further, the backlight unit 120 for the display device capable of increasing a viewing angle can be provided.

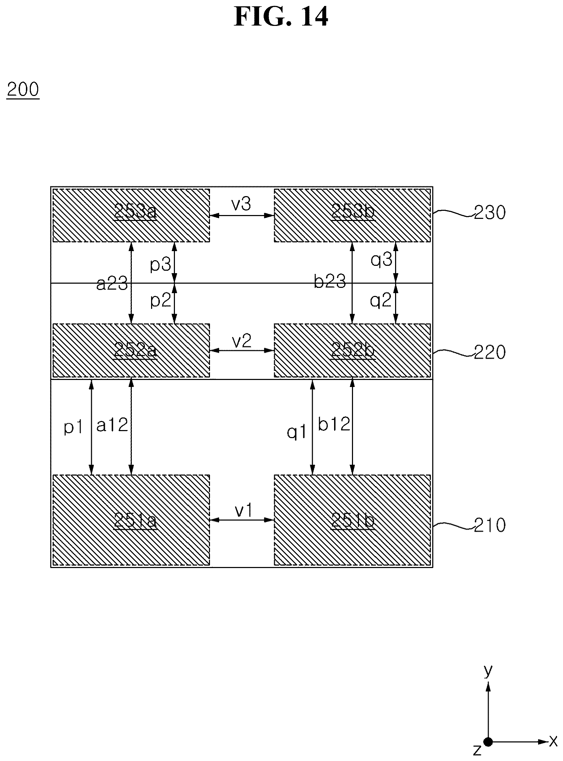

Referring to FIG. 14 together with FIG. 13, the backlight unit 120 for the display device may further include at least one electrode pad provided between the light source 200 and the substrate 122. At least one electrode pad may include a first electrode pad 251 that electrically connects the red LED 210 and the substrate 122, a second electrode pad 252 that electrically connects the green LED 220 and the substrate 122, and a third electrode pad 253 that electrically connects the blue LED 230 and the substrate 122.

The first electrode pad 251 may be provided under the red LED 210. The red LED 210 may cover the first electrode pad 251. For example, the red LED 210 may entirely cover the first electrode pad 251. In a plan view, the first electrode pad 251 may entirely overlap the red LED 210. For example, in a plan view, the first electrode pad 251 may be disposed inside the edge of the red LED 210.

The first electrode pad 251 may be electrically connected to the electrode pattern of the substrate 122. The first electrode pad 251 may be in contact with the red LED 210 and the substrate 122.

The first electrode pad 251 may include a pair of first electrode pads 251a and 251b that are electrically connected to the red LED 210. The pair of first electrode pads 251a and 251b may correspond to different electrodes. For example, one 251a of the pair of first electrode pads 251a and 251b may correspond to a (+) electrode, and the other 251b of the pair of first electrode pads 251a and 251b may correspond to a (-) electrode.

The pair of first electrode pads 251a and 251b may be spaced apart from each other. For example, the pair of first electrode pads 251a and 251b may be spaced apart from each other in a longitudinal direction of the red LED 210. A distance v1 between the pair of first electrode pads 251a and 251b may be greater than or equal to about 100 micrometers (µm). For example, the distance v1 between the pair of first electrode pads 251a and 251b may be greater than or equal to about 150 µm.

The second electrode pad 252 may be provided under the green LED 220. The green LED 220 may cover the second electrode pad 252. For example, the green LED 220 may entirely cover the second electrode pad 252. In a plan view, the second electrode pad 252 may entirely overlap the green LED 220. For example, in a plan view, the second electrode pad 252 may be disposed inside the edge of the green LED 220.

The second electrode pad 252 may be electrically connected to the electrode pattern of the substrate 122. The second electrode pad 252 may be in contact with the green LED 220 and the substrate 122.

The second electrode pad 252 may include a pair of second electrode pads 252a and 252b that are electrically connected to the green LED 220. The pair of second electrode pads 252a and 252b may correspond to different electrodes. For example, one 252a of the pair of second electrode pads 252a and 252b may correspond to a (+) electrode, and the other 252b of the pair of second electrode pads 252a and 252b may correspond to a (-) electrode.

The pair of second electrode pads 252a and 252b may be spaced apart from each other. For example, the pair of second electrode pads 252a and 252b may be spaced apart from each other in a longitudinal direction of the green LED 220. A distance v2 between the pair of second electrode pads 252a and 252b may be greater than or equal to about 100 micrometers (µm). For example, the distance v2 between the pair of second electrode pads 252a and 252b may be greater than or equal to about 150 µm.

The third electrode pad 253 may be provided under the blue LED 230. The blue LED 230 may cover the third electrode pad 253. For example, the blue LED 230 may entirely cover the third electrode pad 253. In a plan view, the third electrode pad 253 may entirely overlap the blue LED 230. For example, in a plan view, the third electrode pad 253 may be disposed inside the edge of the blue LED 230.

The third electrode pad 253 may be electrically connected to the electrode pattern of the substrate 122. The third electrode pad 253 may be in contact with the blue LED 230 and the substrate 122.

The third electrode pad 253 may include a pair of third electrode pads 253a and 253b that are electrically connected to the blue LED 230. The pair of third electrode pads 253a and 253b may correspond to different electrodes. For example, one 253a of the pair of third electrode pads 253a and 253b may correspond to a (+) electrode, and the other 253b of the pair of third electrode pads 253a and 253b may correspond to a (-) electrode.

The pair of third electrode pads 253a and 253b may be spaced apart from each other. For example, the pair of third electrode pads 253a and 253b may be spaced apart from each other in a longitudinal direction of the blue LED 230. A distance v3 between the pair of third electrode pads 253a and 253b may be greater than or equal to about 100 micrometers (µm). For example, the distance v3 between the pair of third electrode pads 253a and 253b may be greater than or equal to about 150 µm.

Accordingly, the pair of electrode pads 251, 252, and 253 may not be electrically connected to each other.

The first to third electrode pads 251, 252, and 253 may be spaced apart from each other. For example, the first to third electrode pads 251, 252, and 253 may be spaced apart from each other in the arrangement direction or width direction of the red, green, and blue LEDs 210, 220, and 230. For example, distances a12, a23, b12, and b23 between the first to third electrode pads 251, 252, and 253 may be greater than or equal to about 100 µm. The distances a12 and b12 between the first electrode pad 251 and the second electrode pad 252 may be greater than or equal to about 100 µm. In addition, the distances a23 and b23 between the second electrode pad 252 and the third electrode pad 253 may be greater than or equal to about 100 µm.

Specifically, the first electrode pad 251 may be separated from the sides of the red LED 210. For example, distances p1 and q1 between the first electrode pad 251 and one side of the red LED 210 may be greater than or equal to about 100 µm.

The second electrode pad 252 may be separated from one side of the green LED 220. The second electrode pad 252 may be adjacent to an opposite side of the green LED 220. The opposite side of the green LED 220 may be opposite the one side thereof. The opposite side of the green LED 220 may overlap one side of the red LED 210. For example, distances p2 and q2 between the second electrode pad 252 and the one side of the green LED 220 may be greater than or equal to about 50 µm.

The third electrode pad 253 may be separated from one side of the blue LED 230. One side of the blue LED 230 may overlap one side of the green LED 220. The third electrode pad 253 may be adjacent to an opposite side of the blue LED 230. The opposite side of the blue LED 230 may be opposite the one side thereof. For example, distances p3 and q3 between the third electrode pad 253 and the one side of the blue LED 230 may be greater than or equal to about 50 µm.

Accordingly, the first to third electrode pads 251, 252, and 253 may be fully spaced apart from each other. For example, the distances a12 and b12 between the first and second electrode pads 251 and 252 may be greater than or equal to about 100 µm. The distances a23 and b23 between the second and third electrode pads 252 and 253 may be greater than or equal to about 100 µm. Accordingly, the first to third electrode pads 251, 252, and 253 may not be electrically connected to each other.

In addition, the red, green, and blue LEDs 210, 220, and 230 may receive currents of different magnitudes.

Further, the red, green, and blue LEDs 210, 220, and 230 may independently control currents applied thereto.

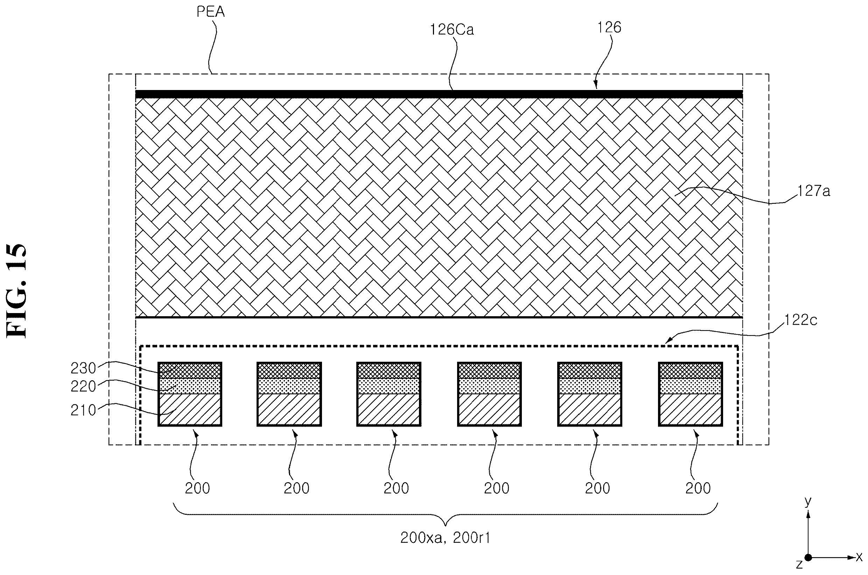

FIG. 15 is an enlarged view of a region PEA of FIG. 12.

Referring to FIG. 15 together with FIGS. 11 and 12, the plurality of light sources 200 are arranged in the first row Ro1 of the matrix pattern. For example, six first outer light sources 200xa may be arranged in the first row Ro1 of the matrix pattern in the x direction. The first outer light sources 200xa may include the red, green, and blue LEDs 210, 220, and 230. The red, green, and blue LEDs 210, 220, and 230 of each of the first outer light sources 220xa may be arranged sequentially in the column direction (e.g., y direction) of the matrix pattern.

Each of the first outer light sources 200xa may include a first outermost diode that is closest to the first chamfer portion 126Ca. For example, each of the first outer light sources 200xa may include the first outermost diode that is closest to the first chamfer portion 126Ca, and the first outermost diode may correspond to the blue LED 230. The colors of the first outermost diodes may be the same. For example, the first outer light sources 200xa arranged in the first row Ro1 of the matrix pattern may be arranged in the same direction, and the first outermost diodes may be composed of the blue LEDs 230.

The first outermost diode may have a colored light-emitting region. Colored light of the colored light-emitting region of the first outermost diode may be irradiated to the first chamfer portion 126Ca. For example, some of the light-emitting regions of the blue LEDs 230 closest to the first chamfer portion 126Ca may form a white light-emitting region, while the rest of the light-emitting regions of the blue LEDs 230 may form a blue colored light-emitting region. Blue light of the colored light-emitting region may be irradiated to the first chamfer portion 126Ca.

The phosphor 127 may be provided on the first chamfered portion 126Ca. For example, a yellow phosphor 127a may be provided on the first chamfered portion 126Ca. The yellow phosphor 127a may face the first outermost diode composed of the blue LEDs 230. In this manner, the yellow phosphor 127a may absorb blue light from the blue LEDs 230 and emit white light.

Accordingly, it is possible to improve color separation that occurs in the chamber portion 126C of the reflective sheet 126.

However, in one embodiment, the light irradiated to the first chamfer portion 126Ca may vary depending on the characteristics of the protective lenses 240 and 250. For example, the arrangement of light-emitting regions may be opposite the arrangement of the LEDs, depending on the characteristics of the protective lens 240. Accordingly, a colored light-emitting region of the red LED 210 located inside the light source 200 may be formed, and red light of the red light-emitting region may also be irradiated to the first chamfer portion 126Ca. A cyan phosphor may be provided on the first chamfered portion 126Ca. The cyan phosphor may absorb red light and emit white light.

In addition, in one embodiment, a colored light-emitting region of the green LED 220 located at the center of the light source 200 may be formed depending on the characteristics of the protective lenses 240 and 250, and green light of the colored light-emitting region may also be irradiated to the first chamfer portion 126Ca. A magenta phosphor may be provided on the first chamfered portion 126Ca. The magenta phosphor may absorb green light and emit white light.

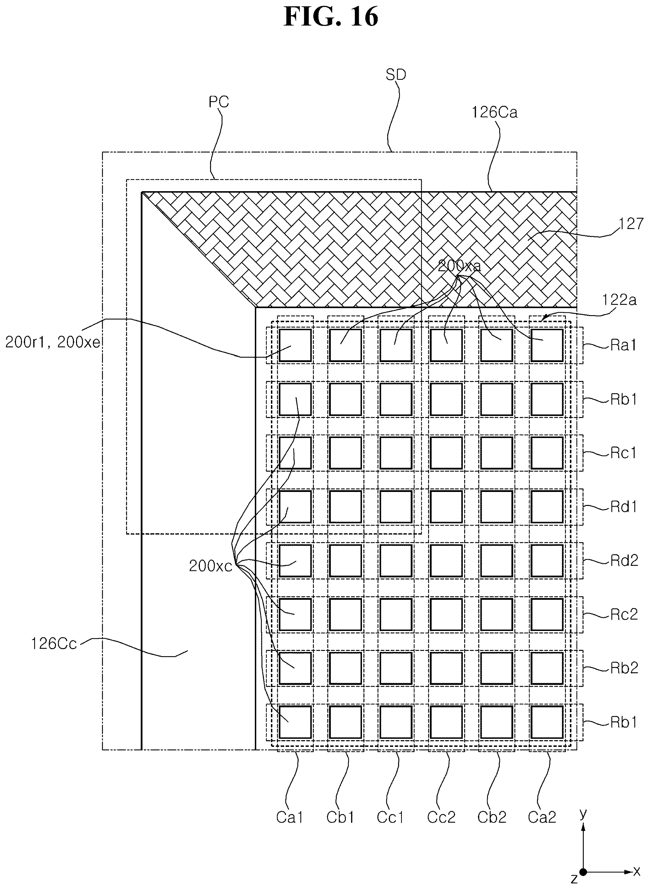

FIG. 16 is an enlarged view of a region SD of FIG. 11.

Referring to FIG. 16 together with FIG. 11, the plurality of light sources 200 may be mounted on a first substrate 122a. The first substrate 122a may be provided under the reflective sheet 126. The plurality of light sources 200 may be arranged in a matrix pattern on the first substrate 122a. For example, the plurality of light sources 200 may be arranged in an 8x6 matrix pattern on the first substrate 122a.

The matrix pattern may have a plurality of rows. The light sources 200 may be arranged in a plurality of rows. For example, six light sources 200 may be arranged in each of the plurality of rows.

Some of the lights emitted from the first outer light sources 200xa may be irradiated to the first chamfer portion 126Ca. For example, colored light of the colored light-emitting regions of the first outer light sources 200xa may be irradiated to the first chamfer portion 126Ca.

The phosphor 127 may be provided on the first chamfered portion 126Ca. The phosphor 127 may be coated on the first chamfer portion 126Ca. The phosphor 127 may be printed on the first chamfered portion 126Ca. The phosphor 127 may convert colored light, irradiated to the first chamfer portion 126Ca, into white light. For example, the phosphor 127 may absorb the colored light irradiated to the first chamfer portion 126Ca and emit white light.

At least some of the lights emitted from the third outer light sources 200xc may be irradiated to the third chamfer portion 126Cc. In one embodiment, the phosphor 127 may also be provided on the third chamfered portion 126Cc.

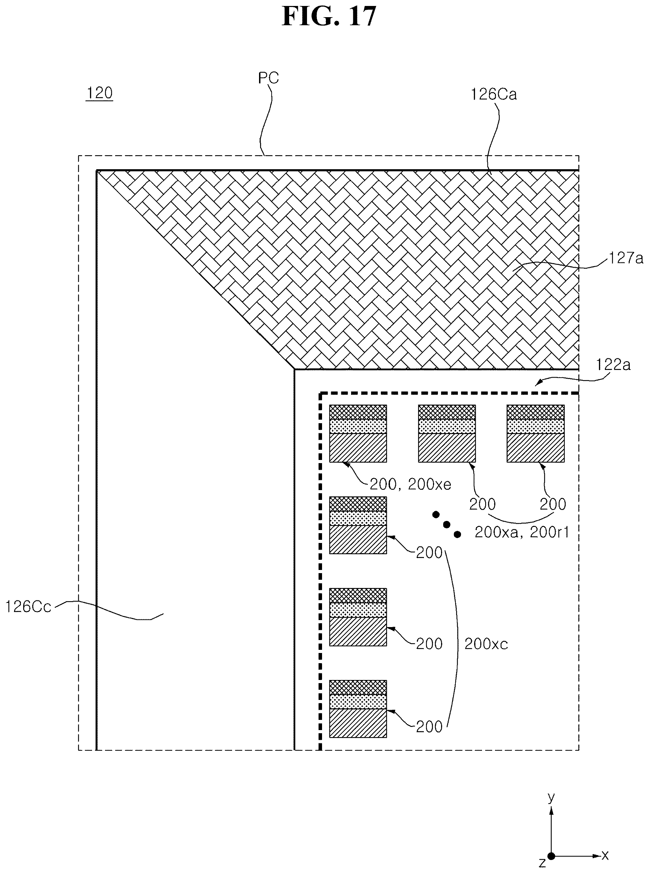

FIG. 17 is an enlarged view of a region PC of FIG. 16.

Referring to FIG. 17 together with FIG. 16, in one embodiment, the first outer light sources 200xa may include the red, green, and blue LEDs 210, 220, and 230. The red, green, and blue LEDs 210, 220, and 230 of each of the first outer light sources 220xa may be arranged sequentially in the column direction (e.g., y direction) of the matrix pattern.

Each of the first outer light sources 200xa may include a first outermost diode that is closest to the first chamfer portion 126Ca. For example, each of the first outer light sources 200xa may include the first outermost diode that is closest to the first chamfer portion 126Ca, and the first outermost diode may be composed of the blue LEDs 230. The colors of the first outermost diodes may be the same.

The first outermost diode may have a colored light-emitting region. Colored light of the colored light-emitting region of the first outermost diode may be irradiated to the first chamfer portion 126Ca. For example, some of the light-emitting regions of the blue LEDs 230 closest to the first chamfer portion 126Ca may form a white light-emitting region, while the rest of the light-emitting regions of the blue LEDs 230 may form a blue colored light-emitting region. Blue light of the colored light-emitting region may be irradiated to the first chamfer portion 126Ca.

The phosphor 127 may be provided on the first chamfered portion 126Ca. For example, a yellow phosphor 127a may be printed on the first chamfered portion 126Ca. The yellow phosphor 127a may face the first outermost diode composed of the blue LEDs 230. In this manner, the yellow phosphor 127a may absorb blue light from the blue LEDs 230 and emit white light.

However, in one embodiment, the light irradiated to the first chamfer portion 126Ca may vary depending on the characteristics of the protective lenses 240 and 250. For example, the arrangement of light-emitting regions may be opposite the arrangement of the LEDs, depending on the characteristics of the protective lens 240. Accordingly, a colored light-emitting region of the red LED 210 located inside the light source 200 may be formed, and red light of the red light-emitting region may also be irradiated to the first chamfer portion 126Ca. A cyan phosphor may be provided on the first chamfered portion 126Ca. The cyan phosphor may absorb red light and emit white light.

In addition, in one embodiment, a colored light-emitting region of the green LED 220 located at the center of the light source 200 may be formed depending on the characteristics of the protective lenses 240 and 250, and green light of the colored light-emitting region may also be irradiated to the first chamfer portion 126Ca. A magenta phosphor may be provided on the first chamfered portion 126Ca. The magenta phosphor may absorb green light and emit white light.

The plurality of third outer light sources 200xc may be arranged in a first column Co1 of the matrix pattern. For example, eight third outer light sources 200xc may be arranged in the first column Co1 of the matrix pattern in the y direction. The third outer light sources 200xc may include the red, green, and blue LEDs 210, 220, and 230. The red, green, and blue LEDs 210, 220, and 230 of each of the third outer light sources 200xc may be arranged in the column direction (e.g., y direction) of the matrix pattern regardless of order.

The arrangement direction of the red, green, and blue LEDs 210, 220, and 230 of each of the third outer light sources 200xc may be parallel to the longitudinal direction of the third chamfer portion 126Cc. The red, green, and blue LEDs 210, 220, and 230 of each of the third outer light sources 200xc may be arranged in the longitudinal direction of the third chamfer portion 126Cc regardless of order. For example, the red, green, and blue LEDs 210, 220, and 230 may be arranged alternately in the longitudinal direction of the third chamfer portion 126Cc. In this manner, red light, green light, and blue light may be mixed to produce white light, and the white light may be irradiated to the third chamfer portion 126Cc.

Accordingly, the phosphor 127 may not be provided on the third chamfer portion 126Cc, and it is possible to provide the backlight unit for the display device with reduced manufacturing costs.

In addition, it is possible to minimize color separation on the third chamfer portion 126Cc even without using the phosphor 127 separately.

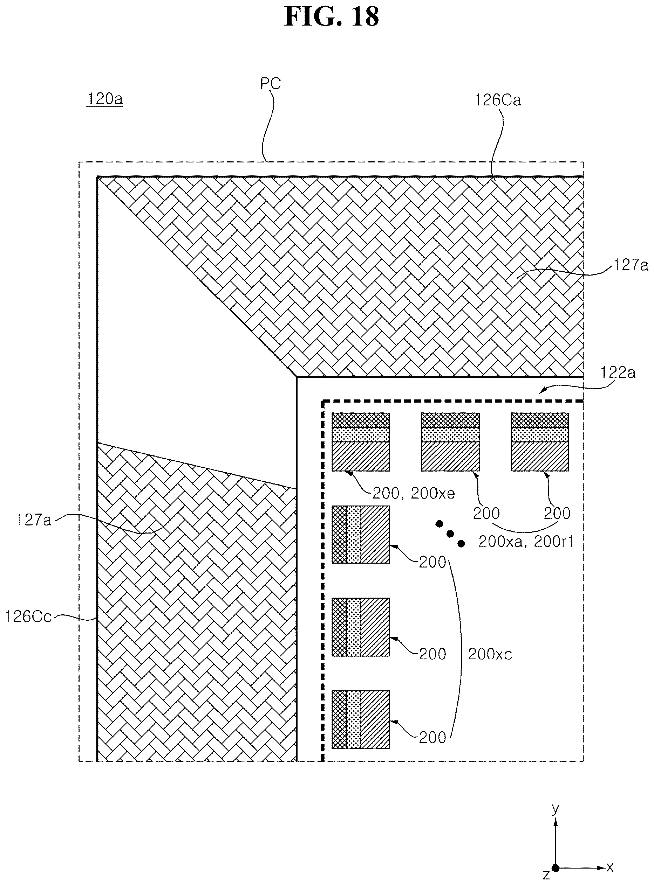

Referring to FIG. 18 together with FIG. 16, in one embodiment, the third outer light sources 200xc may be rotated. For example, the third outer light sources 200xc may be rotated about 90 degrees counterclockwise in a plan view. The red, green, and blue LEDs 210, 220, and 230 of each of the third outer light sources 200xc may be arranged sequentially in the row direction (e.g., x direction) of the matrix pattern. However, the corner light source 200xe may not be rotated.

Each of the third outer light sources 200xc may include a third outermost diode that is closest to the third chamfer portion 126Cc. For example, each of the third outer light sources 200xc may include the third outermost diode that is closest to the third chamfer portion 126Cc, and the third outermost diode may be composed of the blue LEDs 230. The colors of the third outermost diodes may be the same.

The third outermost diode may have a colored light-emitting region. Colored light of the colored light-emitting region of the third outermost diode may be irradiated to the third chamfer portion 126Cc. For example, some of the light-emitting regions of the blue LEDs 230 closest to the third chamfer portion 126Cc may form a white light-emitting region, while the rest of the light-emitting regions of the blue LEDs 230 may form a blue colored light-emitting region. Blue light of the colored light-emitting region may be irradiated to the third chamfer portion 126Cc.

The phosphor 127 may be provided on at least a portion of the third chamfer portion 126Cc. For example, a yellow phosphor may be printed on a portion of the third chamfer portion 126Cc. The yellow phosphor may face the third outermost diodes composed of the blue LEDs 230. In this manner, the yellow phosphor 127 may absorb blue light from the blue LEDs 230 and emit white light.

However, the phosphor 127 may not be provided at one end in the longitudinal direction of the third chamfer portion 126Cc. That is, the phosphor 127 may not be provided at one end of the third chamfer portion 126Cc adjacent to the corner light source 200xe. The corner light source 200xe may emit white light to the one end of the third chamfer portion 126Cc.

However, in one embodiment, the light irradiated to the third chamfer portion 126Cc may vary depending on the characteristics of the protective lenses 240 and 250. For example, the arrangement of light-emitting regions may be opposite the arrangement of the LEDs, depending on the characteristics of the protective lens 240. Accordingly, a colored light-emitting region of the red LED 210 located inside the light source 200 may be formed, and red light of the red light-emitting region may also be irradiated to the third chamfer portion 126Cc. A cyan phosphor may be provided on the third chamfered portion 126Cc. The cyan phosphor may absorb red light and emit white light.

In addition, in one embodiment, a colored light-emitting region of the green LED 220 located at the center of the light source 200 may be formed depending on the characteristics of the protective lenses 240 and 250, and green light of the colored light-emitting region may also be irradiated to the third chamfer portion 126Cc. A magenta phosphor may be provided on the third chamfered portion 126Cc. The magenta phosphor may absorb green light and emit white light.

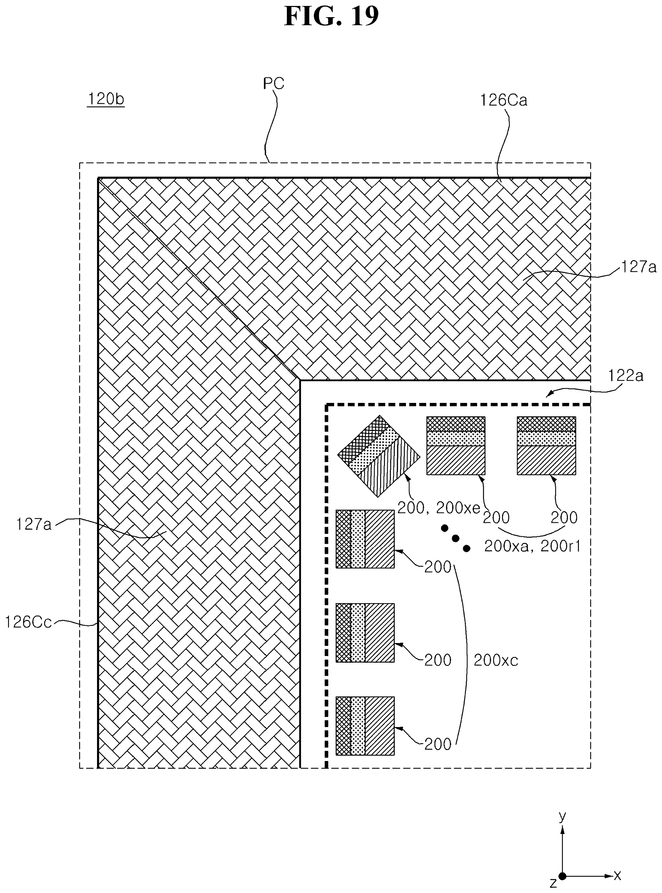

Referring to FIG. 19 together with FIGS. 11 and 16, in one embodiment, the corner light source 200xe may be rotated to be tilted. For example, the corner light source 200xe disposed in the first row Ro1 and the first column Co1 of the matrix pattern may be rotated about 45 degrees counterclockwise. The red, green, and blue LEDs 210, 220, and 230 of the corner light source 200xe may be arranged sequentially in a direction intersecting the row direction and the column direction of the matrix pattern.

The corner light source 200xe may include a corner diode that is closest to the corner portion of the reflective sheet 126. For example, the corner light source 200xe may include the corner diode that is closest to the corner portion of the reflective sheet 126 at which the first chamfer portion 126Ca and the third chamfer portion 126Cc meet, and the corner diode may correspond to the blue LED 230.

The corner diode may have a colored light-emitting region. Colored light of the colored light-emitting region of the corner diode may be irradiated to the corner portion of the reflective sheet 126. For example, some of the light-emitting regions of the blue LEDs 230 closest to the corner portion of the reflective sheet 126 may form a white light-emitting region, while the rest of the light-emitting regions of the blue LEDs 230 may form a blue colored light-emitting region. Blue light of the colored light-emitting region may be irradiated to the corner portion of the reflective sheet 126 at which the first chamfer portion 126Ca and the third chamfer portion 126Cc meet.

The phosphor 127 may be provided on the corner portion of the reflective sheet 126. For example, a yellow phosphor 127a may be printed on the corner portion of the reflective sheet 126. The yellow phosphor 127a may face the corner diode corresponding to the blue LEDs 230. In this manner, the yellow phosphor 127a may absorb blue light from the blue LEDs 230 and emit white light.

However, in one embodiment, the light irradiated to the corner portion of the reflective sheet 126 may vary depending on the characteristics of the protective lenses 240 and 250. For example, the arrangement of light-emitting regions may be opposite the arrangement of the LEDs, depending on the characteristics of the protective lens 240. Accordingly, a colored light-emitting region of the red LED 210 located inside the light source 200 may be formed, and red light of the red light-emitting region may also be irradiated to the corner portion of the reflective sheet 126. A cyan phosphor may be provided on the corner portion of the reflective sheet 126. The cyan phosphor may absorb red light and emit white light.

In addition, in one embodiment, a colored light-emitting region of the green LED 220 located at the center of the light source 200 may be formed depending on the characteristics of the protective lenses 240 and 250, and green light of the colored light-emitting region may also be irradiated to the corner portion of the reflective sheet 126. A magenta phosphor may also be provided on the corner portion of the reflective sheet 126. The magenta phosphor may absorb green light and emit white light.

Hereinafter, various examples 200a to 200g of the light source 200 according to the present disclosure will be described. Components of the light sources 200a to 200g according to each embodiment may be substantially the same as those of the light source 200 described above. That is, the technical solutions and technical effects of the light source 200 described above may also be applied to the light sources 200a to 200g which will be described below. For example, the light-emitting area of the red LED 210 may be greater than the light-emitting areas of the green and blue LEDs 220 and 230. In addition, each of the light sources 200a to 200g may have a substantially square shape. Accordingly, for convenience of explanation, the following description will focus on differences from the light source 200 described above.

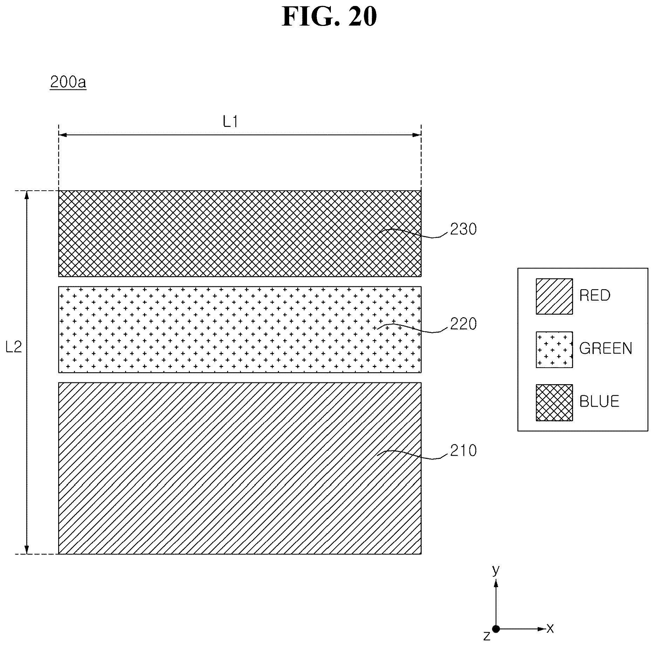

Referring to FIG. 20, in one embodiment, red, green, and blue LEDs 210, 220, and 230 of a light source 200a may be spaced apart from each other. For example, the red, green, and blue LEDs 210, 220, and 230 may be spaced apart from each other in the arrangement direction (e.g., y direction).

Lengths L1 of the red, green, and blue LEDs 210, 220, and 230 may further extend by distances between the red, green, and blue LEDs 210, 220, and 230. In this manner, the light source 200a may remain in a substantially square shape. That is, the length L1 of the light source 200a may be substantially equal to a width L2 of the light source 200a.

Accordingly, heat dissipation performance of the light source 200a may be improved. For example, heat generated by at least one of the red, green, and blue LEDs 210, 220, and 230 may be difficult to be transferred to another one of the red, green, and blue LEDs 210, 220, and 230.

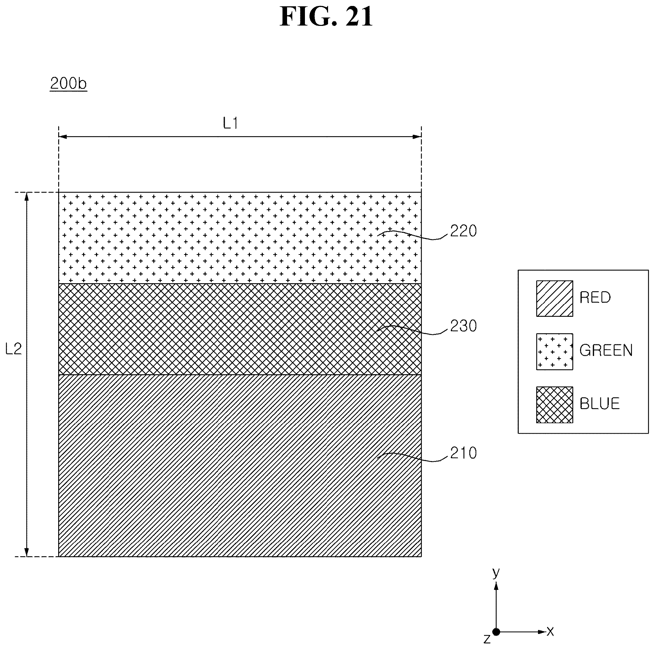

Referring to FIG. 21, in one embodiment, red, blue, and green LEDs 210, 230, and 220 of a light source 200b may be arranged sequentially. The red and green LEDs 210 and 220 may be located on the edge of the arrangement. The blue LED 230 may be disposed between the red and green LEDs 210 and 220. For example, the red, blue, and green LEDs 210, 230, and 220 may be arranged sequentially in the y direction. In this manner, colored light-emitting regions of the light source 200b may be changed. For example, the light source 200b may include a first colored light-emitting region having a red color and a second colored light-emitting region having a green color.

However, in one embodiment, the light source 200b may also include a blue colored light-emitting region depending on the characteristics of the protective lenses 240 and 250.

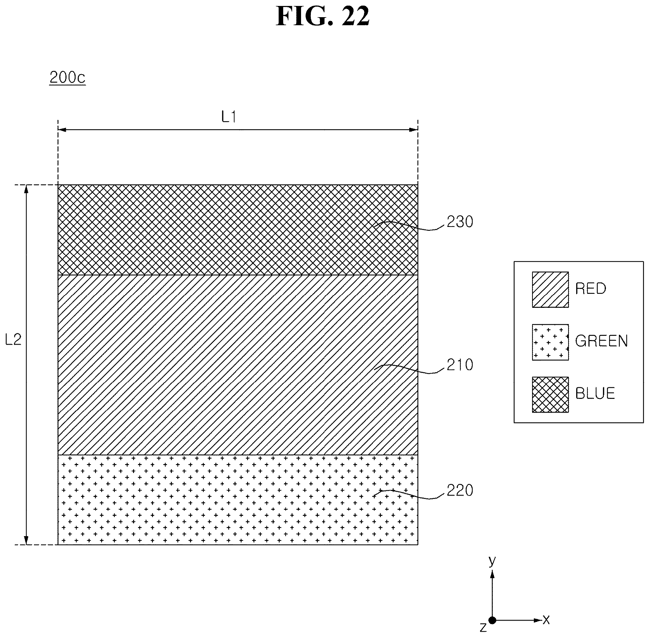

Referring to FIG. 22, in one embodiment, green, red, and blue LEDs 220, 210, and 230 of a light source 200c may be arranged sequentially. The green and blue LEDs 220 and 230 may be located on the edge of the arrangement. The red LED 210 may be disposed between the green and blue LEDs 220 and 230. For example, the green, red, and blue LEDs 220, 210, and 230 may be arranged sequentially in the y direction. In this manner, the colored light-emitting regions of the light source 200c may be changed. For example, the light source 200c may include a first colored light-emitting region having a green color and a second colored light-emitting region having a blue color.

However, in one embodiment, the light source 200c may also include a red colored light-emitting region depending on the characteristics of the protective lenses 240 and 250.

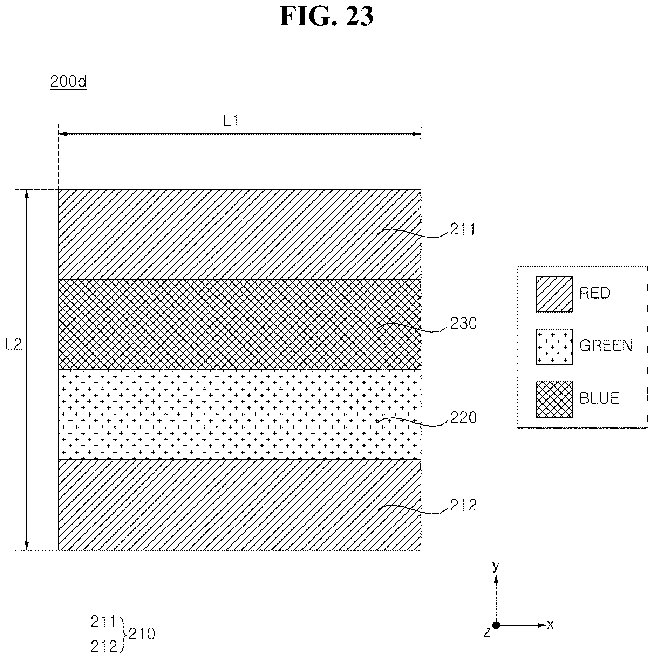

Referring to FIG. 23, the red LED 210 may include a first red LED 211 and a second red LED 212. The first and second red LEDs 211 and 212 may be elongated. For example, the first and second red LEDs 211 and 212 may be elongated in the longitudinal direction of a light source 200d.

Lengths L1 of the first and second red LEDs 211 and 212 may be substantially equal to each other. For example, the lengths L1 of the first and second red LEDs 211 and 212 may be substantially equal to a length L1 of the light source 200d.

Widths of the first and second red LEDs 211 and 212 may be substantially equal to each other. The widths of the first and second red LEDs 211 and 212 may be measured in the width direction (e.g., y direction) of the light source 200d.

Light-emitting areas of the first and second red LEDs 211 and 212 may be substantially equal to each other. For example, the lengths L1 and widths of the first and second red LEDs 211 and 212 are substantially equal to each other, such that the light-emitting areas of the first and second red LEDs 211 and 212 may be substantially equal to each other.

The first and second red LEDs 211 and 212 may be spaced apart from each other. The first and second red LEDs 211 and 212 may be spaced apart from each other in the arrangement direction (e.g., y direction) of the first and second red LEDs 211 and 212. For example, the first and second red LEDs 211 and 212 may be spaced apart from each other in the width direction intersecting the longitudinal direction.

Accordingly, heat dissipation performance of the red LED 210 may be improved. For example, as the first and second red LEDs 211 and 212 are spaced apart from each other, concentration of heat generated by the first and second red LEDs 211 and 212 can be minimized.

Further, performance degradation of the red LED 210 due to heat can be minimized.

Further, the ability of the light source 200d to produce white light can be improved.

Moreover, the backlight unit 120 for the display device capable of improving color gamut and/or luminance can be provided.

The green and blue LEDs 220 and 230 may be provided between the first and second red LEDs 211 and 212. For example, the first red LED 211, the green LED 220, the blue LED 230, and the second red LED 212 may be arranged sequentially in the y direction.

A light-emitting area of the first red LED 211 or the second red LED 212 may be substantially equal to a light-emitting area of the green LED 220 or the blue LED 230. A sum of the light-emitting areas of the first and second red LEDs 211 and 212 may be greater than the light-emitting area of the green LED 220 or the blue LED 230. For example, the sum of the light-emitting areas of the first and second red LEDs 211 and 212 may be about 2.0 times greater or more than the light-emitting area of the green LED 220 or the blue LED 230.

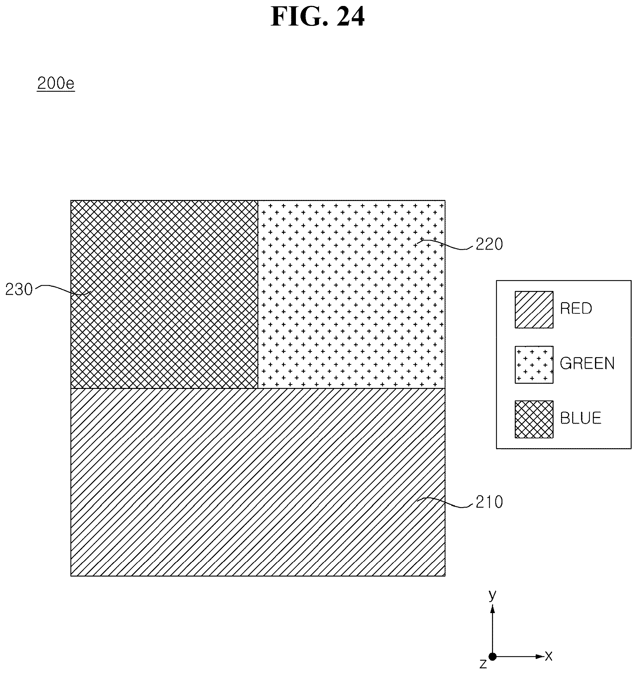

Referring to FIG. 24, in one embodiment, the red LED 210 may be elongated. For example, the red LED 210 may have a rectangular shape. A length L1 of the red LED 210 may correspond to a length L1 of the light source 200e. A width of the red LED 210 may correspond to a half of a width L2 of the light source 200e.

The green and blue LEDs 220 and 230 may have a substantially square shape. For example, light-emitting areas of the green and blue LEDs 220 and 230 may have a substantially square shape.

The light-emitting areas of the green and blue LEDs 220 and 230 may be substantially equal to each other. The light-emitting areas of the green and blue LEDs 220 and 230 may be smaller than a light-emitting area of the red LED 210. For example, the light-emitting area of the red LED 210 may be about 2 times the light-emitting area of the green LED 220 or the blue LED 230. A sum of the light-emitting areas of the green and blue LEDs 220 and 230 may be substantially equal to the light-emitting area of the red LED 210.

The red, blue, and green LEDs 210, 230, and 220 may be arranged sequentially. For example, the red, blue, and green LEDs 210, 230, and 220 may be arranged sequentially in a clockwise direction.

The green and blue LEDs 220 and 230 may be next to the red LED 210. The green and blue LEDs 220 and 230 may be arranged in the longitudinal direction of the light source 200e. The light source 200e may have a substantially square shape. For example, the red, blue, and green LEDs 210, 230, and 220 may be arranged within a substantially square area.

The red, blue, and green LEDs 210, 230, and 220 may be in contact with each other. For example, the red, blue, and green LEDs 210, 230, and 220 may be arranged without spacing. Adjacent sides of the red, green, and blue LEDs 210, 220, and 230 may overlap each other. The light-emitting surfaces of the red, green, and blue LEDs 210, 220, and 230 may form a single light-emitting surface.

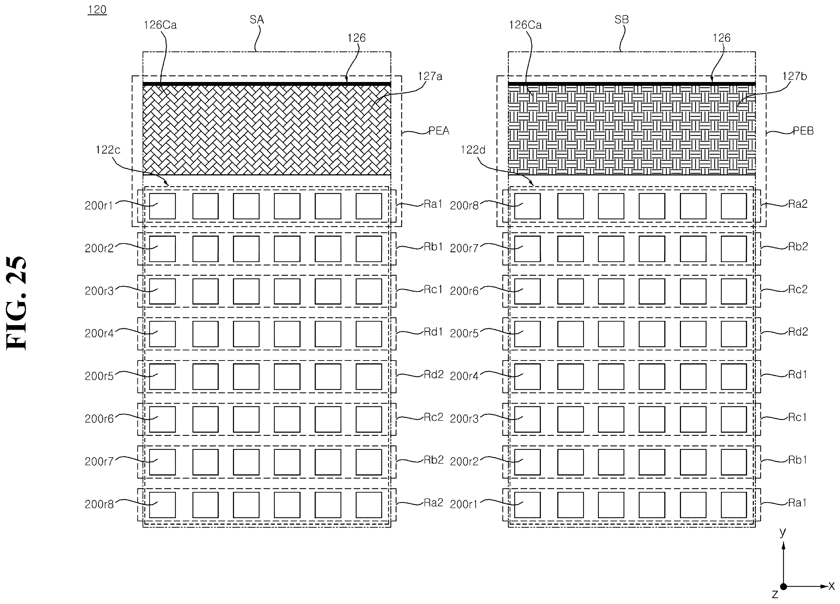

FIG. 25 is an enlarged view of regions SA and SB of FIG. 11.

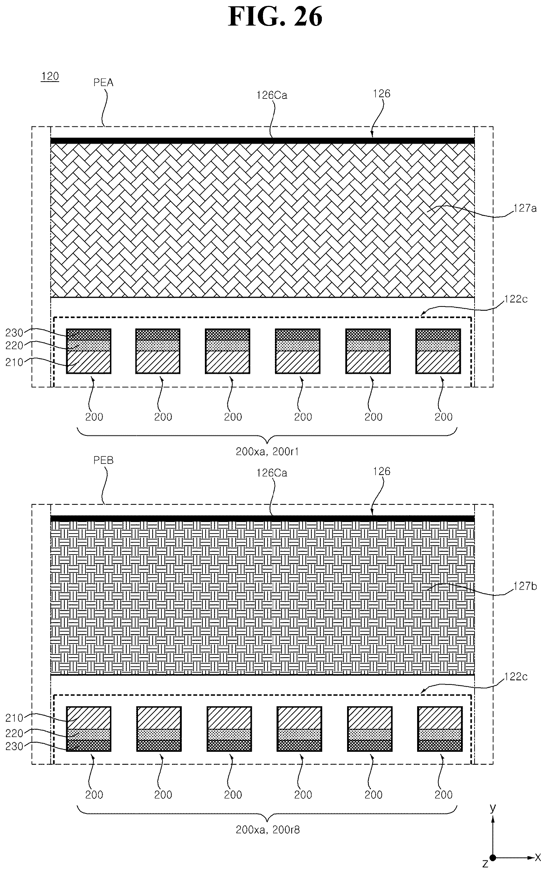

Referring to FIGS. 25 and 26 together with FIG. 11, the plurality of light sources 200 may be mounted on the third substrate 122c. The third substrate 122c may be provided under the reflective sheet 126. The plurality of light sources 200 may be arranged on the third substrate 122c in a matrix pattern. For example, the plurality of light sources 200 may be arranged in first to eighth rows Ra1, Rb1, Rc1, Rd1, Rd2, Rc2, Rb2, and Ra2 on the third substrate 122c.

The plurality of light sources 200 may also be arranged on a fourth substrate 122d. The fourth substrate 122d may be provided under the reflective sheet 126. The plurality of light sources 200 may be arranged on the fourth substrate 122d in a matrix pattern. For example, the plurality of light sources 200 may be arranged in first to eighth rows Ra1, Rb1, Rc1, Rd1, Rd2, Rc2, Rb2, and Ra2 on the fourth substrate 122d.

The fourth substrate 122d may be substantially the same as the third substrate 122c. For example, the structure of the fourth substrate 122d may be substantially the same as the structure of the third substrate 122c. The light sources 200 of the fourth substrate 122d may be substantially the same as the light sources 200 of the third substrate 122c. For example, the same light sources 200 may be mounted on the third and fourth substrates 122c and 122d.

The arrangement direction of the fourth substrate 122d may be different from the arrangement direction of the third substrate 122c. For example, the fourth substrate 12d may be rotated about 180 degrees with respect to the third substrate 122c. For example, the third substrate 122c may have first to eighth rows Ra1, Rb1, Rc1, Rd1, Rd2, Rc2, Rb2, and Ra2 that are arranged in a direction opposite to the y direction, and the fourth substrate 122d may have first to eighth rows Ra1, Rb1, Rc1, Rd1, Rd2, Rc2, Rb2, Ra2 that are arranged in the y direction. The first row Ra1 of the third substrate 122c and the eighth row Ra2 of the fourth substrate 122d may form the first row Ro1 of the matrix pattern.

Some of the lights emitted from the first outer light sources 200xa may be irradiated to the first chamfer portion 126Ca. For example, colored light of colored light-emitting regions of the first outer light sources 200xa may be irradiated to the first chamfer portion 126Ca. A colored light-emitting region of the third substrate 122c that is irradiated to the first chamfer portion 126Ca may be different from a colored light-emitting region of the fourth substrate 122d. For example, the fourth substrate 122d may be rotated about 180 degrees with respect to the third substrate 122c, and first outermost diodes of the third substrate 122c may be composed of the blue LEDs 230, and first outermost diodes of the fourth substrate 122d may be composed of the red LEDs 210.

A portion of the first chamfer portion 126Ca may face the third substrate 122c. Another portion of the first chamfer portion 126Ca may face the fourth substrate 122d. The color of light irradiated to a portion of the first chamfer portion 126Ca facing the third substrate 122c may be different from the color of light irradiated to another portion of the first chamfer portion 126Ca facing the fourth substrate 122d. For example, blue light of the colored light-emitting region of the first outer light sources 200xa of the third substrate 122c may be irradiated to a portion of the first chamfer portion 126Ca, and red light of the colored light-emitting region of the first outer light sources 200xa of the fourth substrate 122d may be irradiated to another portion of the first chamfer portion 126Ca.

A phosphor 127 may be provided on the first chamfered portion 126Ca. For example, a yellow phosphor 127a may be provided on a portion of the first chamfered portion 126Ca. A cyan phosphor 127b may be provided on another portion of the first chamfered portion 126Ca.

However, in one embodiment, the light irradiated to the first chamfer portion 126Ca may vary depending on the characteristics of the protective lenses 240 and 250. For example, a portion of the light-emitting region of the red LED 210 or the blue LED 230 located inside each of the first outer light sources 200xa may form a colored light-emitting region depending on the characteristics of the protective lens 240, and red light or blue light may also be irradiated to the first chamfer portion 126Ca. A cyan phosphor may be provided on a portion of the first chamfer portion 126Ca, and a yellow phosphor may also be provided on another portion of the first chamfered portion 126Ca.

In addition, in one embodiment, a colored light-emitting region of the green LED 220 located at the center of each of the first outer light sources 200xa may be formed depending on the characteristics of the protective lenses 240 and 250, and green light of the colored light-emitting region may be irradiated to the first chamfer portion 126Ca. A magenta phosphor may be provided on a portion or another portion of the first chamfer portion 126Ca.

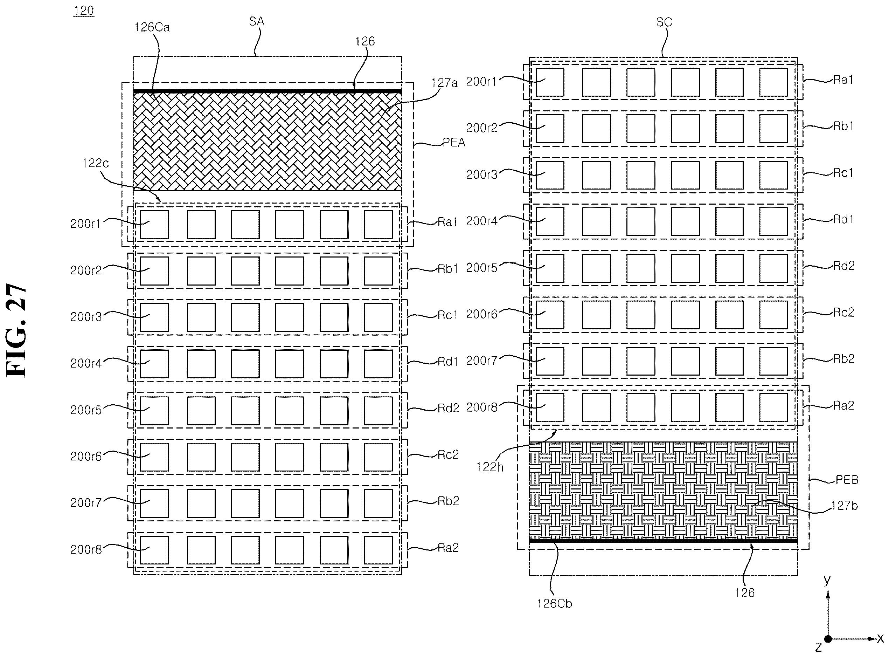

FIG. 27 is an enlarged view of regions SA and SC of FIG. 11.

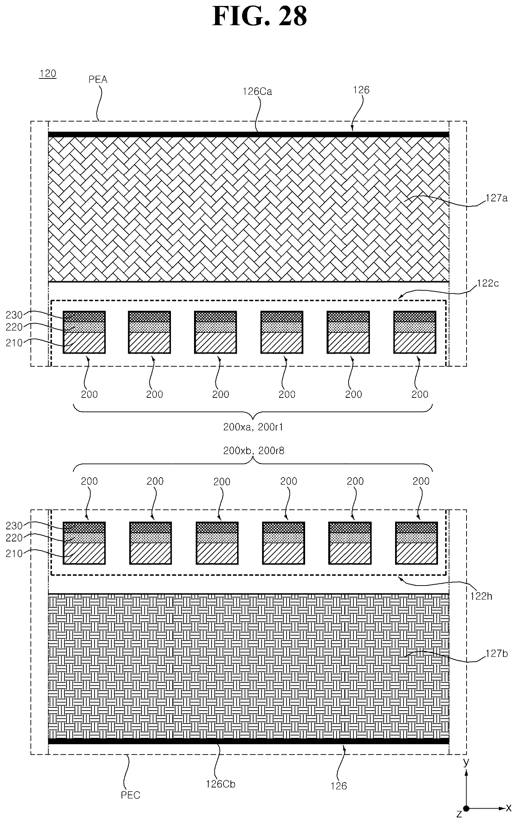

Referring to FIGS. 27 and 28 together with FIG. 11, the plurality of light sources 200 may be mounted on the eighth substrate 122h. The eighth substrate 122h may be provided under the reflective sheet 126. The plurality of light sources 200 may be arranged on the eighth substrate 122h in a matrix pattern. For example, the plurality of light sources 200 may be arranged in first to eighth rows Ra1, Rb1, Rc1, Rd1, Rd2, Rc2, Rb2, and Ra2 on the eighth substrate 122h.

The eighth substrate 122h may be substantially the same as the third substrate 122c. For example, the structure of the eighth substrate 122h may be substantially the same as the structure of the third substrate 122c. The light sources 200 of the eighth substrate 122h may be substantially the same as the light sources 200 of the third substrate 122c. For example, the light sources 200 having the same structure may be mounted on the third and eighth substrates 122c and 122h.

The arrangement direction of the eighth substrate 122h may be the same direction as the arrangement direction of the third substrate 122c. For example, the third and eighth substrates 122c and 122h may have first to eighth rows Ra1, Rb1, Rc1, Rd1, Rd2, Rc2, Rb2, and Ra2 that are arranged in a direction opposite to the y direction. The first row Ra1 of the third substrate 122c may form the first row Ro1 of the matrix pattern, and the eighth row Ra2 of the eighth substrate122h may form the last row RoN of the matrix pattern.

Some of the lights emitted from the first outer light sources 200xa of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the blue LEDs 230, and a portion of the light-emitting region of the blue LED 230 may form a colored light-emitting region. Blue light may be irradiated to the first chamfer portion 126Ca.

Some of the lights emitted from the light sources 200 arranged in the last row RoN of the eighth substrate 122h may be irradiated to the second chamfer portion 126Cb. Colored light of the colored light-emitting regions of the light sources 200 arranged in the last row RoN of the eighth substrate 122h may be irradiated to the second chamfer portion 126Cb. For example, second outermost diodes of the eighth substrate 122h may be composed of red LEDs 210, and a portion of the light-emitting region of the red LED 210 may form a colored light-emitting region. Red light may be irradiated to the second chamfer portion 126Cb.

A phosphor 127 may be provided on the first chamfered portion 126Ca. For example, a yellow phosphor 127a may be provided on the first chamfered portion 126Ca.

The phosphor 127 may be provided on the second chamfered portion 126Cb. A cyan phosphor 127b may be provided on the second chamfered portion 126Cb.

However, in one embodiment, the light irradiated to the first chamfer portion 126Ca may vary depending on the characteristics of the protective lenses 240 and 250. For example, a colored light-emitting region of the red LED 210 located inside each of the first outer light sources 200xa may be formed depending on the characteristics of the protective lens 240, and red light of the colored light-emitting region may be irradiated to the first chamfer portion 126Ca. A cyan phosphor may be provided on a portion of the first chamfer portion 126Ca. The cyan phosphor may absorb red light and emit white light.

Likewise, the light irradiated to the second chamfer portion 126Ca may vary depending on the characteristics of the protective lenses 240 and 250. For example, a colored light-emitting region of the blue LED 230 located inside each of the second outer light sources 200xb may be formed depending on the characteristics of the protective lens 240, and blue light of the colored light-emitting region may also be irradiated to the second chamfer portion 126Cb. A yellow phosphor may be provided on a portion of the second chamfer portion 126Cb. The yellow phosphor may absorb blue light and emit white light.

In addition, in one embodiment, a colored light-emitting region of the green LED 220 located at the center of each of the first outer light sources 200xa may be formed depending on the characteristics of the protective lenses 240 and 250, and green light of the colored light-emitting region may be irradiated to the first chamfer portion 126Ca. A magenta phosphor may be provided on a portion or another portion of the first chamfer portion 126Ca. The magenta phosphor may absorb green light and emit white light.

Likewise, a colored light-emitting region of the green LED 220 located at the center of each of the second outer light sources 200xb may be formed depending on the characteristics of the protective lenses 240 and 250, and green light of the colored light-emitting region may be irradiated to the second chamfer portion 126Cb. A magenta phosphor may be provided on a portion and another portion of the second chamfer portion 126Cb. The magenta phosphor may absorb green light and emit white light.

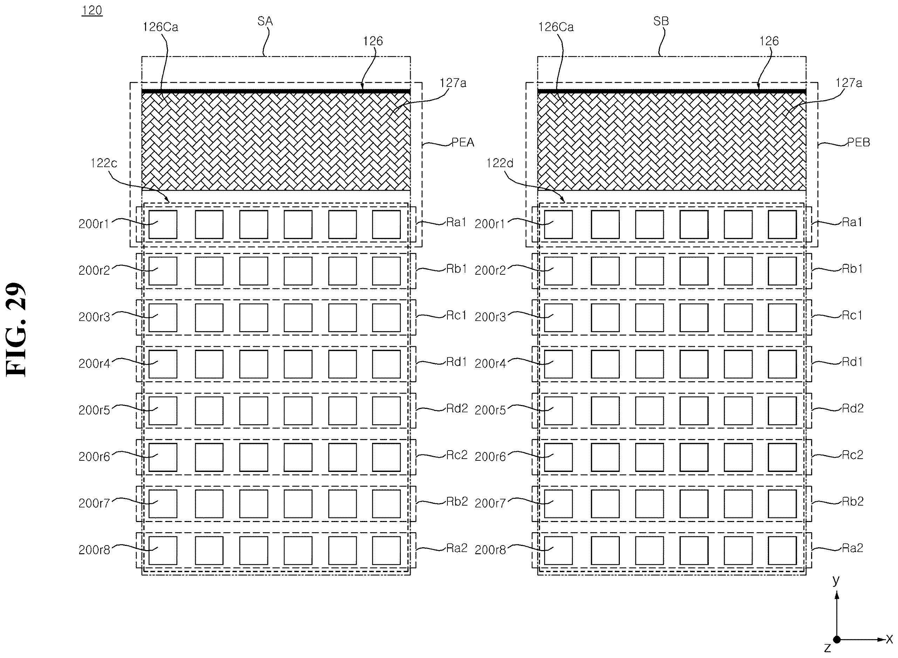

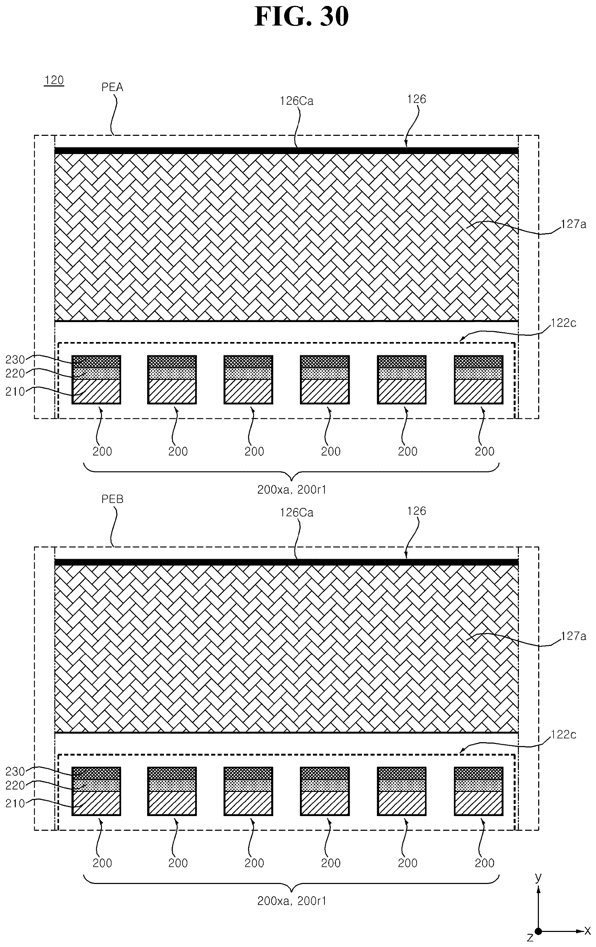

Referring to FIGS. 29 and 30, in one embodiment, the arrangement direction of the fourth substrate 122d may be the same as the arrangement direction of the third substrate 122c. For example, the third and fourth substrates 122c and 122d may have first to eighth rows Ra1, Rb1, Rc1, Rd1, Rd2, Rc2, Rb2, and Ra2 that are arranged in a direction opposite to the y direction. The first row Ra1 of the third substrate 122c and the first row Ra1 of the fourth substrate 122d may form the first row Ro1 of the matrix pattern.

Some of the lights emitted from the first outer light sources 200xa may be irradiated to the first chamfer portion 126Ca. A portion of the light-emitting region of the first outermost diode of each of the first outer light sources 200xa may form a colored light-emitting region, and colored light of the colored light-emitting region may be irradiated to the first chamfer portion 126Ca. For example, the first outermost diodes of the third and fourth substrates 122c and 122d may be composed of the blue LEDs 230, and some of the light-emitting regions of the blue LED 230 may form the colored light-emitting region. Blue light may be irradiated to the first chamfer portion 126Ca.

Accordingly, lights of the same color may be irradiated to the first chamfer portion 126Ca.

A phosphor 127 may be provided on the first chamfered portion 126Ca. For example, a yellow phosphor 127a may be provided on the first chamfered portion 126Ca.

Accordingly, the types of the phosphor 127 provided on the first chamfered portion 126Ca may be unified.

In addition, it is possible to provide the backlight unit for the display device with reduced manufacturing costs.

However, in one embodiment, the light irradiated to the first chamfer portion 126Ca may vary depending on the characteristics of the protective lenses 240 and 250. For example, a portion of the light-emitting region of the red LED 210 located inside each of the first outer light sources 200xa may form a colored light-emitting region depending on the characteristics of the protective lens 240, and red light may also be irradiated to the first chamfer portion 126Ca. A cyan phosphor may be provided on the first chamfer portion 126Ca. The cyan phosphor may absorb red light and emit white light.

In addition, in one embodiment, a colored light-emitting region of the green LED 220 located at the center of each of the first outer light sources 200xa may be formed depending on the characteristics of the protective lenses 240 and 250, and green light of the colored light-emitting region may be irradiated to the first chamfer portion 126Ca. A magenta phosphor may be provided on the first chamfer portion 126Ca. The magenta phosphor may absorb green light and emit white light.

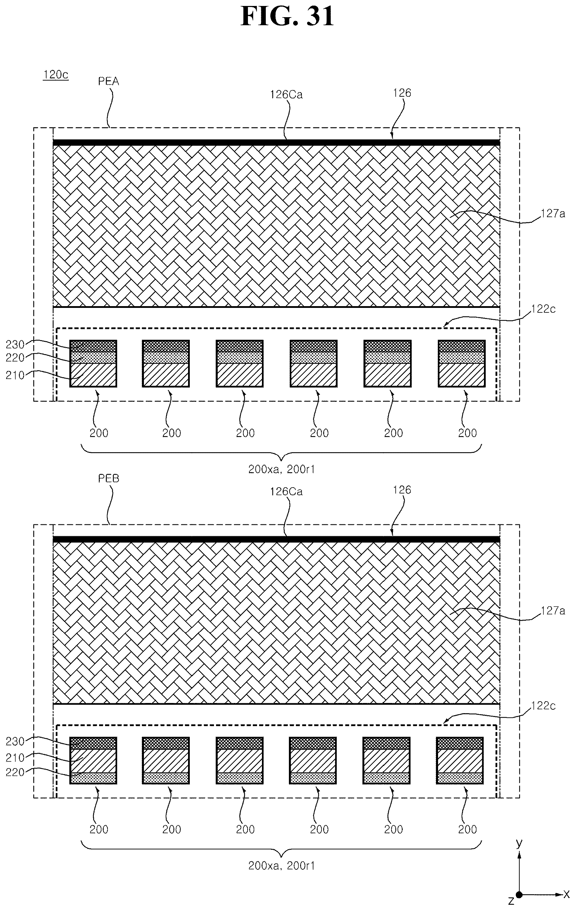

Referring to FIG. 31 together with FIG. 29, in one embodiment, light sources 200d of the fourth substrate 122d may be different from the light sources 200 of the third substrate 122c. For example, the structure of the fourth substrate 122d may be different from the structure of the light sources 200 of the third substrate 122c. The arrangement of diodes of each of the light sources 200d of the fourth substrate 122d may be different from the arrangement of diodes of each of the light sources 200 of the third substrate 122c. For example, the light source 200d of the third substrate 122c may include the red, green, and blue LEDs 210, 220, and 230 that are arranged sequentially in the y direction, while the light source 200d of the fourth substrate 122d may include the green, red, and blue LEDs 220, 210, and 230 that are arranged sequentially in the y direction.

The first outermost diode of the fourth substrate 122d may be the same as the first outermost diode of the third substrate 122c. For example, the first outermost diodes of the third and fourth substrates 122c and 122d may be composed of the blue LEDs 230. In this manner, the third and fourth substrates 122c and 122d may form a blue colored light-emitting region, and blue light may be irradiated to the first chamfer portion 126Ca.

Accordingly, lights of the same color may be irradiated to the first chamfer portion 126Ca.

A phosphor 127 may be provided on the first chamfered portion 126Ca. For example, a yellow phosphor 127a may be provided on the first chamfered portion 126Ca.

Accordingly, the types of the phosphor 127 provided on the first chamfered portion 126Ca may be unified.

In addition, it is possible to provide the backlight unit for the display device with reduced manufacturing costs.

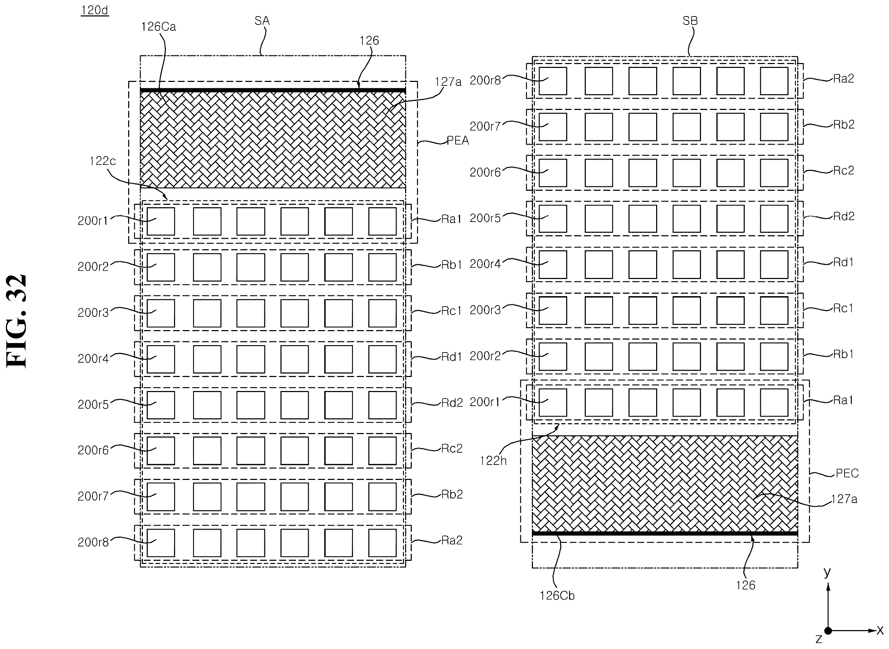

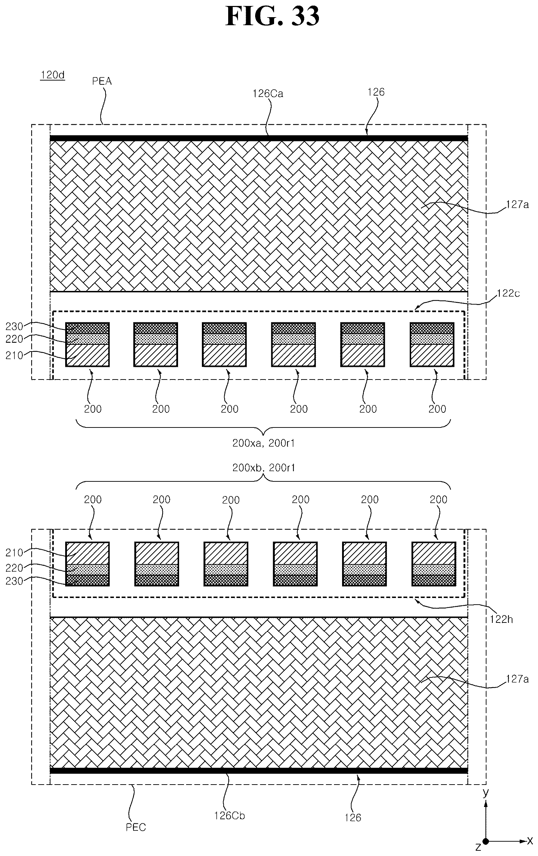

Referring to FIGS. 32 and 33, in one embodiment, the arrangement direction of the eighth substrate 122h may be different from the arrangement direction of the third substrate 122c. For example, the eighth substrate 122h may be rotated about 180 degrees with respect to the third substrate 122c. For example, the third substrate 122c may have first to eighth rows Ra1, Rb1, Rc1, Rd1, Rd2, Rc2, Rb2, and Ra2 that are arranged in a direction opposite to the y direction, and the eighth substrate 122h may have first to eighth rows Ra1, Rb1, Rc1, Rd1, Rd2, Rc2, Rb2, Ra2 that are arranged in the y direction. The light sources 200 in the first row Ra1 of the eighth substrate 122h may be rotated about 180 degrees with respect to the light sources 200 in the first row Ra1 of the third substrate 122c. The first row Ra1 of the third substrate 122c may form the first row Ro1 of the matrix pattern, and the first row Ra1 of the eighth substrate 122h may form the last row RoN of the matrix pattern.

Some of the lights emitted from the light sources 200 arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the blue LEDs 230, and some of the light-emitting regions of the blue LED 230 may form a blue colored light-emitting region. Blue light may be irradiated to the first chamfer portion 126Ca.

Some of the lights emitted from the light sources 200 arranged in the first row Ra1 of the eighth substrate 122h may be irradiated to the second chamfer portion 126Cb. Colored light of the colored light-emitting regions of the light sources 200 arranged in the first row Ra1 of the eighth substrate 122h may be irradiated to the second chamfer portion 126Cb. For example, the second outermost diodes of the eighth substrate 122h may be composed of the blue LEDs 230, and some of the light-emitting regions of the blue LED 230 may form a blue colored light-emitting region. Blue light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a yellow phosphor 127a may be provided on the first and second chamfer portions 126Ca and 126Cb. The yellow phosphor 127 may absorb blue light and emit white light.

Accordingly, the types of the phosphor 127 provided on the first and second chamfer portions 126Ca and 126Cb may be unified.

In addition, it is possible to provide the backlight unit for the display device with reduced manufacturing costs.

However, in one embodiment, the light irradiated to the first and second chamfer portions 126Ca and 126Cb may vary depending on the characteristics of the protective lenses 240 and 250. For example, a colored light-emitting region of the red LED 210 located inside each of the first and second outer light sources 200xa and 200xb may be formed depending on the characteristics of the protective lens 240, and red light of the colored light-emitting region may also be irradiated to the first and second chamfer portions 126Ca and 126Cb. A cyan phosphor may be provided on the first and second chamfer portions 126Ca and 126Cb. The cyan phosphor may absorb red light and emit white light.

In addition, in one embodiment, a colored light-emitting region of the green LED 220 located at the center of each of the first and second outer light sources 200xa and 200xb may be formed depending on the characteristics of the protective lenses 240 and 250, and green light of the colored light-emitting region may be irradiated to the first and second chamfer portions 126Ca and 126Cb. A magenta phosphor may be provided on the first and second chamfer portions 126Ca and 126Cb. The magenta phosphor may absorb green light and emit white light.

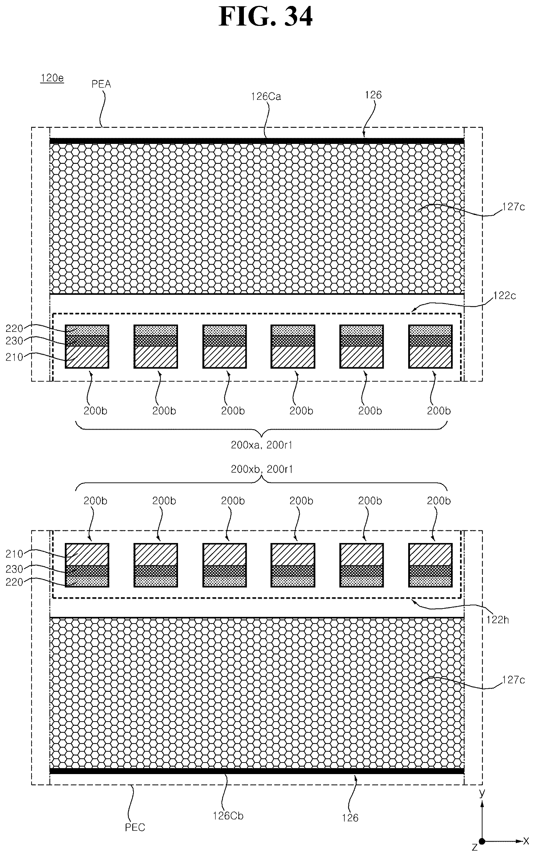

Referring to FIG. 34 together with FIG. 32, in one embodiment, the arrangement direction of the eighth substrate 122h may be different from the arrangement direction of the third substrate 122c. For example, the eighth substrate 122h may be rotated about 180 degrees with respect to the third substrate 122c. For example, the third substrate 122c may have first to eighth rows Ra1, Rb1, Rc1, Rd1, Rd2, Rc2, Rb2, and Ra2 that are arranged in a direction opposite to the y direction, and the eighth substrate 122h may have first to eighth rows Ra1, Rb1, Rc1, Rd1, Rd2, Rc2, Rb2, Ra2 that are arranged in the y direction.

The light sources 200b in the first row Ra1 of the eighth substrate 122h may be rotated about 180 degrees with respect to the light sources 200b in the first row Ra1 of the third substrate 122c. The first row Ra1 of the third substrate 122c may form the first row Ro1 of the matrix pattern, and the first row Ra1 of the eighth substrate 122h may form the last row RoN of the matrix pattern.

Some of the lights emitted from the light sources 200b arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the green LEDs 220, and some of the light-emitting regions of the green LEDs 220 may form a colored light-emitting region. Green light may be irradiated to the first chamfer portion 126Ca.

Some of the lights emitted from the light sources 200b arranged in the first row Ra1 of the eighth substrate 122h may be irradiated to the second chamfer portion 126Cb. Colored light of the colored light-emitting regions of the light sources 200 arranged in the first row Ra1 of the eighth substrate 122h may be irradiated to the second chamfer portion 126Cb. For example, the second outermost diodes of the eighth substrate 122h may be composed of the green LEDs 220, and a portion of the light-emitting region of the green LEDs 220 may form a colored light-emitting region. Green light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a magenta phosphor 127c may be provided on the first and second chamfer portions 126Ca and 126Cb. The magenta phosphor 127c may absorb green light and emit white light.

Accordingly, the types of the phosphor 127 provided on the first and second chamfer portions 126Ca and 126Cb may be unified.

In addition, it is possible to provide the backlight unit for the display device with reduced manufacturing costs.

However, in one embodiment, the light irradiated to the first and second chamfer portions 126Ca and 126Cb may vary depending on the characteristics of the protective lenses 240 and 250. For example, a colored light-emitting region of the red LED 210 located inside each of the first and second outer light sources 200xa and 200xb may be formed depending on the characteristics of the protective lens 240, and red light of the colored light-emitting region may also be irradiated to the first and second chamfer portions 126Ca and 126Cb. A cyan phosphor may be provided on the first and second chamfer portions 126Ca and 126Cb. The cyan phosphor may absorb red light and emit white light.

In addition, in one embodiment, a colored light-emitting region of the green LED 220 located at the center of each of the first and second outer light sources 200xa and 200xb may be formed depending on the characteristics of the protective lenses 240 and 250, and green light of the colored light-emitting region may also be irradiated to the first and second chamfer portions 126Ca and 126Cb. A magenta phosphor may be provided on the first and second chamfer portions 126Ca and 126Cb. The magenta phosphor may absorb green light and emit white light.

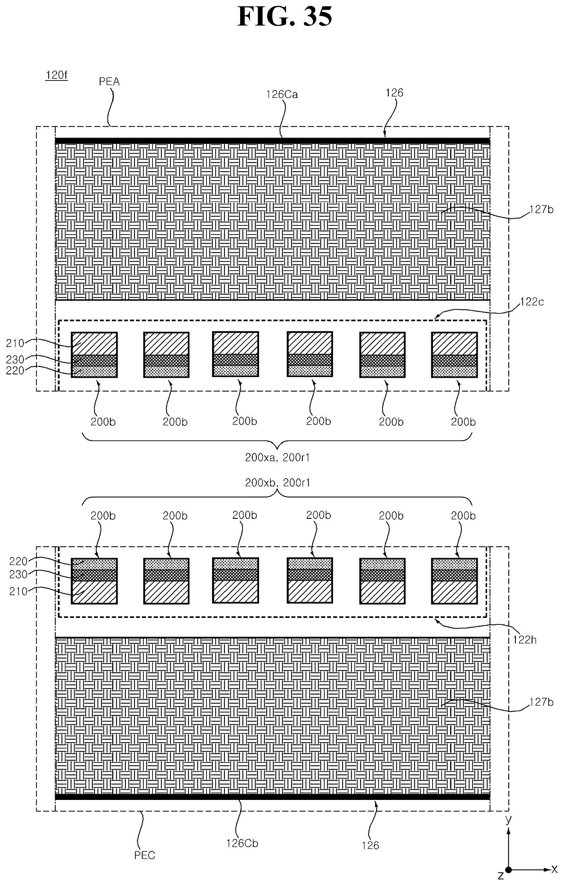

Referring to FIG. 35 together with FIG. 32, in one embodiment, the arrangement direction of the eighth substrate 122h may be different from the arrangement direction of the third substrate 122c. For example, the eighth substrate 122h may be rotated about 180 degrees with respect to the third substrate 122c. For example, the third substrate 122c may have first to eighth rows Ra1, Rb1, Rc1, Rd1, Rd2, Rc2, Rb2, and Ra2 that are arranged in a direction opposite to the y direction, and the eighth substrate 122h may have first to eighth rows Ra1, Rb1, Rc1, Rd1, Rd2, Rc2, Rb2, Ra2 that are arranged in the y direction.

The light sources 200b in the first row Ra1 of the eighth substrate 122h may be rotated about 180 degrees with respect to the light sources 200 in the first row Ra1 of the third substrate 122c. The first row Ra1 of the third substrate 122c may form the first row Ro1 of the matrix pattern, and the first row Ra1 of the eighth substrate 122h may form the last row RoN of the matrix pattern.

Some of the lights emitted from the light sources 200b arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the red LEDs 210, and a portion of the light-emitting region of the red LED 210 may form a colored light-emitting region. Red light may be irradiated to the first chamfer portion 126Ca.

Some of the lights emitted from the light sources 200b arranged in the first row Ra1 of the eighth substrate 122h may be irradiated to the second chamfer portion 126Cb. Colored light of the colored light-emitting regions of the light sources 200b arranged in the first row Ra1 of the eighth substrate 122h may be irradiated to the second chamfer portion 126Cb. For example, the second outermost diodes of the eighth substrate 122h may be composed of the red LEDs 210, and a portion of the light-emitting region of the red LED 210 may form a colored light-emitting region. Red light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a cyan phosphor 127b may be provided on the first and second chamfer portions 126Ca and 126Cb. The cyan phosphor 127b may absorb red light and emit white light.

Accordingly, the types of the phosphor 127 provided on the first and second chamfer portions 126Ca and 126Cb may be unified.

In addition, it is possible to provide the backlight unit for the display device with reduced manufacturing costs.

However, in one embodiment, the light irradiated to the first and second chamfer portions 126Ca and 126Cb may vary depending on the characteristics of the protective lenses 240 and 250. For example, a colored light-emitting region of the green LED 220 located inside each of the first and second outer light sources 200xa and 200xb may be formed depending on the characteristics of the protective lens 240, and green light of the colored light-emitting region may also be irradiated to the first and second chamfer portions 126Ca and 126Cb. A magenta phosphor may be provided on the first and second chamfer portions 126Ca and 126Cb. The magenta phosphor may absorb green light and emit white light.

In addition, in one embodiment, a colored light-emitting region of the blue LED 230 located at the center of each of the first and second outer light sources 200xa and 200xb may be formed depending on the characteristics of the protective lenses 240 and 250, and blue light of the colored light-emitting region may also be irradiated to the first and second chamfer portions 126Ca and 126Cb. A yellow phosphor may be provided on the first and second chamfer portions 126Ca and 126Cb. The yellow phosphor may absorb blue light and emit white light.

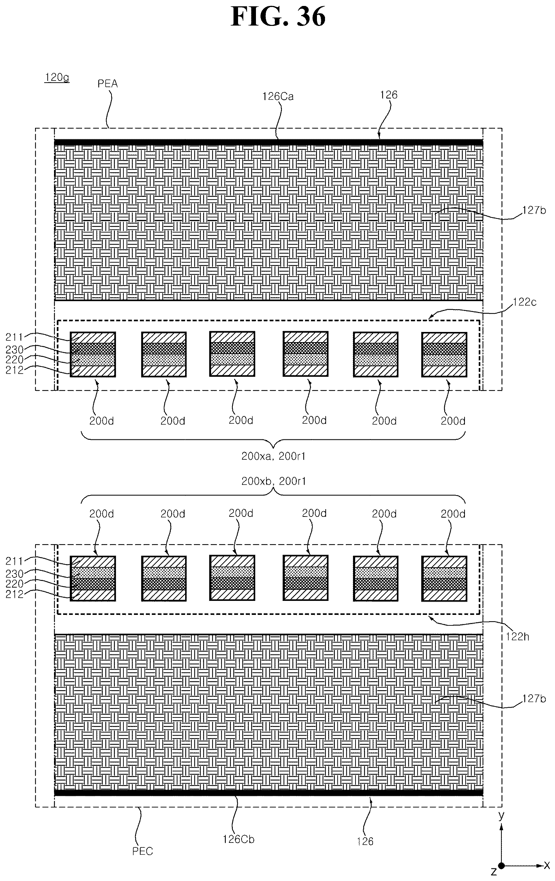

Referring to FIG. 36 together with FIG. 32, in one embodiment, the arrangement direction of the eighth substrate 122h may be different from the arrangement direction of the third substrate 122c. For example, the eighth substrate 122h may be rotated about 180 degrees with respect to the third substrate 122c. For example, the third substrate 122c may have first to eighth rows Ra1, Rb1, Rc1, Rd1, Rd2, Rc2, Rb2, and Ra2 that are arranged in a direction opposite to the y direction, and the eighth substrate 122h may have first to eighth rows Ra1, Rb1, Rc1, Rd1, Rd2, Rc2, Rb2, Ra2 that are arranged in the y direction.

The light sources 200d in the first row Ra1 of the eighth substrate 122h may be rotated about 180 degrees with respect to the light sources 200d in the first row Ra1 of the third substrate 122c. The first row Ra1 of the third substrate 122c may form the first row Ro1 of the matrix pattern, and the first row Ra1 of the eighth substrate 122h may form the last row RoN of the matrix pattern.

Some of the lights emitted from the light sources 200d arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the first red LEDs 211, and a portion of the light-emitting region of the first red LED 211 may form a colored light-emitting region. Red light may be irradiated to the first chamfer portion 126Ca.

Some of the lights emitted from the light sources 200d arranged in the first row Ra1 of the eighth substrate 122h may be irradiated to the second chamfer portion 126Cb. Colored light of the colored light-emitting regions of the light sources 200 arranged in the first row Ra1 of the eighth substrate 122h may be irradiated to the second chamfer portion 126Cb. For example, the second outermost diodes of the eighth substrate 122h may be composed of the first red LEDs 211, and a portion of the light-emitting region of the first red LED 211 may form a colored light-emitting region. Red light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a cyan phosphor 127b may be provided on the first and second chamfer portions 126Ca and 126Cb. The cyan phosphor 127b may absorb red light and emit white light.

Accordingly, the types of the phosphor 127 provided on the first and second chamfer portions 126Ca and 126Cb may be unified.

In addition, it is possible to provide the backlight unit for the display device with reduced manufacturing costs.

However, in one embodiment, a portion of the light-emitting region of the blue LED 230 or the green LED 220 located at the center of each of the first and second outer light sources 200xa and 200xb may form a colored light-emitting region depending on the characteristics of the protective lenses 240 and 250, and blue light or green light may also be irradiated to the first chamfer portion 126Ca. A yellow or magenta phosphor may be provided on the first chamfer portion 126Ca. The yellow or magenta phosphor may absorb blue light or green light and emit white light.

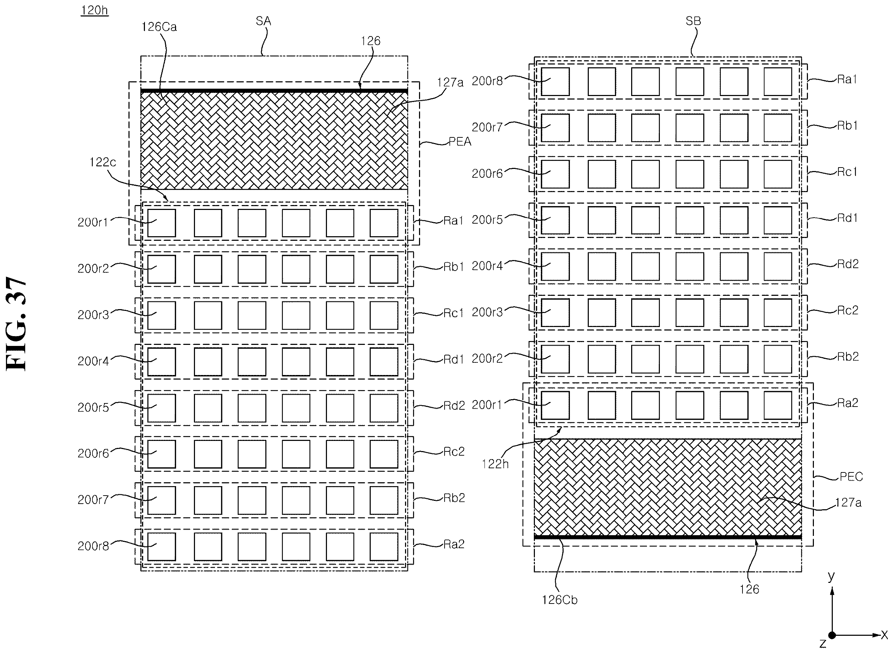

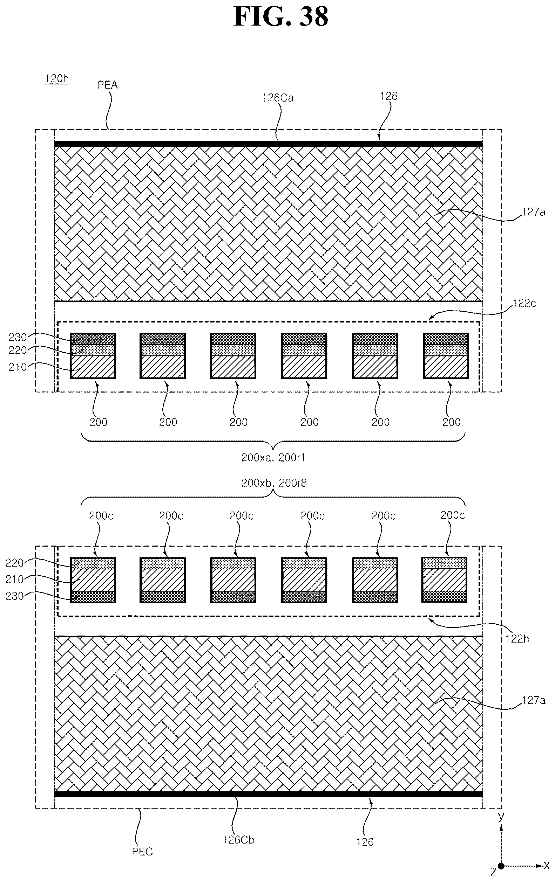

Referring to FIGS. 37 and 38, in one embodiment, the arrangement direction of the eighth substrate 122h may be different from the arrangement direction of the third substrate 122c. For example, the third and eighth substrates 122c and 122h may have first to eighth rows Ra1, Rb1, Rc1, Rd1, Rd2, Rc2, Rb2, and Ra2 that are arranged in a direction opposite to the y direction. The first row Ra1 of the third substrate 122c may form the first row Ro1 of the matrix pattern, and the eighth row Ra2 of the eighth substrate 122h may form the last row RoN of the matrix pattern.

The light sources 200c of the eighth substrate 122h may be different from the light sources 200 of the third substrate 122c. For example, the structure of the light sources 200c of the eighth substrate 122h may be different from the structure of the light sources 200 of the third substrate 122c. The arrangement of diodes of each of the light sources 200c of the eighth substrate 122h may be different from the arrangement of diodes of each of the light sources 200 of the third substrate 122c. For example, the light source 200 of the third substrate 122c may include the red, green, and blue LEDs 210, 220, and 230 that are arranged sequentially in the y direction, while the light sources 200c of the eighth substrate 122h may include the blue, red, and green LEDs 230, 210, and 220 that are arranged sequentially in the y direction.

The second outermost diode of the eighth substrate 122h may be the same as the first outermost diode of the third substrate 122c. For example, the first outermost diode of the third substrate 122c and the second outermost diode of the eighth substrate 122h may be composed of the blue LEDs 230.

Some of the lights emitted from the light sources 200 arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the blue LEDs 230, and a portion of the light-emitting region of the blue LED 230 may form a colored light-emitting region. Blue light may be irradiated to the first chamfer portion 126Ca.

Some of the lights emitted from the light sources 200c arranged in the eighth row Ra2 of the eighth substrate 122h may be irradiated to the second chamfer portion 126Cb. Colored light of the colored light-emitting regions of the light sources 200c arranged in the eighth row Ra2 of the eighth substrate 122h may be irradiated to the second chamfer portion 126Cb. For example, the second outermost diodes of the eighth substrate 122h may be composed of the blue LEDs 230, and a portion of the light-emitting region of the blue LED 230 may form a colored light-emitting region. Blue light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a yellow phosphor 127a may be provided on the first and second chamfer portions 126Ca and 126Cb. The yellow phosphor 127a may absorb blue light and emit white light.

Accordingly, the types of the phosphor 127 provided on the first and second chamfer portions 126Ca and 126Cb may be unified.

In addition, it is possible to provide the backlight unit for the display device with reduced manufacturing costs.

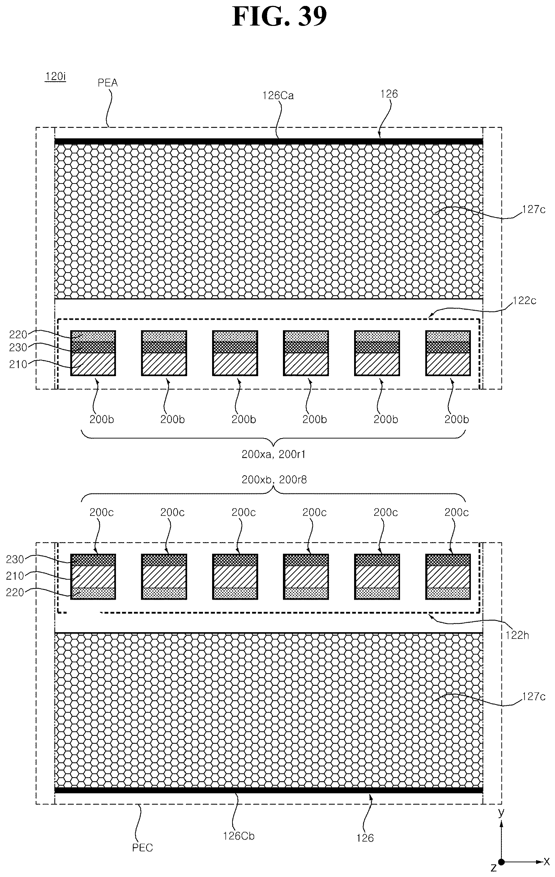

Referring to FIG. 39 together with FIG. 37, in one embodiment, the arrangement direction of the eighth substrate 122h may be the same as the arrangement direction of the third substrate 122c. For example, the third and eighth substrates 122c and 122h may have first to eighth rows Ra1, Rb1, Rc1, Rd1, Rd2, Rc2, Rb2, and Ra2 that are arranged in a direction opposite to the y direction. The first row Ra1 of the third substrate 122c may form the first row Ro1 of the matrix pattern, and the eighth row Ra2 of the eighth substrate 122h may form the last row RoN of the matrix pattern.

The light sources 200c of the eighth substrate 122h may be different from the light sources 200b of the third substrate 122c. For example, the structure of the light sources 200c of the eighth substrate 122h may be different from the structure of the light sources 200b of the third substrate 122c. The arrangement of diodes of each of the light sources 200c of the eighth substrate 122h may be different from the arrangement of diodes of each of the light sources 200b of the third substrate 122c. For example, the light source 200b of the third substrate 122c may include the red, blue, and green LEDs 210, 230, and 220 that are arranged sequentially in the y direction, while the light sources 200c of the eighth substrate 122h may include the green, red, and blue LEDs 220, 210, and 230 that are arranged sequentially in the y direction.

The second outermost diode of the eighth substrate 122h may be the same as the first outermost diode of the third substrate 122c. For example, the first outermost diodes of the third substrate 122c and the second outermost diodes of the eighth substrate 122h may be composed of the green LEDs 220.

Some of the lights emitted from the light sources 200b arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the green LEDs 220, and a portion of the light-emitting region of the green LED 220 may form a colored light-emitting region. Green light may be irradiated to the first chamfer portion 126Ca.

Some of the lights emitted from the light sources 200c arranged in the eighth row Ra2 of the eighth substrate 122h may be irradiated to the second chamfer portion 126Cb. Colored light of the colored light-emitting regions of the light sources 200c arranged in the eighth row Ra2 of the eighth substrate 122h may be irradiated to the second chamfer portion 126Cb. For example, the second outermost diodes of the eighth substrate 122h may be composed of the green LEDs 220, and a portion of the light-emitting region of the green LED 220 may form a colored light-emitting region. Green light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a magenta phosphor 127c may be provided on the first and second chamfer portions 126Ca and 126Cb. The magenta phosphor 127c may absorb green light and emit white light.

Accordingly, the types of the phosphor 127 provided on the first and second chamfer portions 126Ca and 126Cb may be unified.

In addition, it is possible to provide the backlight unit for the display device with reduced manufacturing costs.

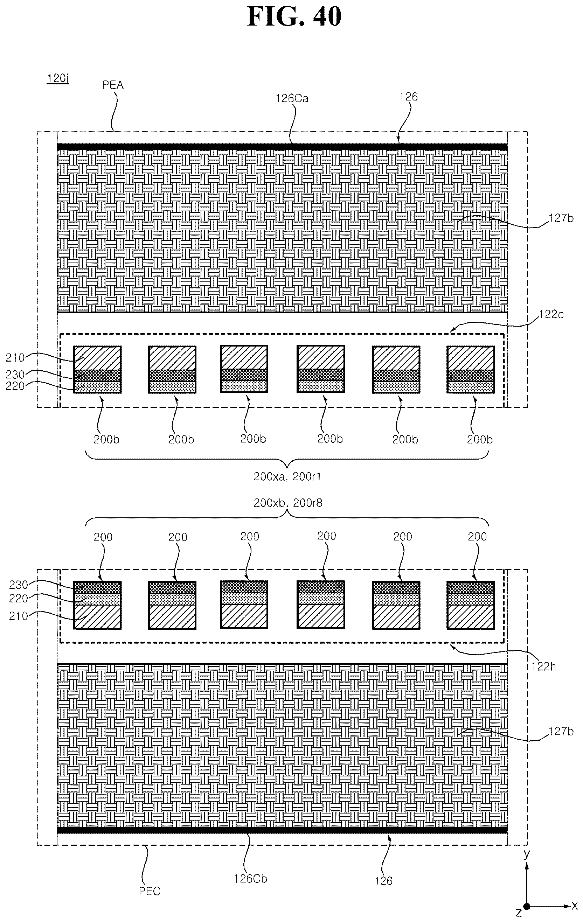

Referring to FIG. 40 together with FIG. 37, in one embodiment, the arrangement direction of the eighth substrate 122h may be the same as the arrangement direction of the third substrate 122c. For example, the third and eighth substrates 122c and 122h may have first to eighth rows Ra1, Rb1, Rc1, Rd1, Rd2, Rc2, Rb2, and Ra2 that are arranged in a direction opposite to the y direction. The first row Ra1 of the third substrate 122c may form the first row Ro1 of the matrix pattern, and the eighth row Ra2 of the eighth substrate 122h may form the last row RoN of the matrix pattern.

The light sources 200 of the eighth substrate 122h may be different from the light sources 200b of the third substrate 122c. For example, the structure of the light sources 200 of the eighth substrate 122h may be different from the structure of the light sources 200b of the third substrate 122c. The arrangement of diodes of each of the light sources 200 of the eighth substrate 122h may be different from the arrangement of diodes of each of the light sources 200b of the third substrate 122c. For example, the light source 200b of the third substrate 122c may include the green, blue, and red LEDs 220, 230, and 210 that are arranged sequentially in the y direction, while the light source 200 of the eighth substrate 122h may include the red, green, and blue LEDs 210, 220, and 230 that are arranged sequentially in the y direction.

The second outermost diode of the eighth substrate 122h may be the same as the first outermost diode of the third substrate 122c. For example, the first outermost diodes of the third substrate 122c and the second outermost diodes of the eighth substrate 122h may be composed of the red LEDs 210.

Some of the lights emitted from the light sources 200b arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the red LEDs 210, and a portion of the light-emitting region of the red LED 210 may form a colored light-emitting region. Red light may be irradiated to the first chamfer portion 126Ca.

Some of the lights emitted from the light sources 200 arranged in the eighth row Ra2 of the eighth substrate 122h may be irradiated to the second chamfer portion 126Cb. Colored light of the colored light-emitting regions of the light sources 200 arranged in the eighth row Ra2 of the eighth substrate 122h may be irradiated to the second chamfer portion 126Cb. For example, the second outermost diodes of the eighth substrate 122h may be composed of the red LEDs 210, and a portion of the light-emitting region of the red LED 210 may form a colored light-emitting region. Red light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a cyan phosphor 127b may be provided on the first and second chamfer portions 126Ca and 126Cb. The cyan phosphor 127b may absorb red light and emit white light.

Accordingly, the types of the phosphor 127 provided on the first and second chamfer portions 126Ca and 126Cb may be unified.

In addition, it is possible to provide the backlight unit for the display device with reduced manufacturing costs.

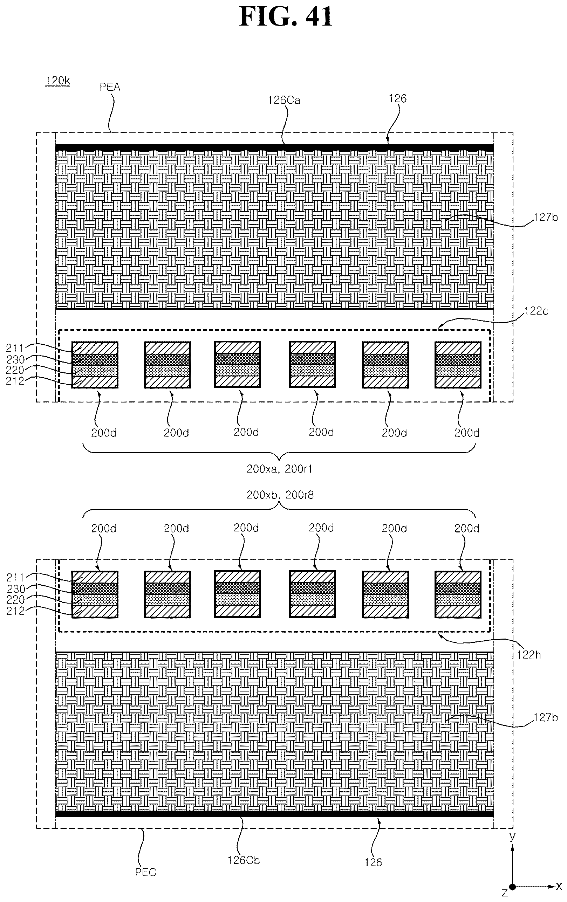

Referring to FIG. 41 together with FIG. 37, in one embodiment, the arrangement direction of the eighth substrate 122h may be the same as the arrangement direction of the third substrate 122c. For example, the third and eighth substrates 122c and 122h may have first to eighth rows Ra1, Rb1, Rc1, Rd1, Rd2, Rc2, Rb2, and Ra2 that are arranged in a direction opposite to the y direction. The first row Ra1 of the third substrate 122c may form the first row Ro1 of the matrix pattern, and the eighth row Ra2 of the eighth substrate 122h may form the last row RoN of the matrix pattern.

The light sources 200d of the eighth substrate 122h may be the same as the light sources 200d of the third substrate 122c. For example, the structure and arrangement of the light sources 200d of the eighth substrate 122h may be the same as the structure and arrangement of the light sources 200d of the third substrate 122c.

The second outermost diodes of the eighth substrate 122h may be the same as the first outermost diodes of the third substrate 122c. For example, the first outermost diodes of the third substrate 122c and the second outermost diodes of the eighth substrate 122h may be composed of the red LEDs 211 and 212.

Some of the lights emitted from the light sources 200d arranged in the first row Ra1 of the third substrate 122c may be irradiated to the first chamfer portion 126Ca. Colored light of the colored light-emitting regions of the first outer light sources 200xa of the third substrate 122c may be irradiated to the first chamfer portion 126Ca. For example, the first outermost diodes of the third substrate 122c may be composed of the first red LEDs 211, and a portion of the light-emitting region of the first red LED 211 may form a colored light-emitting region. Red light may be irradiated to the first chamfer portion 126Ca.

Some of the lights emitted from the light sources 200d arranged in the eighth row Ra2 of the eighth substrate 122h may be irradiated to the second chamfer portion 126Cb. Colored light of the colored light-emitting regions of the light sources 200 arranged in the eighth row Ra2 of the eighth substrate 122h may be irradiated to the second chamfer portion 126Cb. For example, the second outermost diodes of the eighth substrate 122h may be composed of the second red LEDs 212, and a portion of the light-emitting region of the second red LED 212 may form a colored light-emitting region. Red light may be irradiated to the second chamfer portion 126Cb.

Accordingly, lights of the same color may be irradiated to each of the first and second chamfer portions 126Ca and 126Cb.

A phosphor 127 may be provided on the first and second chamfer portions 126Ca and 126Cb. For example, a cyan phosphor 127b may be provided on the first and second chamfer portions 126Ca and 126Cb. The cyan phosphor 127b may absorb red light and emit white light.

Accordingly, the types of the phosphor 127 provided on the first and second chamfer portions 126Ca and 126Cb may be unified.

In addition, it is possible to provide the backlight unit for the display device with reduced manufacturing costs.

Referring to FIG. 41 together with FIG. 36, the light source 200d includes the first and second red LEDs 211 and 212 located on the edge of the arrangement, such that the first and second outermost diodes may be composed of the red LEDs 210 regardless of the arrangement direction of the substrate 122.

Accordingly, it is possible to provide the backlight unit for the display device with improved freedom of design and assembly convenience.

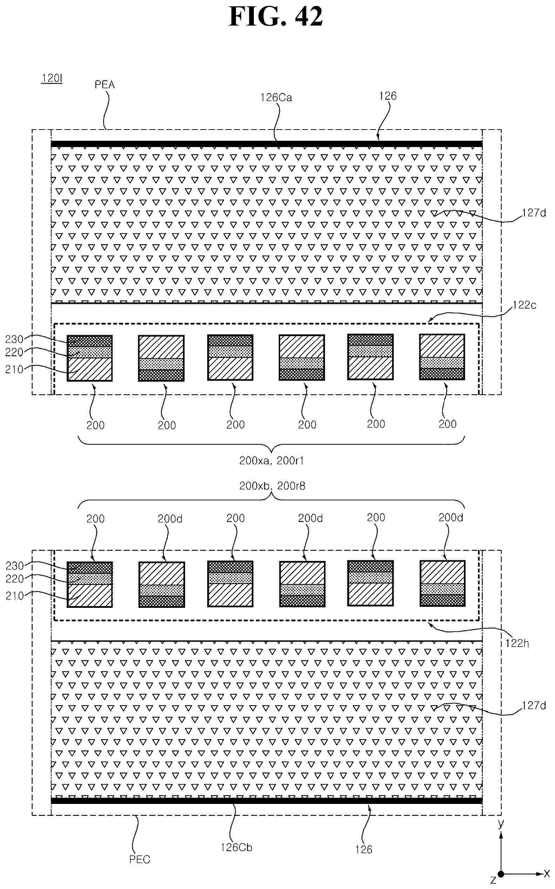

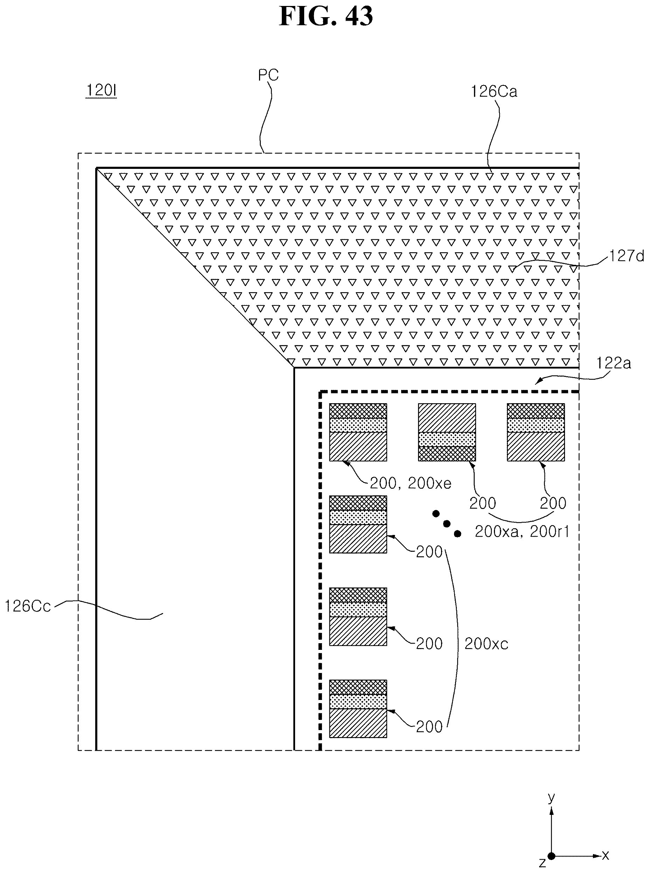

Referring to FIGS. 42 and 43, in one embodiment, the arrangement direction of some of the first outer light sources 200xa may be different from the arrangement direction of the rest of the first outer light sources 200xa. For example, some of the first outer light sources 200xa may be rotated about 180 degrees with respect to the rest of the first outer light sources 200xa. That is, some of the first outer light sources 200xa may be arranged in a reverse direction, and the rest of the first outer light sources 200xa may be arranged in a forward direction. For example, the first outer light sources 200xa arranged in the forward direction may be arranged alternately with the first outer light sources 200xa arranged in the reverse direction. For example, the first outer light sources 200xa arranged in odd numbers may be arranged in the forward direction, and the first outer light sources 200xa arranged in even numbers may be arranged in the reverse direction.

The first outermost diodes may be composed of a combination of two of the red, green, and blue LEDs 210, 220, and 230. Some of the first outermost diodes may be composed of one of the red, green, and blue LEDs 210, 220, and 230, and the rest of the first outermost diodes may be composed of another one of the red, green, and blue LEDs 210, 220, and 230. For example, the first outermost diodes may be composed of the red and blue LEDs 210 and 230.

Some of the first outermost diodes and the rest of the first outermost diodes may be arranged randomly. Some of the first outermost diodes and the rest of the first outermost diodes may be arranged in a mixed manner. For example, some of the first outermost diodes and the rest of the first outermost diodes may be arranged alternately with each other. For example, the first outermost diodes arranged in odd numbers may be composed of the blue LEDs 230, and the first outermost diodes arranged in even numbers may be composed of the red LEDs 210.

Some of the lights emitted from the first outer light sources 200xa may be irradiated to the first chamfer portion 126Ca. Colored light of the colored light-emitting regions of the first outer light sources 200xa may be irradiated to the first chamfer portion 126Ca. For example, the first outermost diodes may be composed of the red and blue LEDs 210 and 230, and a portion of the light-emitting region of the red and blue LEDs 210 and 230 may form a colored light-emitting region. Red light and blue light may be irradiated to the second chamfer portion 126Cb.

Accordingly, it is possible to provide the backlight unit for the display device with improved color separation. For example, red light and blue light are mixed to be irradiated to the first chamfer portion 126Ca, thereby reducing color separation.

In addition, it is possible to provide the backlight unit for the display device with reduced manufacturing costs. For example, color separation may be reduced by mixing red light and blue light, such that the phosphor 127 on the first chamfer portion 126Ca may be omitted.

In one embodiment, the phosphor 127 may also be provided on the first chamfer portion 126Ca. The phosphor 127 may further include a green phosphor 127d on the first chamfer portion 126Ca. The green phosphor 127d may absorb mixed light of red light and blue light and emit white light.

Likewise, the arrangement direction of some of the second outer light sources 200xb may be different from the arrangement direction of the rest of the second outer light sources 200xb. For example, some of the second outer light sources 200xb may be rotated about 180 degrees with respect to the rest of the second outer light sources 200xb. That is, some of the second outer light sources 200xb may be arranged in a reverse direction, and the rest of the second outer light sources 200xb may be arranged in a forward direction. For example, the second outer light sources 200xb arranged in the forward direction may be arranged alternately with the second outer light sources 200xb arranged in the reverse direction. For example, the second outer light sources 200xb arranged in odd numbers may be arranged in the forward direction, and the second outer light sources 200xb arranged in even numbers may be arranged in the reverse direction.

The second outermost diodes may be composed of a combination of two of the red, green, and blue LEDs 210, 220, and 230. Some of the second outermost diodes may be composed of one of the red, green, and blue LEDs 210, 220, and 230, and the rest of the second outermost diodes may be composed of another one of the red, green, and blue LEDs 210, 220, and 230. For example, the second outermost diodes may be composed of the red and blue LEDs 210 and 230.

Some of the second outermost diodes and the rest of the second outermost diodes may be arranged randomly. Some of the second outermost diodes and the rest of the second outermost diodes may be arranged in a mixed manner. For example, some of the second outermost diodes and the rest of the second outermost diodes may be arranged alternately with each other. For example, the second outermost diodes arranged in odd numbers may be composed of the red LEDs 210, and the second outermost diodes arranged in even numbers may be composed of the blue LEDs 230.

Some of the lights emitted from the second outer light sources 200xb may be irradiated to the second chamfer portion 126Cb. Colored light of the colored light-emitting regions of the second outer light sources 200xb may be irradiated to the second chamfer portion 126Cb. For example, the second outermost diodes may be composed of the red and blue LEDs 210 and 230, and a portion of the light-emitting region of the red and blue LEDs 210 and 230 may form a colored light-emitting region. Red light and blue light may be irradiated to the second chamfer portion 126Cb.

Accordingly, it is possible to provide the backlight unit for the display device with improved color separation. For example, red light and blue light are mixed to be irradiated to the second chamfer portion 126Cb, thereby reducing color separation.

In addition, it is possible to provide the backlight unit for the display device with reduced manufacturing costs. For example, color separation may be reduced by mixing red light and blue light, such that the phosphor 127 on the second chamfer portion 126Cb may be omitted.

In one embodiment, the phosphor 127 may also be provided on the second chamfer portion 126Cb. For example, a green phosphor 127d may be provided on the second chamfer portion 126Cb. The green phosphor 127d may absorb mixed light of red light and blue light and emit white light.

However, in one embodiment, the light irradiated to the first and second chamfer portions 126Ca and 126Cb may vary depending on the characteristics of the protective lenses 240 and 250. For example, a colored light-emitting region of the green LED 220 located at the center of each of the first and second outer light sources 200xa and 200xb may be formed depending on the characteristics of the protective lenses 240 and 250, and green light of the colored light-emitting region may be irradiated to the first and second chamfer portions 126Ca and 126Cb. A magenta phosphor may be provided on the first and second chamfer portions 126Ca and 126Cb. The magenta phosphor may absorb green light and emit white light.

The arrangement direction of the red, green, and blue LEDs 210, 220, and 230 of each of the third outer light sources 200xc may be parallel to the longitudinal direction of the third chamfer portion 126Cc. That is, the red, green, and blue LEDs 210, 220, and 230 may be arranged alternately in the longitudinal direction of the third chamfer portion 126Cc. In this manner, red light, green light, and blue light may be mixed to produce white light, and the white light may be irradiated to the third chamfer portion 126Cc.

Accordingly, the phosphor 127 may not be provided on the third chamfer portion 126Cc, and it is possible to provide the backlight unit for the display device with reduced manufacturing costs.

In addition, it is possible to minimize color separation on the third chamfer portion 126Cc even without using the phosphor 127 separately.

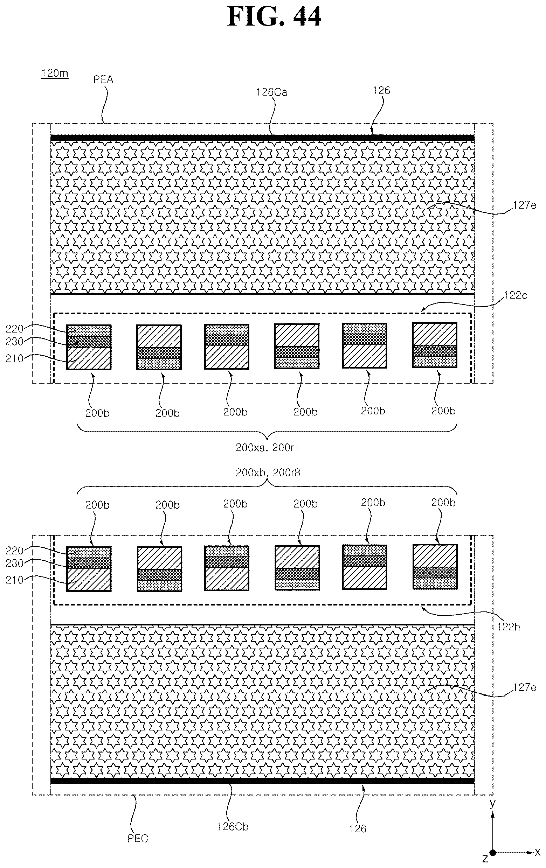

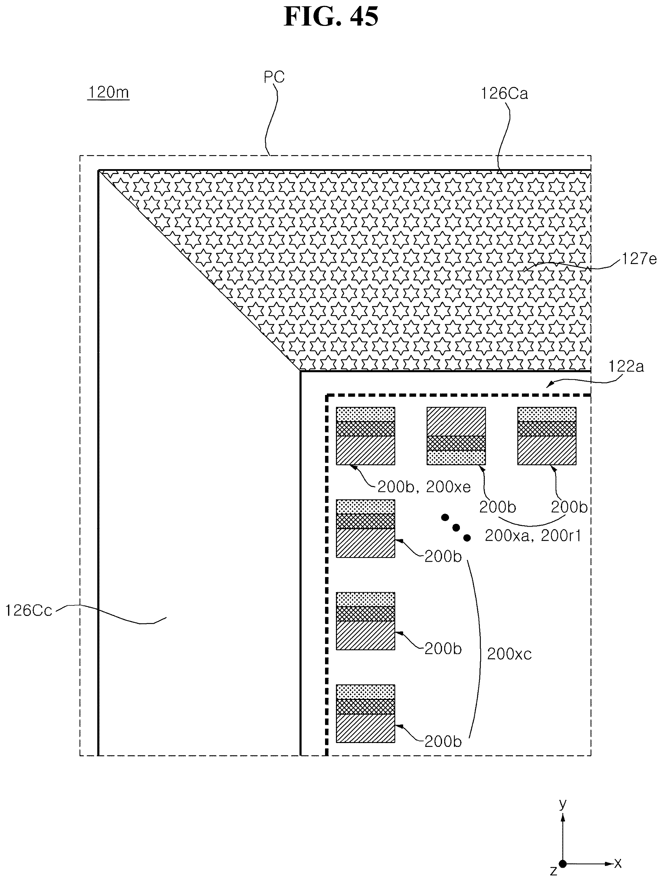

Referring to FIGS. 44 and 45, in one embodiment, the arrangement direction of some of the first outer light sources 200xa may be different from the arrangement direction of the rest of the first outer light sources 200xa. For example, some of the first outer light sources 200xa may be rotated about 180 degrees with respect to the rest of the first outer light sources 200xa. That is, some of the first outer light sources 200xa may be arranged in a reverse direction, and the rest of the first outer light sources 200xa may be arranged in a forward direction. For example, the first outer light sources 200xa arranged in the forward direction may be arranged alternately with the first outer light sources 200xa arranged in the reverse direction. For example, the first outer light sources 200xa arranged in odd numbers may be arranged in the forward direction, and the first outer light sources 200xa arranged in even numbers may be arranged in the reverse direction.

The first outermost diodes may be composed of a combination of two of the red, green, and blue LEDs 210, 220, and 230. Some of the first outermost diodes may be composed of one of the red, green, and blue LEDs 210, 220, and 230, and the rest of the first outermost diodes may be composed of another one of the red, green, and blue LEDs 210, 220, and 230. For example, the first outermost diodes may be composed of the red and green LEDs 210 and 220.

Some of the first outermost diodes and the rest of the first outermost diodes may be arranged randomly. Some of the first outermost diodes and the rest of the first outermost diodes may be arranged in a mixed manner. For example, some of the first outermost diodes and the rest of the first outermost diodes may be arranged alternately with each other. For example, the first outermost diodes arranged in odd numbers may be composed of the green LEDs 220, and the first outermost diodes arranged in even numbers may be composed of the red LEDs 210.

Some of the lights emitted from the first outer light sources 200xa may be irradiated to the first chamfer portion 126Ca. Colored light of the colored light-emitting regions of the first outer light sources 200xa may be irradiated to the first chamfer portion 126Ca. For example, the first outermost diodes may be composed of the red and green LEDs 210 and 220, and a portion of the light-emitting region of the red and green LEDs 210 and 220 may form a colored light-emitting region. Red light and green light may be irradiated to the second chamfer portion 126Cb.

Accordingly, it is possible to provide the backlight unit for the display device with improved color separation. For example, red light and green light are mixed to be irradiated to the first chamfer portion 126Ca, thereby reducing color separation.

In addition, it is possible to provide the backlight unit for the display device with reduced manufacturing costs. For example, color separation may be reduced by mixing red light and blue light, such that the phosphor 127 on the first chamfer portion 126Ca may be omitted.

In one embodiment, the phosphor 127 may also be provided on the first chamfer portion 126Ca. The phosphor 127 may further include a blue phosphor 127e on the first chamfer portion 126Ca. The blue phosphor 127e may absorb mixed light of red light and green light and emit white light.

Likewise, the arrangement direction of some of the second outer light sources 200xb may be different from the arrangement direction of the rest of the second outer light sources 200xb. For example, some of the second outer light sources 200xb may be rotated about 180 degrees with respect to the rest of the second outer light sources 200xb. That is, some of the second outer light sources 200xb may be arranged in a reverse direction, and the rest of the second outer light sources 200xb may be arranged in a forward direction. For example, the second outer light sources 200xb arranged in the forward direction may be arranged alternately with the second outer light sources 200xb arranged in the reverse direction. For example, the second outer light sources 200xb arranged in odd numbers may be arranged in the forward direction, and the second outer light sources 200xb arranged in even numbers may be arranged in the reverse direction.

The second outermost diodes may be composed of a combination of two of the red, green, and blue LEDs 210, 220, and 230. Some of the second outermost diodes may be composed of one of the red, green, and blue LEDs 210, 220, and 230, and the rest of the second outermost diodes may be composed of another one of the red, green, and blue LEDs 210, 220, and 230. For example, the second outermost diodes may be composed of the red and green LEDs 210 and 220.

Some of the second outermost diodes and the rest of the second outermost diodes may be arranged randomly. Some of the second outermost diodes and the rest of the second outermost diodes may be arranged in a mixed manner. For example, some of the second outermost diodes and the rest of the second outermost diodes may be arranged alternately with each other. For example, the second outermost diodes arranged in odd numbers may be composed of the red LEDs 210, and the second outermost diodes arranged in even numbers may be composed of the green LEDs 220.

Some of the lights emitted from the second outer light sources 200xb may be irradiated to the second chamfer portion 126Cb. Colored light of the colored light-emitting regions of the second outer light sources 200xb may be irradiated to the second chamfer portion 126Cb. For example, the second outermost diodes may be composed of the red and green LEDs 210 and 220, and a portion of the light-emitting region of the red and green LEDs 210 and 220 may form a colored light-emitting region. Red light and green light may be irradiated to the second chamfer portion 126Cb.

Accordingly, it is possible to provide the backlight unit for the display device with improved color separation. For example, red light and blue light are mixed to be irradiated to the second chamfer portion 126Cb, thereby reducing color separation.

In addition, it is possible to provide the backlight unit for the display device with reduced manufacturing costs. For example, color separation may be reduced by mixing red light and blue light, such that the phosphor 127 on the second chamfer portion 126Cb may be omitted.

In one embodiment, the phosphor 127 may also be provided on the second chamfer portion 126Cb. For example, a blue phosphor 127e may be provided on the second chamfer portion 126Cb. The blue phosphor 127e may absorb mixed light of red light and green light and emit white light.

However, in one embodiment, the light irradiated to the first and second chamfer portions 126Ca and 126Cb may vary depending on the characteristics of the protective lenses 240 and 250. For example, a colored light-emitting region of the blue LED 230 located at the center of each of the first and second outer light sources 200xa and 200xb may be formed depending on the characteristics of the protective lenses 240 and 250, and blue light of the colored light-emitting region may be irradiated to the first and second chamfer portions 126Ca and 126Cb. A yellow phosphor may be provided on the first and second chamfer portions 126Ca and 126Cb. The yellow phosphor may absorb green light and emit white light.

The arrangement direction of the red, green, and blue LEDs 210, 220, and 230 of each of the third outer light sources 200xc may be parallel to the longitudinal direction of the third chamfer portion 126Cc. That is, the red, blue, and green LEDs 210, 230, and 220 may be arranged alternately in the longitudinal direction of the third chamfer portion 126Cc. In this manner, red light, blue light, and green light may be mixed to produce white light, and the white light may be irradiated to the third chamfer portion 126Cc.

Accordingly, the phosphor 127 may not be provided on the third chamfer portion 126Cc, and it is possible to provide the backlight unit for the display device with reduced manufacturing costs.

In addition, it is possible to minimize color separation on the third chamfer portion 126Cc even without using the phosphor 127 separately.

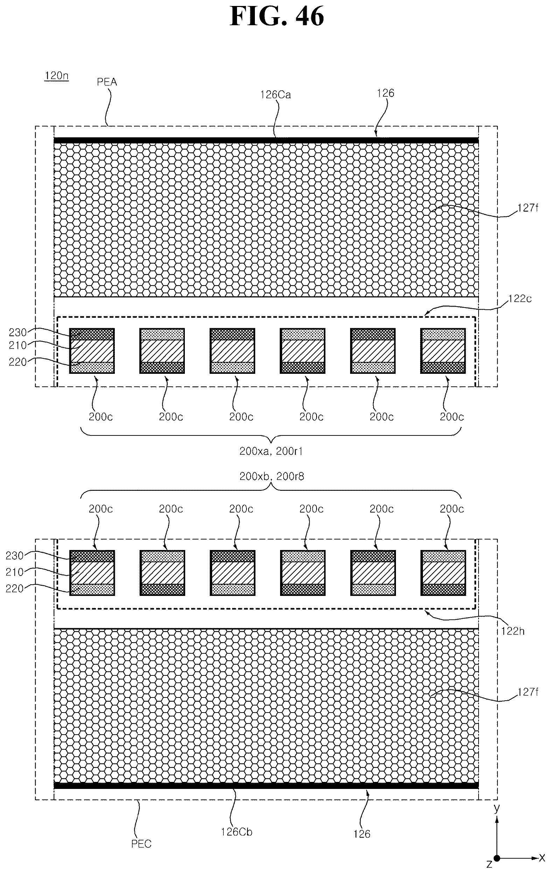

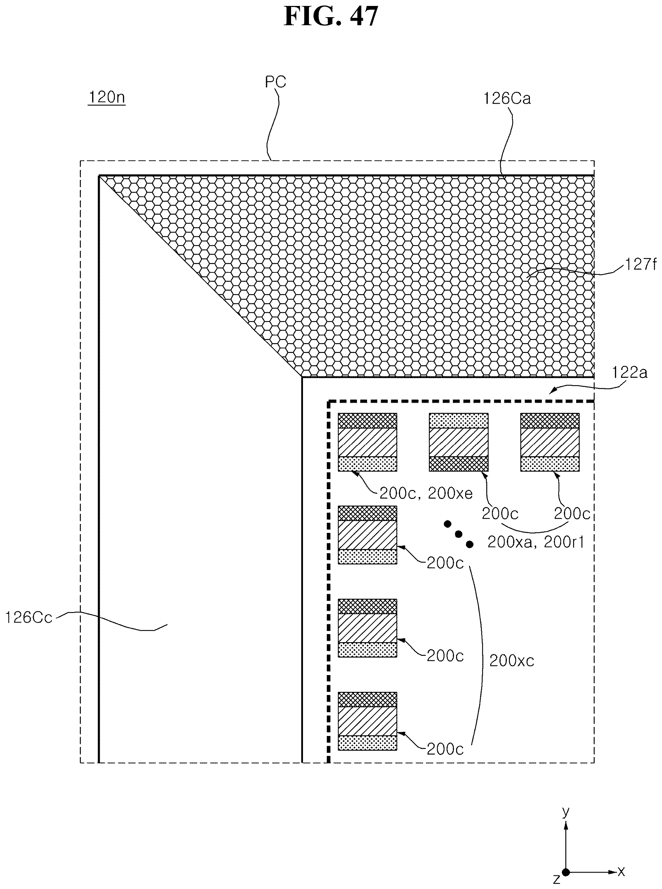

Referring to FIGS. 46 and 47, in one embodiment, the arrangement direction of some of the first outer light sources 200xa may be different from the arrangement direction of the rest of the first outer light sources 200xa. For example, some of the first outer light sources 200xa may be rotated about 180 degrees with respect to the rest of the first outer light sources 200xa. That is, some of the first outer light sources 200xa may be arranged in a reverse direction, and the rest of the first outer light sources 200xa may be arranged in a forward direction. For example, the first outer light sources 200xa arranged in the forward direction may be arranged alternately with the first outer light sources 200xa arranged in the reverse direction. For example, the first outer light sources 200xa arranged in odd numbers may be arranged in the forward direction, and the first outer light sources 200xa arranged in even numbers may be arranged in the reverse direction.

The first outermost diodes may be composed of a combination of two of the red, green, and blue LEDs 210, 220, and 230. Some of the first outermost diodes may be composed of one of the red, green, and blue LEDs 210, 220, and 230, and the rest of the first outermost diodes may be composed of another one of the red, green, and blue LEDs 210, 220, and 230.

For example, the first outermost diodes may be composed of the green and blue LEDs 220 and 230.

Some of the first outermost diodes and the rest of the first outermost diodes may be arranged randomly. Some of the first outermost diodes and the rest of the first outermost diodes may be arranged in a mixed manner. For example, some of the first outermost diodes and the rest of the first outermost diodes may be arranged alternately with each other. For example, the first outermost diodes arranged in odd numbers may be composed of the blue LEDs 230, and the first outermost diodes arranged in even numbers may be composed of the green LEDs 220.

Some of the lights emitted from the first outer light sources 200xa may be irradiated to the first chamfer portion 126Ca. Colored light of the colored light-emitting regions of the first outer light sources 200xa may be irradiated to the first chamfer portion 126Ca. For example, the first outermost diodes may be composed of the green and blue LEDs 220 and 230, and a portion of the light-emitting region of the green and blue LEDs 220 and 230 may form a colored light-emitting region. Green light and blue light may be irradiated to the first chamfer portion 126Ca.

Accordingly, it is possible to provide the backlight unit for the display device with improved color separation. For example, green light and blue light are mixed to be irradiated to the first chamfer portion 126Ca, thereby reducing color separation.

In addition, it is possible to provide the backlight unit for the display device with reduced manufacturing costs. For example, color separation may be reduced by mixing green light and blue light, such that the phosphor 127 on the first chamfer portion 126Ca may be omitted.

In one embodiment, the phosphor 127 may also be provided on the first chamfer portion 126Ca. The phosphor 127 may further include a red phosphor 127f on the first chamfer portion 126Ca. The red phosphor 127f may absorb mixed light of green light and blue light and emit white light.

Likewise, the arrangement direction of some of the second outer light sources 200xb may be different from the arrangement direction of the rest of the second outer light sources 200xb. For example, some of the second outer light sources 200xb may be rotated about 180 degrees with respect to the rest of the second outer light sources 200xb. That is, some of the second outer light sources 200xb may be arranged in a reverse direction, and the rest of the second outer light sources 200xb may be arranged in a forward direction. For example, the second outer light sources 200xb arranged in the forward direction may be arranged alternately with the second outer light sources 200xb arranged in the reverse direction. For example, the second outer light sources 200xb arranged in odd numbers may be arranged in the forward direction, and the second outer light sources 200xb arranged in even numbers may be arranged in the reverse direction.

The second outermost diodes may be composed of a combination of two of the red, green, and blue LEDs 210, 220, and 230. Some of the second outermost diodes may be composed of one of the red, green, and blue LEDs 210, 220, and 230, and the rest of the second outermost diodes may be composed of another one of the red, green, and blue LEDs 210, 220, and 230. For example, the second outermost diodes may be composed of the green and blue LEDs 220 and 230.

Some of the second outermost diodes and the rest of the second outermost diodes may be arranged randomly. Some of the second outermost diodes and the rest of the second outermost diodes may be arranged in a mixed manner. For example, some of the second outermost diodes and the rest of the second outermost diodes may be arranged alternately with each other. For example, the second outermost diodes arranged in odd numbers may be composed of the green LEDs 220, and the second outermost diodes arranged in even numbers may be composed of the blue LEDs 230.

Some of the lights emitted from the second outer light sources 200xb may be irradiated to the second chamfer portion 126Cb. Colored light of the colored light-emitting regions of the second outer light sources 200xb may be irradiated to the second chamfer portion 126Cb. For example, the second outermost diodes may be composed of the green and blue LEDs 220 and 230, and a portion of the light-emitting region of the green and blue LEDs 220 and 230 may form a colored light-emitting region. Green light and blue light may also be irradiated to the second chamfer portion 126Cb.

Accordingly, it is possible to provide the backlight unit for the display device with improved color separation. For example, green light and blue light are mixed to be irradiated to the second chamfer portion 126Cb, thereby reducing color separation.

In addition, it is possible to provide the backlight unit for the display device with reduced manufacturing costs. For example, color separation may be reduced by mixing green light and blue light, such that the phosphor 127 on the second chamfer portion 126Cb may be omitted.

In one embodiment, the phosphor 127 may also be provided on the second chamfer portion 126Cb. For example, the red phosphor 127f may also be provided on the second chamfer portion 126Cb. The red phosphor 127f may absorb mixed light of green light and blue light and emit white light.

However, in one embodiment, the light irradiated to the first and second chamfer portions 126Ca and 126Cb may vary depending on the characteristics of the protective lenses 240 and 250. For example, a colored light-emitting region of the red LED 210 located at the center of each of the first and second outer light sources 200xa and 200xb may be formed depending on the characteristics of the protective lenses 240 and 250, and red light of the colored light-emitting region may be irradiated to the first and second chamfer portions 126Ca and 126Cb. A cyan phosphor may be provided on the first and second chamfer portions 126Ca and 126Cb. The cyan phosphor may absorb red light and emit white light.

The arrangement direction of the red, green, and blue LEDs 210, 220, and 230 of each of the third outer light sources 200xc may be parallel to the longitudinal direction of the third chamfer portion 126Cc. That is, the green, red, and blue LEDs 220, 210, and 230 may be arranged alternately in the longitudinal direction of the third chamfer portion 126Cc. In this manner, red light, blue light, and green light may be mixed to produce white light, and the white light may be irradiated to the third chamfer portion 126Cc.

Accordingly, the phosphor 127 may not be provided on the third chamfer portion 126Cc, and it is possible to provide the backlight unit for the display device with reduced manufacturing costs.

In addition, it is possible to minimize color separation on the third chamfer portion 126Cc even without using the phosphor 127 separately.

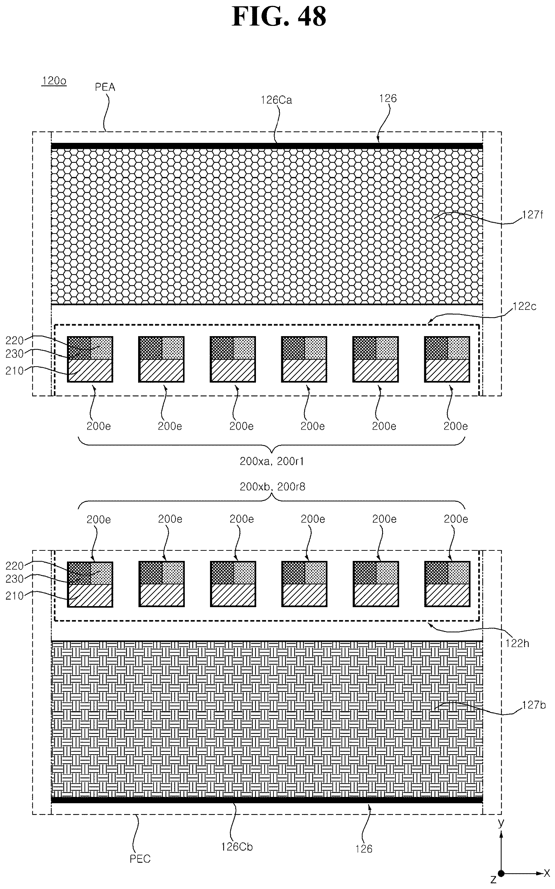

Referring to FIG. 48, in one embodiment, the second outer light sources 200xb may be substantially the same as the first outer light sources 200xa. For example, the structure of each of the second outer light sources 200xb may be substantially the same as the structure of each of the first outer light sources 200xa. For example, the light sources 200e of the eighth substrate 122h may be substantially the same as the light sources 200e of the third substrate 122c.

The arrangement direction of the eighth substrate 122h may be the same as the arrangement direction of the third substrate 122c. For example, the third and eighth substrates 122c and 122h may have first to eighth rows Ra1, Rb1, Rc1, Rd1, Rd2, Rc2, Rb2, and Ra2 that are arranged in a direction opposite to the y direction. The first row Ra1 of the third substrate 122c may form the first row Ro1 of the matrix pattern, and the eighth row Ra2 of the eighth substrate 122h may form the last row RoN of the matrix pattern.

Some of the lights emitted from the light sources 200e arranged in the first row Ra1 of the third substrate 122c may be irradiated to the first chamfer portion 126Ca. For example, colored light of the colored light-emitting regions of the first outer light sources 200xa of the third substrate 122c may be irradiated to the first chamfer portion 126Ca.

Each of the first outer light sources 200xa of the third substrate 122c may include a plurality of first outermost didoes. The first outermost diodes may be composed of a combination of two of the red, green, and blue LEDs 210, 220, and 230. Some of the first outermost diodes may be composed of one of the red, green, and blue LEDs 210, 220, and 230, and the rest of the first outermost diodes may be composed of another one of the red, green, and blue LEDs 210, 220, and 230. For example, each of the first outer light sources 200xa may include the first outermost diodes composed of the green and blue LEDs 220 and 230.

Some of the first outermost diodes and the rest of the first outermost diodes may be arranged in a mixed manner. Some of the first outermost diodes and the rest of the first outermost diodes may be arranged alternately with each other. For example, the green and blue LEDs 220 and 230 of the first outer light sources 200xa may be arranged alternately with each other in the x direction.

Some of the lights emitted from the first outer light sources 200xa may be irradiated to the first chamfer portion 126Ca. Colored light of the colored light-emitting regions of the first outer light sources 200xa may be irradiated to the first chamfer portion 126Ca. For example, the first outermost diodes may be composed of the green and blue LEDs 220 and 230, and a portion of the light-emitting region of the green and blue LEDs 220 and 230 may form a colored light-emitting region. Green light and blue light may be irradiated to the second chamfer portion 126Cb.

Accordingly, it is possible to provide the backlight unit for the display device with improved color separation. For example, green light and blue light are mixed to be irradiated to the first chamfer portion 126Ca, thereby reducing color separation.

In addition, it is possible to provide the backlight unit for the display device with reduced manufacturing costs. For example, color separation may be reduced by mixing green light and blue light, such that the phosphor 127 on the first chamfer portion 126Ca may be omitted.

In one embodiment, the phosphor 127 may also be provided on the first chamfer portion 126Ca. For example, a red phosphor 127f may be provided on the first chamfer portion 126Ca. The red phosphor 127f may absorb mixed light of green light and blue light and emit white light.

Some of the lights emitted from the light sources 200 arranged in the eighth row Ra2 of the eighth substrate 122h may be irradiated to the second chamfer portion 126Cb. Colored light of the colored light-emitting regions of the light sources 200 arranged in the eighth row Ra2 of the eighth substrate 122h may be irradiated to the second chamfer portion 126Cb.

Each of the second outer light sources 200xb of the eighth substrate 122h may include second outermost diodes closest to the second chamfer portion 126Cb. For example, each of the second outer light sources 200xb may include the second outermost diodes closest to the second chamfer portion 126Cb, and the second outermost diodes may be composed of the red LEDs 210. The colors of the second outermost diodes may be the same. For example, the second outer light sources 200xb arranged in the last row RoN of the matrix pattern may be arranged in the same direction, and the second outermost diodes may be composed of the red LEDs 210.

The second outermost diode may have a colored light-emitting region. Colored light of the colored light-emitting region of the second outermost diode may be irradiated to the second chamfer portion 126Cb. For example, some of the light-emitting regions of the red LEDs 210 closest to the second chamfer portion 126Cb may form a white light-emitting region, while the rest of the light-emitting regions of the red LEDs 210 may form a red colored light-emitting region. Red light of the colored light-emitting region may be irradiated to the second chamfer portion 126Cb.

A phosphor 127 may be provided on the second chamfered portion 126Cb. A cyan phosphor 127 may be provided on the second chamfered portion 126Cb. The cyan phosphor 127 may face the second outermost diodes composed of the red LEDs 210. In this manner, the cyan phosphor 127 may absorb red light of the red LEDs 210 and emit white light.

However, in one embodiment, the light irradiated to the second chamfer portion 126Cb may vary depending on the characteristics of the protective lenses 240 and 250. For example, some of the light-emitting regions of the green and blue LEDs 220 and 230 located inside each of the second outer light sources 200xb may form the colored light-emitting region, and green light and blue light may be irradiated to the second chamfer portion 126Cb. A red phosphor may be provided on the second chamfer portion 126Cb. The red phosphor may absorb mixed light of green light and blue light and emit white light.

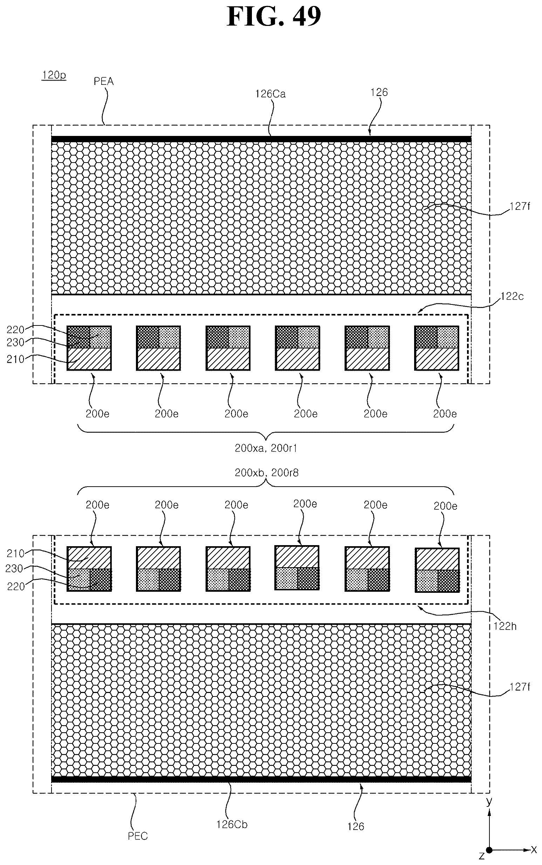

Referring to FIG. 49 together with FIG. 48, the arrangement direction of the second outer light sources 200xb may be different from the arrangement direction of the first outer light sources 200xa. For example, each of the second outer light sources 200xb may be rotated about 180 degrees with respect to the first outer light sources 200xa. That is, the first outer light sources 200xa may be arranged in a forward direction, and the second outer light sources 200xb may be arranged in a reverse direction.

Each of the second outer light sources 200xb of the eighth substrate 122h may include a plurality of second outermost didoes. For example, each of the second outer light sources 200xb may include the green and blue LEDs 220 and 230 that are next to each other and adjacent to the second chamfer portion 126Cb. Each of the green and blue LEDs 220 and 230 may have a substantially square shape. Light-emitting areas of the green and blue LEDs 220 and 230 may be substantially equal to each other.

The second outermost diodes may be composed of a combination of two of the red, green, and blue LEDs 210, 220, and 230. Some of the second outermost diodes may be composed of one of the red, green, and blue LEDs 210, 220, and 230, and the rest of the second outermost diodes may be composed of another one of the red, green, and blue LEDs 210, 220, and 230. For example, each of the first outer light sources 200xa may include the second outermost diodes composed of the green and blue LEDs 220 and 230.

Some of the second outermost diodes and the rest of the second outermost diodes may be arranged in a mixed manner. Some of the second outermost diodes and the rest of the second outermost diodes may be arranged alternately with each other. For example, the green and blue LEDs 220 and 230 of the second outer light sources 200xb may be arranged alternately with each other.

Some of the lights emitted from the second outer light sources 200xb may be irradiated to the second chamfer portion 126Cb. Colored light of the colored light-emitting regions of the second outer light sources 200xb may be irradiated to the second chamfer portion 126Cb. For example, the second outermost diodes may include the green and blue LEDs 220 and 230, and a portion of the light-emitting region of the green and blue LEDs 220 and 230 may form the colored light-emitting region. Green light and blue light may be irradiated to the second chamfer portion 126Cb.

Accordingly, it is possible to provide the backlight unit for the display device with improved color separation. For example, green light and blue light are mixed to be irradiated to the second chamfer portion 126Cb, thereby reducing color separation.

In addition, it is possible to provide the backlight unit for the display device with reduced manufacturing costs. For example, color separation may be reduced by mixing green light and blue light, such that the phosphor 127 on the second chamfer portion 126Cb may be omitted.

In one embodiment, the phosphor 127 may also be provided on the second chamfer portion 126Cb. A red phosphor 127f may be provided on the second chamfer portion 126Cb. The red phosphor 127f may absorb mixed light of green light and blue light and emit white light.

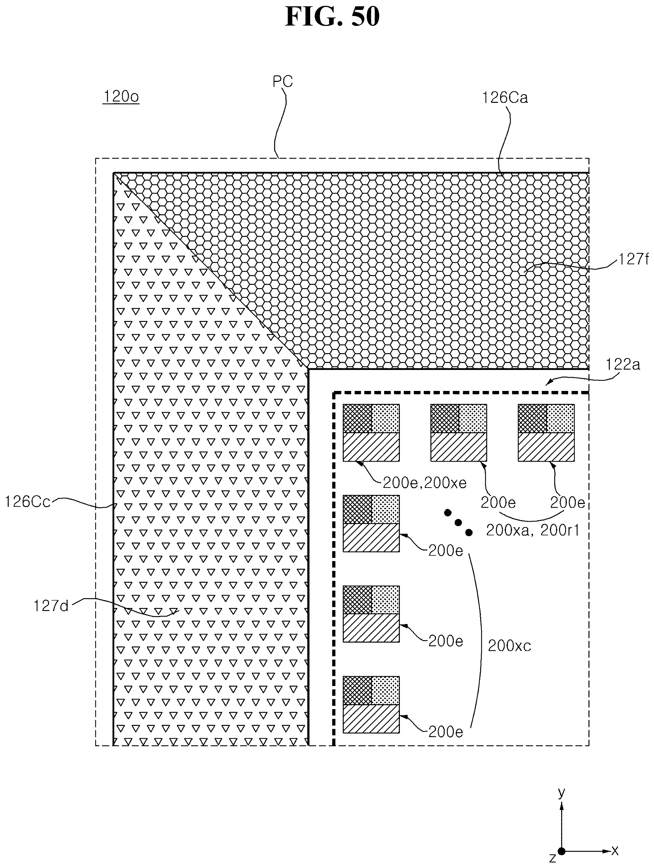

Referring to FIG. 50 together with FIG. 48, in one embodiment, some of the lights emitted from the light sources 200 arranged in the first row Ra1 of the first substrate 122a may be irradiated to the first chamfer portion 126Ca. For example, colored light of the colored light-emitting regions of the first outer light sources 200xa of the first substrate 122a may be irradiated to the first chamfer portion 126Ca.

Each of the first outer light sources 200xa of the first substrate 122a may include a plurality of first outermost didoes. For example, each of the first outer light sources 200xa may include the green and blue LEDs 220 and 230 that are next to each other and adjacent to the first chamfer portion 126Ca.

The first outermost diodes may be composed of a combination of two of the red, green, and blue LEDs 210, 220, and 230. Some of the first outermost diodes may be composed of one of the red, green, and blue LEDs 210, 220, and 230, and the rest of the first outermost diodes may be composed of another one of the red, green, and blue LEDs 210, 220, and 230. For example, each of the first outer light sources 200xa may include the first outermost diodes composed of the green and blue LEDs 220 and 230.

Some of the first outermost diodes and the rest of the first outermost diodes may be arranged in a mixed manner. Some of the first outermost diodes and the rest of the first outermost diodes may be arranged alternately with each other. For example, the green and blue LEDs 220 and 230 of the first outer light sources 200xa may be arranged alternately with each other in the x direction.

Some of the lights emitted from the first outer light sources 200xa may be irradiated to the first chamfer portion 126Ca. Colored light of the colored light-emitting regions of the first outer light sources 200xa may be irradiated to the first chamfer portion 126Ca. For example, the first outermost diodes may be composed of the green and blue LEDs 220 and 230, and a portion of the light-emitting region of the green and blue LEDs 220 and 230 may form the colored light-emitting region. Green light and blue light may be irradiated to the first chamfer portion 126Ca.

Accordingly, it is possible to provide the backlight unit for the display device with improved color separation. For example, green light and blue light are mixed to be irradiated to the first chamfer portion 126Ca, thereby reducing color separation.

In addition, it is possible to provide the backlight unit for the display device with reduced manufacturing costs. For example, color separation may be reduced by mixing green light and blue light, such that the phosphor 127 on the first chamfer portion 126Ca may be omitted.

In one embodiment, the phosphor 127 may also be provided on the first chamfer portion 126Ca. A red phosphor 127f may be provided on the first chamfer portion 126Ca. The red phosphor 127f may absorb mixed light of green light and blue light and emit white light.

Some of the lights emitted from the light sources 200 arranged in the first column of the first substrate 122a may be irradiated to the third chamfer portion 126Cc. For example, colored light of the colored light-emitting regions of the third outer light sources 200xc may be irradiated to the third chamfer portion 126Cc.

Each of the third outer light sources 200xc of the first substrate 122a may include a plurality of third outermost didoes. For example, each of the third outer light sources 200xc may include the red and blue LEDs 210 and 230 that are next to each other and closest to the third chamfer portion 126Cc.

The third outermost diodes may be composed of a combination of two of the red, green, and blue LEDs 210, 220, and 230. Some of the third outermost diodes may be composed of one of the red, green, and blue LEDs 210, 220, and 230, and the rest of the third outermost diodes may be composed of another one of the red, green, and blue LEDs 210, 220, and 230. For example, each of the third outer light sources 200xc may include the third outermost diodes composed of the red and blue LEDs 210 and 230.

Some of the third outermost diodes and the rest of the third outermost diodes may be arranged in a mixed manner. Some of the third outermost diodes and the rest of the third outermost diodes may be arranged alternately with each other. For example, the red and blue LEDs 210 and 230 of the third outer light sources 200xc may be arranged alternately with each other in the y direction.

Some of the lights emitted from the third outer light sources 200xc may be irradiated to the third chamfer portion 126Cc. Colored light of the colored light-emitting regions of the third outer light sources 200xc may be irradiated to the third chamfer portion 126Cc. For example, the third outermost diodes may be composed of the red and blue LEDs 210 and 230, and a portion of the light-emitting region of the red and blue LEDs 210 and 230 may form the colored light-emitting region. Red light and blue light may be irradiated to the third chamfer portion 126Cc.

Accordingly, it is possible to provide the backlight unit for the display device with improved color separation. For example, red light and blue light are mixed to be irradiated to the third chamfer portion 126Cc, thereby reducing color separation.

In addition, it is possible to provide the backlight unit for the display device with reduced manufacturing costs. For example, color separation may be reduced by mixing red light and blue light, such that the phosphor 127 on the first chamfer portion 126Ca may be omitted.

In one embodiment, the phosphor 127 may also be provided on the third chamfer portion 126Cc. A green phosphor 127d may be provided on the third chamfer portion 126Cc. The green phosphor 127d may absorb mixed light of red light and blue light and emit white light.

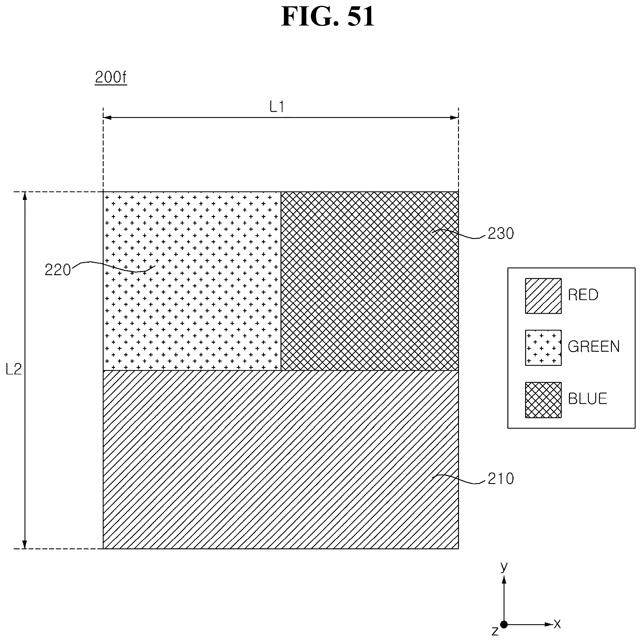

Referring to FIG. 51 together with FIG. 24, in one embodiment, red, green, and blue LEDs 210, 220, and 230 of a light source 200f may be arranged sequentially. For example, the red, green, and blue LEDs 210, 220, and 230 of the light source 200f may be arranged sequentially in a clockwise direction.

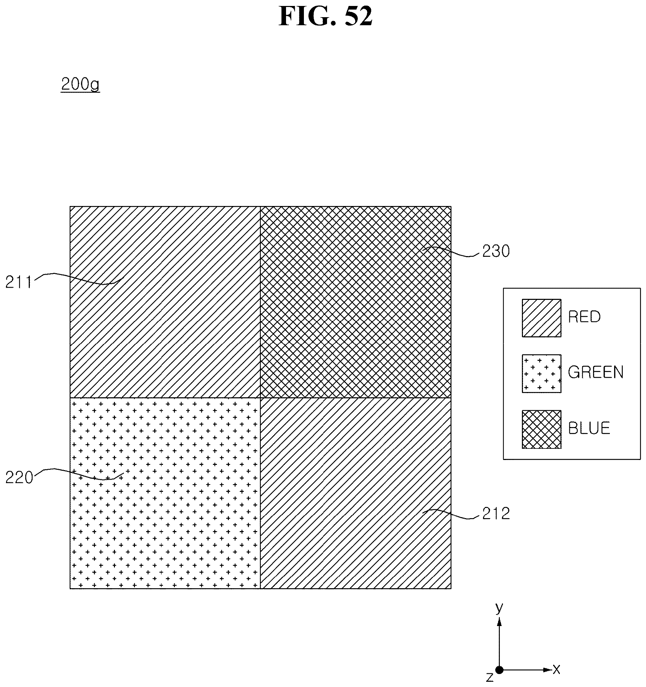

Referring to FIG. 52, in one embodiment, the red LED 210 may include a first red LED 211 and a second red LED 212. Each of the first red LED 211 and the second red LED 212 may have a substantially square shape. A light-emitting area of the first red LED 211 or the second red LED 212 may be substantially equal to a light-emitting area of the green LED 220 or the blue LED 230.

The first and second red LEDs 211 and 212 may not be next to each other. The first and second red LEDs 211 and 212 may be spaced apart from each other. The green and blue LEDs 220 and 230 may be disposed between the first and second red LEDs 211 and 212. For example, the first red LED 211, the blue LED 230, the second red LED 212, and the green LED 220 may be arranged sequentially in the clockwise direction.

Accordingly, heat dissipation performance of the red LED 210 can be improved. For example, as the first and second red LEDs 211 and 212 are spaced apart from each other, concentration of heat generated by the first and second red LEDs 211 and 212 can be minimized.

In addition, performance degradation of the red LED 210 due to heat can be minimized.

Further, the ability of the light source 200g to produce white light can be improved.

Moreover, the backlight unit 120 for the display device capable of improving color gamut and/or luminance can be provided.

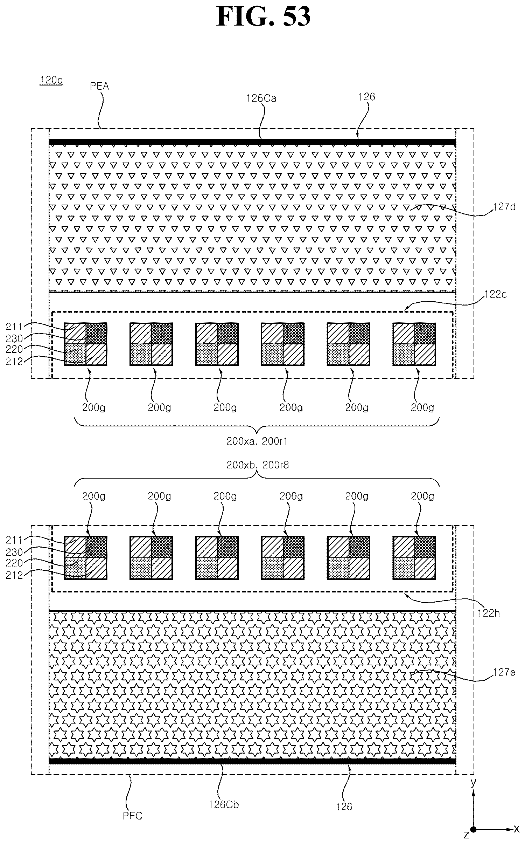

Referring to FIG. 53 together with FIGS. 11 and 27, in one embodiment, the second outer light sources 200xb may be substantially the same as the first outer light sources 200xa. For example, the structure of each of the second outer light sources 200xb may be substantially the same as the structure of each of the first outer light sources 200xa.

The arrangement direction of the eighth substrate 122h may be the same as the arrangement direction of the third substrate 122c. For example, the third and eighth substrates 122c and 122h may have first to eighth rows Ra1, Rb1, Rc1, Rd1, Rd2, Rc2, Rb2, and Ra2 that are arranged in a direction opposite to the y direction. The first row Ra1 of the third substrate 122c may form the first row Ro1 of the matrix pattern, and the eighth row Ra2 of the eighth substrate 122h may form the last row RoN of the matrix pattern.

Some of the lights emitted from the light sources 200g arranged in the first row Ra1 of the third substrate 122c may be irradiated to the first chamfer portion 126Ca. For example, colored light of the colored light-emitting regions of the first outer light sources 200xa of the third substrate 122c may be irradiated to the first chamfer portion 126Ca.

Each of the first outer light sources 200xa of the third substrate 122c may include a plurality of first outermost didoes. The first outermost diodes may be composed of a combination of two of the first and second red LEDs 211 and 212 and the green and blue LEDs 220 and 230. Some of the first outermost diodes may be composed of one of the first and second red LEDs 211 and 212 and the green and blue LEDs 220 and 230, and the rest of the first outermost diodes may be composed of another one of the first and second red LEDs 211 and 212 and the green and blue LEDs 220 and 230. For example, each of the first outer light sources 200xa may include the first outermost diodes composed of the first red LED 211 and the blue LED 230.

Some of the first outermost diodes and the rest of the first outermost diodes may be arranged in a mixed manner. Some of the first outermost diodes and the rest of the first outermost diodes may be arranged alternately with each other. For example, the first red LEDs 211 and the blue LEDs 230 of the first outer light sources 200xa may be arranged alternately with each other in the x direction.

Some of the lights emitted by the first outer light sources 200xa may be irradiated to the first chamfer portion 126Ca. Colored light of the colored light-emitting regions of the first outer light sources 200xa may be irradiated to the first chamfer portion 126Ca. For example, the first outermost diodes may be composed of the first red LEDs 211 and the blue LEDs 230, and some of the light-emitting regions of the first red LED 211 and the blue LED 230 may form the colored light-emitting region. Red light and blue light may be irradiated to the first chamfer portion 126Ca.

Accordingly, it is possible to provide the backlight unit for the display device with improved color separation. For example, red light and blue light are mixed to be irradiated to the first chamfer portion 126Ca, thereby reducing color separation.

In addition, it is possible to provide the backlight unit for the display device with reduced manufacturing costs. For example, color separation may be reduced by mixing red light and blue light, such that the phosphor 127 on the first chamfer portion 126Ca may be omitted.

In one embodiment, the phosphor 127 may also be provided on the first chamfer portion 126Ca. A green phosphor 127d may be provided on the first chamfer portion 126Ca. The green phosphor 127d may absorb mixed light of red light and blue light and emit white light.

Some of the lights emitted from the light sources 200g arranged in the eighth row Ra2 of the eighth substrate 122h may be irradiated to the second chamfer portion 126Cb. Colored light of the colored light-emitting regions of the second outer light sources 200xb of the eighth substrate 122h may be irradiated to the second chamfer portion 126Cb.

Each of the second outer light sources 200xb of the eighth substrate 122h may include a plurality of second outermost diodes. The second outermost diodes may be composed of a combination of two of the first red LED 211, the second red LED 212, the green LED 220, and the blue LED 230. Some of the second outermost diodes may be composed of one of the first red LED 211, the second red LED 212, the green LED 220, and the blue LED 230, and the rest of the second outermost diodes may be composed of another one of the first red LED 211, the second red LED 212, the green LED 220, and the blue LED 230. For example, each of the second outer light sources 200xb may include the second outermost diodes corresponding to the second red LED 212 and the green LED 220.

Some of the second outermost diodes and the rest of the second outermost diodes may be arranged in a mixed manner. Some of the second outermost diodes and the rest of the second outermost diodes may be arranged alternately with each other. For example, the second red LEDs 212 and the green LEDs 220 of the second outer light sources 200xb may be arranged alternately with each other in the x direction.

Some of the lights emitted from the second outer light sources 200xb may be irradiated to the second chamfer portion 126Cb. Colored light of the colored light-emitting regions of the second outer light sources 200xb may be irradiated to the second chamfer portion 126Cb. For example, the second outermost diodes may be composed of the second red LEDs 211 and the green LEDs 220, and some of the light-emitting regions of the second red LEDs 212 and the green LEDs 220 may form the colored light-emitting region. Red light and green light may be irradiated to the second chamfer portion 126Cb.

Accordingly, it is possible to provide the backlight unit for the display device with improved color separation. For example, red light and green light are mixed to be irradiated to the second chamfer portion 126Cb, thereby reducing color separation.

In addition, it is possible to provide the backlight unit for the display device with reduced manufacturing costs. For example, color separation may be reduced by mixing red light and green light, such that the phosphor 127 on the second chamfer portion 126Cb may be omitted.

In one embodiment, the phosphor 127 may also be provided on the second chamfer portion 126Cb. A blue phosphor 127e may be provided on the second chamfer portion 126Cb. The blue phosphor 127e may absorb mixed light of red light and green light and emit white light.

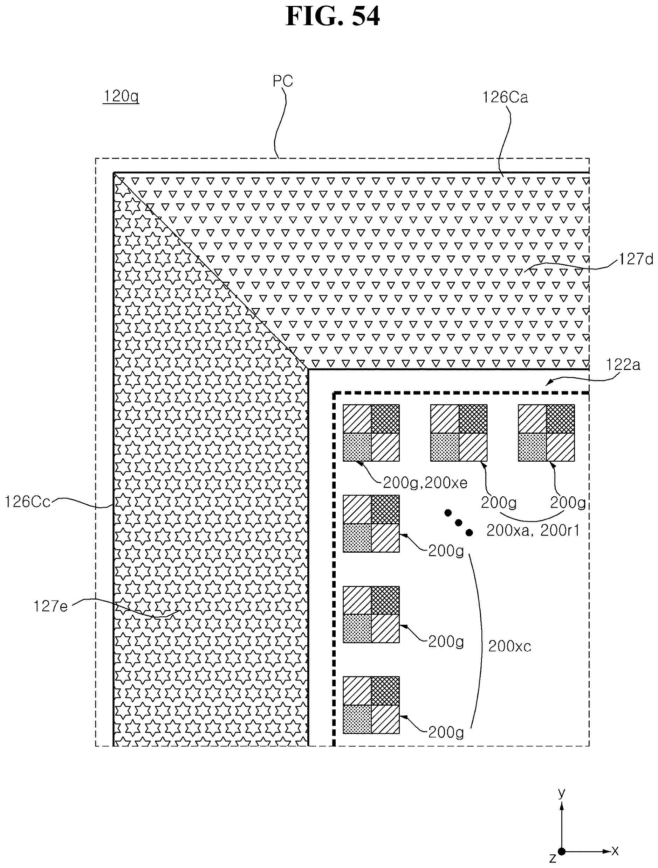

Referring to FIG. 54 together with FIG. 52, in one embodiment, some of the lights emitted from the light sources 200g arranged in the first row Ra1 of the first substrate 122a may be irradiated to the first chamfer portion 126Ca. For example, colored light of the colored light-emitting regions of the first outer light sources 200xa of the first substrate 122a may be irradiated to the first chamfer portion 126Ca.

Each of the first outer light sources 200xa of the first substrate 122a may include a plurality of first outermost didoes. For example, each of the first outer light sources 200xa may include the first red LED 211 and the blue LED 230 that are next to each other and closest to the first chamfer portion 126Ca.

The first outermost diodes may be composed of a combination of two of the first red LED 211, the second red LED 212, the green LED 220, and the blue LED 230. Some of the first outermost diodes may be composed of one of the first red LED 211, the second red LED 212, the green LED 220, and the blue LED 230, and the rest of the first outermost diodes may be composed of another one of the first red LED 211, the second red LED 212, the green LED 220, and the blue LED 230. For example, each of the first outer light sources 200xa may include the first outermost diodes composed of the first red LED 211 and the blue LED 230.

Some of the first outermost diodes and the rest of the first outermost diodes may be arranged in a mixed manner. Some of the first outermost diodes and the rest of the first outermost diodes may be arranged alternately with each other. For example, the first red LED 211 and the blue LED 230 of the first outer light source 200xa may be arranged alternately with each other in the x direction.

Some of the lights emitted from the first outer light sources 200xa may be irradiated to the first chamfer portion 126Ca. Colored light of the colored light-emitting regions of the first outer light sources 200xa may be irradiated to the first chamfer portion 126Ca. For example, the first outermost diodes may be composed of the first red LED 211 and the blue LED 230, and some of the light-emitting regions of the first red LED 211 and the blue LED 230 may form the colored light-emitting region. Red light and blue light may be irradiated to the first chamfer portion 126Ca.

Accordingly, it is possible to provide the backlight unit for the display device with improved color separation. For example, red light and blue light are mixed to be irradiated to the first chamfer portion 126Ca, thereby reducing color separation.

In addition, it is possible to provide the backlight unit for the display device with reduced manufacturing costs. For example, color separation may be reduced by mixing red light and blue light, such that the phosphor 127 on the first chamfer portion 126Ca may be omitted.

In one embodiment, the phosphor 127 may also be provided on the first chamfer portion 126Ca. A green phosphor 127d may be provided on the first chamfer portion 126Ca. The green phosphor 127d may absorb mixed light of red light and blue light and emit white light.

Some of the lights emitted from the light sources 200 arranged in the first column of the first substrate 122a may be irradiated to the third chamfer portion 126Cc. The colored light of the colored light-emitting regions of the light sources 200g arranged in the first column of the first substrate 122a may be irradiated to the third chamfer portion 126Cc.

Each of the third outer light sources 200xc of the first substrate 122a may include a plurality of third outermost didoes. For example, each of the third outer light sources 200xc may include the first red LED 211 and the green LED 220 that are next to each other and closest to the third chamfer portion 126Cc.

The third outermost diodes may be composed of a combination of two of the first red LED 211, the second red LED 212, the green LED 220, and the blue LED 230. Some of the third outermost diodes may be composed of one of the first red LED 211, the second red LED 212, the green LED 220, and the blue LED 230, and the rest of the third outermost diodes may be composed of another one of the first red LED 211, the second red LED 212, the green LED 220, and the blue LED 230. For example, each of the third outer light sources 200xc may include the third outermost diodes composed of the first red LED 211 and the green LED 220.

Some of the third outermost diodes and the rest of the third outermost diodes may be arranged in a mixed manner. Some of the third outermost diodes and the rest of the third outermost diodes may be arranged alternately with each other. For example, the first red LED 211 and the green LED 220 of the third outer light source 200xc may be arranged alternately with each other in the y direction.

Some of the lights emitted from the third outer light sources 200xc may be irradiated to the third chamfer portion 126Cc. Colored light of the colored light-emitting regions of the third outer light sources 200xc may be irradiated to the third chamfer portion 126Cc. For example, the third outermost diodes may be composed of the first red LED 211 and the green LED 220, and some of the light-emitting regions of the first red LED 211 and the green LED 220 may form the colored light-emitting region. Red light and green light may be irradiated to the third chamfer portion 126Cc.

Accordingly, it is possible to provide the backlight unit for the display device with improved color separation. For example, red light and green light are mixed to be irradiated to the third chamfer portion 126Cc, thereby reducing color separation.

In addition, it is possible to provide the backlight unit for the display device with reduced manufacturing costs. For example, color separation may be reduced by mixing red light and green light, such that the phosphor 127 on the first chamfer portion 126Ca may be omitted.

In one embodiment, the phosphor 127 may also be provided on the third chamfer portion 126Cc. For example, a blue phosphor 127e may be provided on the third chamfer portion 126Cc. The blue phosphor 127e may absorb mixed light of red light and green light and emit white light.

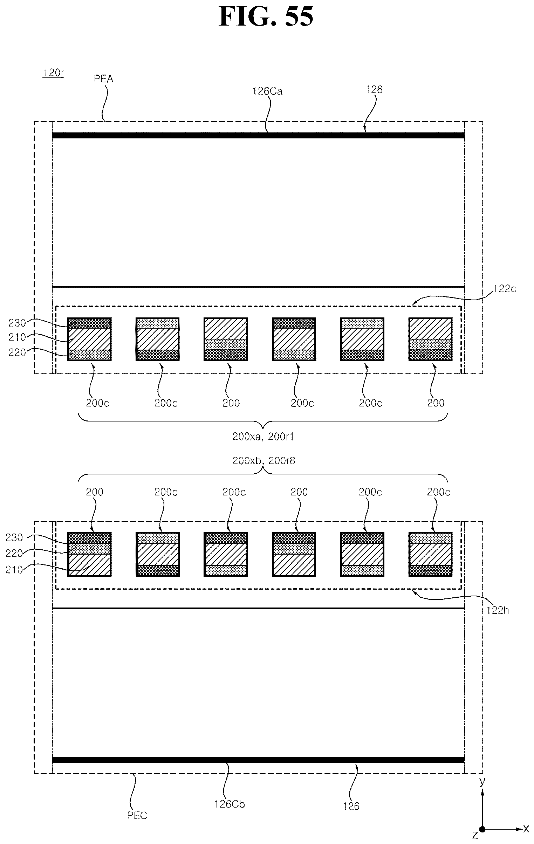

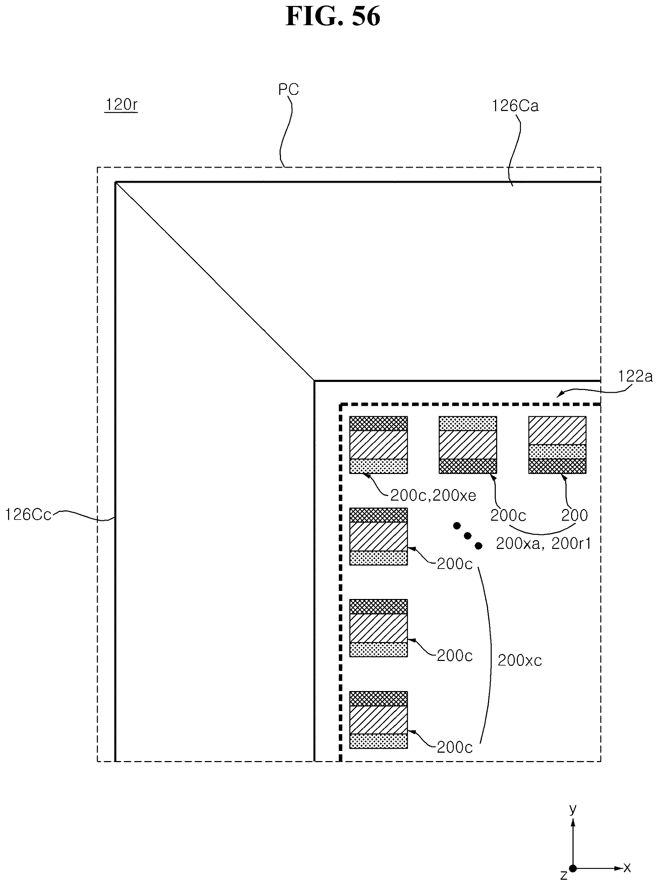

Referring to FIGS. 55 and 56, in one embodiment, the first outermost diodes may be composed of a combination of the red, green, and blue LEDs 210, 220, and 230. A portion of the first outermost diodes may correspond to red color. Another portion of the first outermost diodes may correspond to green color. A remaining portion of the first outermost diodes may correspond to blue color. The numbers of the red, green, and blue LEDs 210, 220, and 230 in the first outermost diodes may be different from each other.

The red, green, and blue LEDs 210, 220, and 230 in the first outermost diodes may be arranged randomly. For example, the red, green, and blue LEDs 210, 220, and 230 in the first outermost diodes may be arranged in a mixed manner.

Accordingly, it is possible to provide the backlight unit for the display device with improved color separation. For example, red light, green light, and blue light are mixed to be irradiated to the first chamfer portion 126Ca, thereby reducing color separation.

In addition, it is possible to provide the backlight unit for the display device with reduced manufacturing costs. For example, color separation may be reduced by mixing red light, green light, and blue light, such that the phosphor 127 on the first chamfer portion 126Ca may be omitted.

Likewise, the second outermost diodes may be composed of a combination of the red, green, and blue LEDs 210, 220, and 230. A portion of the second outermost diodes may correspond to red color. Another portion of the second outermost diodes may correspond to green color. A remaining portion of the second outermost diodes may correspond to blue color. The numbers of the red, green, and blue LEDs 210, 220, and 230 in the second outermost diodes may be different from each other.

The red, green, and blue LEDs 210, 220, and 230 in the second outermost diodes may be arranged randomly. For example, the red, green, and blue LEDs 210, 220, and 230 in the second outermost diodes may be arranged in a mixed manner.

Accordingly, it is possible to provide the backlight unit for the display device with improved color separation. For example, mixed light of red light, green light, and blue light is irradiated to the second chamfer portion 126Cb, thereby reducing color separation.

In addition, it is possible to provide the backlight unit for the display device with reduced manufacturing costs. For example, red light, green light, and blue light are mixed to reduce color separation, such that the phosphor 127 on the second chamfer portion 126Cb may be omitted.

The third outer light sources 200xc may include the red, green, and blue LEDs 210, 220, and 230. The red, green, and blue LEDs 210, 220, and 230 of each of the third outer light sources 200xc may be arranged sequentially in the column direction (e.g., y direction) of the matrix pattern.

The arrangement direction of the red, green, and blue LEDs 210, 220, and 230 of each of the third outer light sources 200xc may be parallel to the longitudinal direction of the third chamfer portion 126Cc. That is, the red, green, and blue LEDs 210, 220, and 230 may be arranged alternately in the longitudinal direction of the third chamfer portion 126Cc. In this manner, red light, green light, and blue light may be mixed to produce white light, and the white light may be irradiated to the third chamfer portion 126Cc.

Accordingly, the phosphor 127 may not be provided on the third chamfer portion 126Cc, it is possible to provide the backlight unit for the display device with reduced manufacturing costs.

In addition, it is possible to minimize color separation on the third chamfer portion 126Cc even without using the phosphor 127 separately.

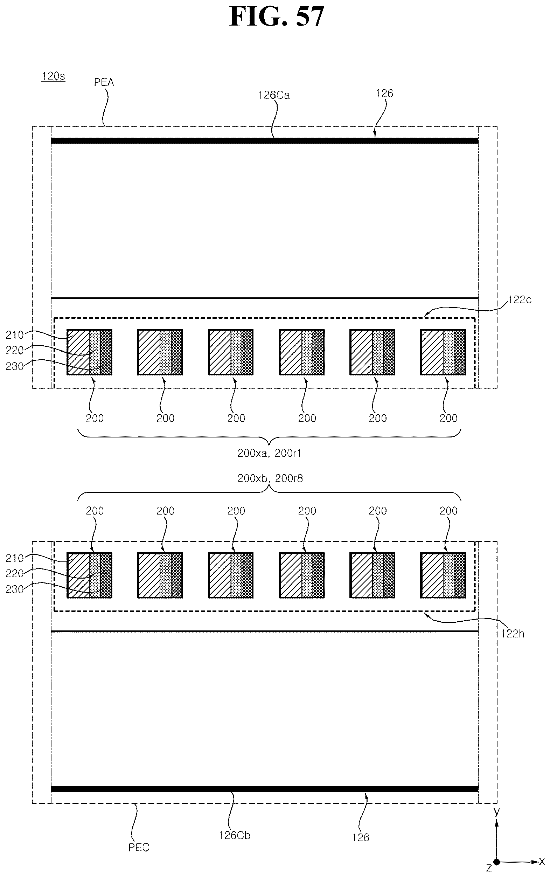

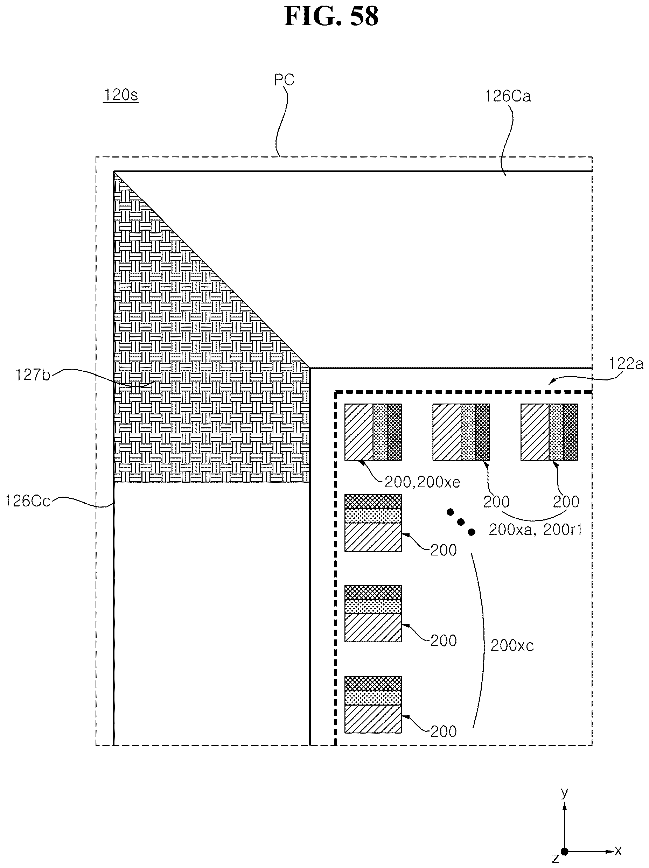

Referring to FIGS. 57 and 58, in one embodiment, the first outer light sources 200xa may include the red, green, and blue LEDs 210, 220, and 230. The red, green, and blue LEDs 210, 220, and 230 of each of the first outer light sources 200xa may be arranged in the row direction (e.g., x direction) of the matrix pattern regardless of order.

The arrangement direction of the red, green, and blue LEDs 210, 220, and 230 of each of the first outer light sources 200xa may be parallel to the longitudinal direction of the first chamfer portion 126Ca. That is, the red, green, and blue LEDs 210, 220, and 230 of each of the first outer light sources 200xa may be arranged in the longitudinal direction of the first chamfer portion 126Ca regardless of order. For example, the red, green, and blue LEDs 210, 220, and 230 may be arranged alternately in the longitudinal direction of the first chamfer portion 126Ca. In this manner, red light, green light, and blue light may be mixed to produce white light, and the white light may be irradiated to the first chamfer portion 126Ca.

Accordingly, the phosphor 127 may not be provided on the first chamfer portion 126Ca, and it is possible to provide the backlight unit for the display device with reduced manufacturing costs.

In addition, it is possible to minimize color separation on the first chamfer portion 126Ca even without using the phosphor 127 separately.

The third outer light sources 200xc may include the red, green, and blue LEDs 210, 220, and 230. The red, green, and blue LEDs 210, 220, and 230 of each of at least some of the third outer light sources 200xc may be arranged in the column direction (e.g., y direction) of the matrix pattern regardless of order. For example, each of the third outer light sources 200xc, except the corner light source 200xe, may include the red, green, and blue LEDs 210, 220, and 230 that are arranged sequentially in the y direction.

The arrangement direction of the red, green, and blue LEDs 210, 220, and 230 of each of the third outer light sources 200xc may be parallel to the longitudinal direction of the third chamfer portion 126Cc. That is, the red, green, and blue LEDs 210, 220, and 230 of each of the third outer light sources 200xc may be arranged in the longitudinal direction of the third chamfer portion 126Cc regardless of order. For example, the red, green, and blue LEDs 210, 220, and 230 may be arranged alternately in the longitudinal direction of the third chamfer portion 126Cc. In this manner, red light, green light, and blue light may be mixed to produce white light, and the white light may be irradiated to the third chamfer portion 126Cc.

Accordingly, the phosphor 127 may not be provided on the third chamfer portion 126Cc, and it is possible to provide the backlight unit for the display device with reduced manufacturing costs.

In addition, it is possible to minimize color separation on the third chamfer portion 126Cc even without using the phosphor 127 separately.

The corner light source 200xe may include the red, green, and blue LEDs 210, 220, and 230. The red, green, and blue LEDs 210, 220, and 230 of the corner light source 200xe may be arranged in the row direction (e.g., x direction) of the matrix pattern regardless of order. For example, the corner light source 200xe may include the red, green, and blue LEDs 210, 220, and 230 that are arranged sequentially in the x direction.

The corner light source 200xe may include a corner diode which corresponds to one of the red, green, and blue LEDs 210, 220, and 230, and is closest to the third chamfer portion 126Cc. For example, the red LED 210 of the corner light source 200xe may be closest to the third chamfer portion 126Cc. One of the red, green, and blue LEDs 210, 220, and 230 of the corner light source 200xe may form a colored light-emitting region. For example, the corner diode of the corner light source 200xe may correspond to the red LED 210, and the red LED 210 may form a red colored light-emitting region. Red light of the colored light-emitting region may be irradiated to an end portion of the third chamfer portion 126Cc that is adjacent to the corner portion of the reflective sheet 126.

A phosphor 127 may be provided on the end portion of the third chamfer portion 126Cc that is adjacent to the corner portion of the reflective sheet 126. For example, a cyan phosphor 127b may be provided on the end portion of the third chamfer portion 126Cc, and the cyan phosphor 127b may face the corner light source 200xe. The cyan phosphor 127b may absorb red light of the colored light-emitting region and emit white light.

However, in one embodiment, the light irradiated to the third chamfer portion 126Cc that is adjacent to the corner portion of the reflective sheet 126 may vary depending on the characteristics of the protective lenses 240 and 250. For example, the arrangement of light-emitting regions may be opposite the arrangement of the LEDs, depending on the characteristics of the protective lens 240. Accordingly, a colored light-emitting region of the blue LED 230 located inside the light source 200 may be formed, and blue light of the colored light-emitting region may also be irradiated to the end portion of the third chamfer portion 126Cc that is adjacent to the corner portion of the reflective sheet 126. A yellow phosphor may also be provided on the corner portion of the reflective sheet 126. The yellow phosphor may absorb blue light and emit white light.

In addition, in one embodiment, a colored light-emitting region of the green LED 220 located at the center of the light source 200 may be formed depending on the characteristics of the protective lenses 240 and 250, and green light of the colored light-emitting region may also be irradiated to the corner portion of the reflective sheet 126. A magenta phosphor may be provided on the corner portion of the reflective sheet 126. The magenta phosphor may absorb green light and emit white light.

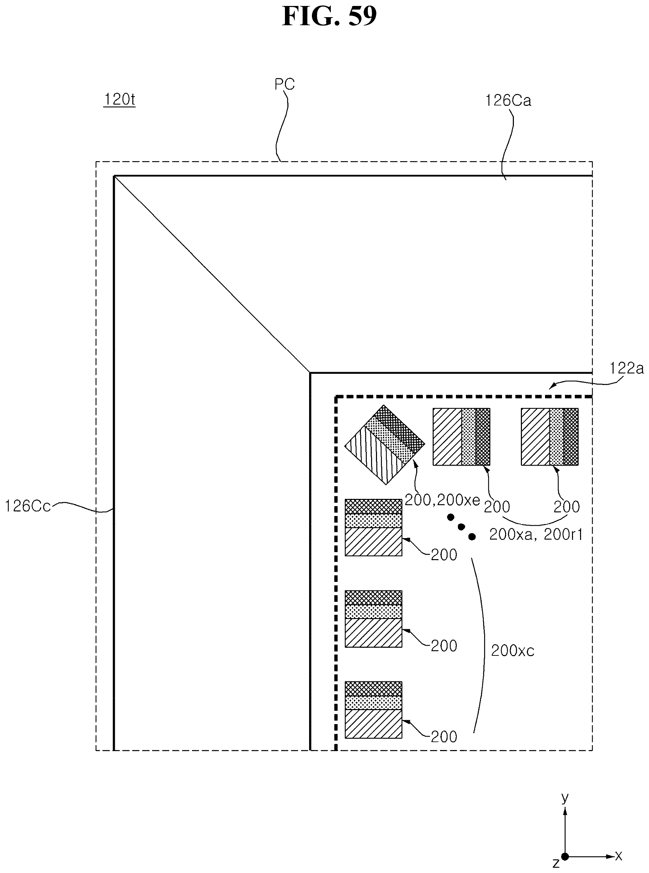

Referring to FIG. 59 together with FIG. 58, the corner light source 200xe may be rotated to be tilted. For example, the corner light source 200xe disposed in the first row Ro1 and the first column Co1 of the matrix pattern may be rotated about 45 degrees counterclockwise.

The corner light source 200xe may include the red, green, and blue LEDs 210, 220, and 230.

The red, green, and blue LEDs 210, 220, and 230 of the corner light source 200xe may be arranged in a direction intersecting the row direction and the column direction of the matrix pattern, regardless of order. For example, the corner light source 200xe may include the red, green, and blue LEDs 210, 220, and 230 that are arranged sequentially in the xy direction. In this manner, red light, green light, and blue light may be mixed to produce white light, and the white light may be irradiated to the corner portion of the reflective sheet 126.

Accordingly, the phosphor 127 may not be provided on the corner portion of the reflective sheet 126, and it is possible to provide the backlight unit for the display device with reduced manufacturing costs.

In addition, it is possible to minimize color separation on the corner portion of the reflective sheet 126 even without using the phosphor 127 separately.

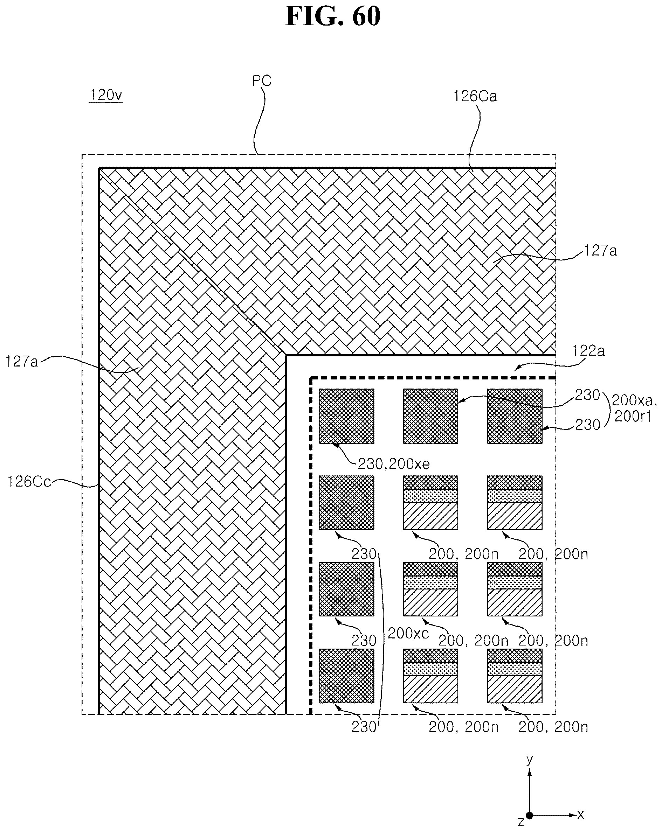

Referring to FIG. 60, each of at least some of the outer light sources 200x may include one of the red, green, and blue LEDs 210, 220, and 230. Each of at least some of the outer light sources 200x may not include the rest of the red, green, and blue LEDs 210, 220, and 230. For example, at least some of the outer light sources 200x may include the blue LED 230.

A phosphor 127 may be provided on the chamfer portion 126C. For example, a yellow phosphor 127a may be provided on the chamfer portion 126C, and may face the outer light source 200x. The yellow phosphor 127a may absorb blue light of the colored light-emitting region and emit white light.

Accordingly, the colors of light irradiated to the chamfer portion 126C may be may be unified.

In addition, it is possible to minimize color separation on the chamfer portion 126C.

Each of the inner light sources 200n may include the red, green, and blue LEDs 210, 220, and 230.

Accordingly, the ability of the backlight unit 120 for the display device to produce white light can be improved.

In addition, the backlight unit 120 for the display device capable of improving image quality can be provided.

Moreover, the backlight unit 120 for the display device capable of improving color gamut can be provided.

In addition, the backlight unit 120 for the display device capable of improving luminance can be provided.

Further, the backlight unit 120 for the display device capable of improving stereoscopic effect can be provided.

In addition, the backlight unit 120 for the display device capable of improving color separation can be provided.

Further, the backlight unit 120 for the display device capable of increasing a viewing angle can be provided.

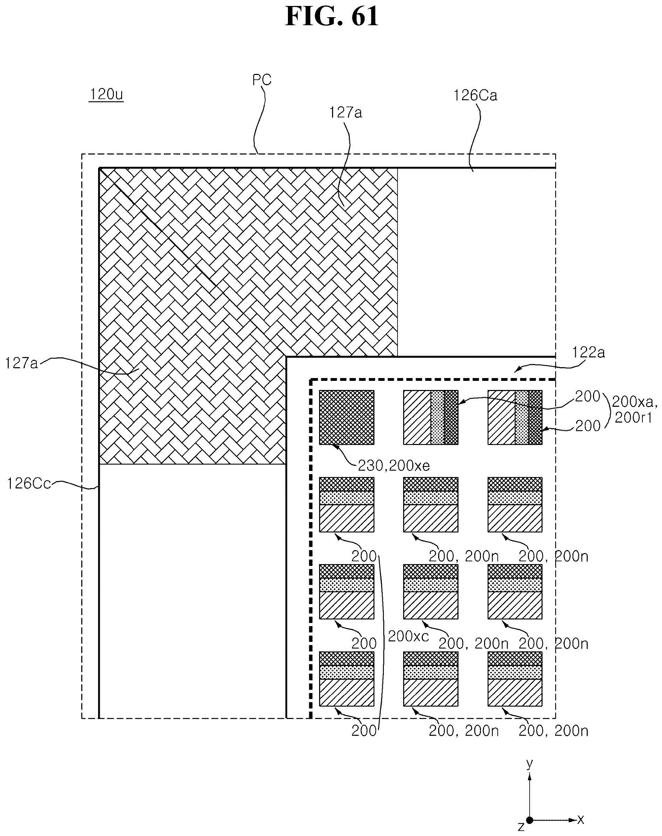

Referring to FIG. 61 together with FIG. 60, in one embodiment, each of at least some of the first outer light sources 200xa may include the red, green, and blue LEDs 210, 220, and 230. The red, green, and blue LEDs 210, 220, and 230 of each of at least some of the first outer light sources 200xa may be arranged in the row direction (e.g., x direction) of the matrix pattern regardless of order. For example, each of the first outer light sources 200xa, except the corner light source 200xe, may include the red, green, and blue LEDs 210, 220, and 230 that are arranged sequentially in the x direction.

The arrangement direction of the red, green, and blue LEDs 210, 220, and 230 of each of at least some of the first outer light sources 200xa may be parallel to the longitudinal direction of the first chamfer portion 126Ca. That is, the red, green, and blue LEDs 210, 220, and 230 of each of at least some of the first outer light sources 200xa may be arranged in the longitudinal direction of the first chamfer portion 126Ca regardless of order. For example, the red, green, and blue LEDs 210, 220, and 230 of each of the first outer light sources 200xa, except the corner light source 200xe, may be arranged in the longitudinal direction of the first chamfer portion 126Ca. In this manner, red light, green light, and blue light may be mixed to produce white light, and the white light may be irradiated to a portion of the first chamfer portion 126Ca.

Accordingly, the phosphor 127 may not be provided on a portion of the first chamfer portion 126Ca, and it is possible to provide the backlight unit for the display device with reduced manufacturing costs.

In addition, it is possible to minimize color separation on a portion of the first chamfer portion 126Ca even without using the phosphor 127 separately.

Each of at least some of the third outer light sources 200xc may include the red, green, and blue LEDs 210, 220, and 230. The red, green, and blue LEDs 210, 220, and 230 of each of at least some of the third outer light sources 200xc may be arranged in the column direction (e.g., y direction) of the matrix pattern regardless of order. For example, each of the third outer light sources 200xc, except the corner light source 200xe, may include the red, green, and blue LEDs 210, 220, and 230 that are arranged sequentially in the y direction.

The arrangement direction of the red, green, and blue LEDs 210, 220, and 230 of each of at least some of the third outer light sources 200xc may be parallel to the longitudinal direction of the third chamfer portion 126Cc. That is, the red, green, and blue LEDs 210, 220, and 230 of each of at least some of the third outer light sources 200xc may be arranged in the longitudinal direction of the third chamfer portion 126Cc regardless of order. For example, the red, green, and blue LEDs 210, 220, and 230 of each of the third outer light sources 200xc, except the corner light source 200xe, may be arranged in the longitudinal direction of the third chamfer portion 126Cc. In this manner, red light, green light, and blue light may be mixed to produce white light, and the white light may be irradiated to a portion of the third chamfer portion 126Cc.

Accordingly, the phosphor 127 may not be provided on a portion of the third chamfer portion 126Cc, and it is possible to provide the backlight unit for the display device with reduced manufacturing costs.

In addition, it is possible to minimize color separation on a portion of the third chamfer portion 126Cc even without using the phosphor 127 separately.

The corner light source 200xe may include only one of the red, green, and blue LEDs 210, 220, and 230. The corner light source 200xe may not include the rest of the red, green, and blue LEDs 210, 220, and 230. For example, the corner light source 200xe may include only the blue LED 230.

A phosphor 127 may be provided on the corner portion of the chamfer portion 126C. For example, a yellow phosphor 127a may be provided on the corner portion of the chamfer portion 126C. The yellow phosphor 127a may face the corner light sources 200xe. The yellow phosphor 127a may absorb blue light of the colored light-emitting region and emit white light.

Accordingly, the colors of light irradiated to the corner portion of the chamfer portion 126C may be unified.

In addition, it is possible to minimize color separation on the corner portion of the chamfer portion 126C.

In addition, the backlight unit 120 for the display device capable of improving image quality can be provided.

Moreover, the backlight unit 120 for the display device capable of improving color gamut can be provided.

In addition, the backlight unit 120 for the display device capable of improving luminance can be provided.

Further, the backlight unit 120 for the display device capable of improving stereoscopic effect can be provided.

In addition, the backlight unit 120 for the display device capable of improving color separation can be provided.

Further, the backlight unit 120 for the display device capable of increasing a viewing angle can be provided.

Referring to FIGS. 1 to 61, a backlight unit 120 for a display device includes: a plurality of light sources 200 arranged in a matrix pattern on at least one substrate 122, each of the light sources 200 including a red light emitting diode (LED) 210, a green LED 220, and a blue LED 230; a frame 130 accommodating the substrate 122, the frame 130 including a receiving portion 131 at which the substrate 122 is disposed, and a side portion 133 extending obliquely from edges of the receiving portion 131; a reflective sheet 126 covering the substrate 122, the reflective sheet 126 including a central portion 126P that covers the substrate 122 and a chamfer portion 126C that covers the side portion 133; and a phosphor 127 on the chamfer portion 126C.

The light sources 200 may include first outer light sources 200xa arranged in a first row Ro1 of the matrix pattern.

The red, green, and blue LEDs 210, 220, and 230 of each of the first outer light sources 200xa may be arranged in a column direction of the matrix pattern regardless of order.

The chamfer portion 126C may include a first chamfer portion 126Ca which is elongated in a row direction of the matrix pattern and adjacent to the first row Ro1 of the matrix pattern.

The phosphor 127 may be provided on the first chamfer portion 126Ca.

Each of the first outer light sources 200xa may include a first outermost diode which corresponds to the red, green, or blue LEDs 210, 220, or 230 and is closest to the chamfer portion 126C.

The first outermost diodes may be composed of one of the red, green, and blue LEDs 210, 220, and 230.

Each of the first outer light sources 200xa may include a first outermost diode which corresponds to the red, green, or blue LEDs 210, 220, or 230 and is closest to the chamfer portion 126C, wherein a first portion of the first outermost diodes may be composed of one of the red, green, and blue LEDs 210, 220, and 230, and a second portion of the first outermost diodes may be composed of another one of the red, green, and blue LEDs 210, 220, and 230.

The phosphor 127 may include a first phosphor provided on a portion of the first chamfer portion 126Ca that is adjacent to the first portion of the first outer diodes; and a second phosphor different from the first phosphor, the second phosphor provided on another portion of the first chamfer portion 126Ca that is adjacent to the second portion of the first outermost didoes.

The light sources 200 may further include second outer light sources 200xb arranged in a last row RoN of the matrix pattern.

The red, green, and blue LEDs 210, 220, and 230 of each of the second outer light sources 200xb may be arranged in the column direction of the matrix pattern regardless of order.

The chamfer portion 126C may include a second chamfer portion 126Cb which is elongated in the row direction of the matrix pattern and adjacent to the last row RoN of the matrix pattern.

Each of the second outer light sources 200xb may include a second outermost diode which corresponds to the red, green, or blue LEDs 210, 220, or 230 and is closest to the second chamfer portion 126C.

The second outermost diodes may be composed of one of the red, green, and blue LEDs 210, 220, and 230.

The phosphor 127 may also be provided on the second chamfer portion 126Cb.

The light sources 200 may further include second outer light sources 200xb arranged in a last row RoN of the matrix pattern, wherein the red, green, and blue LEDs 210, 220, and 230 of each of the second outer light sources 200xb may be arranged in the column direction of the matrix pattern regardless of order, wherein the chamfer portion 126C may include a second chamfer portion 126Cb which is elongated in the row direction of the matrix pattern and adjacent to the last row RoN of the matrix pattern, wherein each of the second outer light sources 200xb may include a second outermost diode which corresponds to the red, green, or blue LEDs 210, 220, or 230 and is closest to the second chamfer portion 126C, wherein the second outermost diodes may be composed of one of the red, green, and blue LEDs 210, 220, and 230.

The phosphor 127 may include: a first phosphor provided on the first chamfer portion 126Ca; and a second phosphor different from the first phosphor and provided on the second chamfer portion 126Ca.

The light sources 200 may include third outer light sources 200xc arranged in a first column Co1 of the matrix pattern.

The red, green, and blue LEDs 210, 220, and 230 of each of the third outer light sources 200xc may be arranged in the row direction of the matrix pattern regardless of order.

The chamfer portion 126C may further include a third chamfer portion 126Cc which is elongated in the column direction of the matrix pattern and adjacent to the first column Co1 of the matrix pattern.

Each of the third outer light sources 200xc may include a third outermost diode which corresponds to the red, green, or blue LEDs 210, 220, or 230 and is closest to the third chamfer portion 126Cc.

The third outermost diodes may be composed of one of the red, green, and blue LEDs 210, 220, and 230.

The phosphor 127 may also be provided on the third chamfer portion 126Cc.

The light sources 200 may further include third outer light sources 200xc arranged in a first column Co1 of the matrix pattern, wherein the red, green, and blue LEDs 210, 220, and 230 of each of the third outer light sources 200xc may be arranged in the column direction of the matrix pattern regardless of order.

The light sources 200 may further include corner light sources 200xe disposed at four corners of the matrix pattern.

The red, green, and blue LEDs 210, 220, and 230 of each of the corner light sources 200xe may be arranged in a direction intersecting the row direction and the column direction of the matrix pattern, regardless of order.

Each of the corner light sources 200xe may include a corner diode which corresponds to the red, green, or blue LEDs 210, 220, or 230, and is closest to a corner portion of the reflective sheet 126.

The corner diodes may be composed of one of the red, green, and blue LEDs 210, 220, and 230.

Referring to FIGS. 1 to 61, a backlight unit 120 for a display device includes: a plurality of light sources 200 arranged in a matrix pattern on a substrate 122, each of the light sources 200 including a red light emitting diode (LED) 210, a green LED 220, and a blue LED 230; a frame 130 accommodating the substrate 122, the frame 130 including a receiving portion 131 at which the substrate 122 is disposed, and a side portion 133 extending obliquely from edges of the receiving portion 131; and a reflective sheet 126 including a central portion 126P that covers the substrate 122 and a chamfer portion 126C that covers the side portion 133, wherein the light sources 200 include: first outer light sources 200xa arranged in a first row Ro1 of the matrix pattern; and second outer light sources 200xb arranged in a last row RoN of the matrix pattern, wherein the red, green, and blue LEDs 210, 220, and 230 of each of at least some of the first and second outer light sources 200xa and 200xb may be arranged in a row direction of the matrix pattern regardless of order.

The light sources 200 may further include third outer light sources 200xc arranged in a first column Co1 of the matrix pattern

The red, green, and blue LEDs 210, 220, and 230 of each of at least some of the third outer light sources 200xc may be arranged in a column direction of the matrix pattern regardless of order.

The light sources 200 may further include corner light sources 200xe disposed at four corners of the matrix pattern.

The red, green, and blue LEDs 210, 220, and 230 of each of the corner light sources 200xe may be arranged in a direction intersecting the row direction and the column direction of the matrix pattern, regardless of order.

The light sources 200 may further include third outer light sources 200xc arranged in a first column Co1 of the matrix pattern, wherein the red, green, and blue LEDs 210, 220, and 230 of each of the third outer light sources 200xc may be arranged in the row direction of the matrix pattern regardless of order, wherein each of the third outer light sources 200xc may include a third outermost diode that is closest to the chamfer portion 126C.

A first portion of the third outermost diodes may be composed of one of the red, green, and blue LEDs 210, 220, and 230, and a second portion of the third outermost diodes may be composed of another one of the red, green, and blue LEDs 210, 220, and 230.

The backlight unit for the display device may further include a phosphor 127 provided on a portion of the chamfer portion 126C that is adjacent to the first column Co1 of the matrix pattern.

The first portion and the second portion of the second outermost diodes may be arranged randomly.

A remaining portion of the second outermost diodes may be composed of a remaining one of the red, green, and blue LEDs 210, 220, and 230.

Referring to FIGS. 1 to 61, a backlight unit 120 for a display device includes: a plurality of light sources 200 arranged in a matrix pattern on at least one substrate 122; a frame 130 accommodating the substrate 122, the frame 130 including a receiving portion 131 at which the substrate 122 is disposed, and a side portion 133 extending obliquely from edges of the receiving portion 131; a reflective sheet 126 covering the substrate 122, the reflective sheet 126 including a central portion 126P that covers the substrate 122 and a chamfer portion 126C that covers the side portion 133; and a phosphor 127 on the chamfer portion 126C, wherein the light sources 200 include: outer light sources 200x arranged in a first row Ro1, a last row RoN, a first column Co1, and a last column CoN of the matrix pattern; and inner light sources 200n including a red light emitting diode (LED) 210, a green LED 220, and a blue LED 230 and surrounded by the outer light sources 200x.

At least some of the outer light sources 200x may be composed of one of the red, green, and blue LEDs 210, 220, and 230.

The outer light sources 200x may further include corner light sources 200xe disposed at four corners of the matrix pattern.

The corner light sources 200xe may be composed of the one of the red, green, and blue LEDs 210, 220, and 230.

A remaining portion of the outer light sources 200x may include the red, green, and blue LEDs 210, 220, and 230.

A backlight unit for a display device according to the present disclosure has the following effects.

According to at least one of the embodiments of the present disclosure, a backlight unit for a display device capable of improving image quality can be provided.

According to at least one of the embodiments of the present disclosure, a backlight unit for a display device capable of improving color gamut can be provided.

According to at least one of the embodiments of the present disclosure, a backlight unit for a display device capable of improving luminance can be provided.

According to at least one of the embodiments of the present disclosure, a backlight unit for a display device capable of improving stereoscopic or three-dimensional (3D) effect can be provided.

According to at least one of the embodiments of the present disclosure, a backlight unit for a display device capable of increasing a viewing angle can be provided.

According to at least one of the embodiments of the present disclosure, a backlight unit for a display device capable of improving the ability to produce white light can be provided.

According to at least one of the embodiments of the present disclosure, a backlight unit for a display device including a red light emitting diode (LED), a green LED, and a blue LED can be provided.

According to at least one of the embodiments of the present disclosure, a backlight unit for a display device capable of improving color separation can be provided.

According to at least one of the embodiments of the present disclosure, a backlight unit for a display device capable of reducing manufacturing costs can be provided.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the spirit and scope of the present disclosure will become apparent to those skilled in the art from this detailed description.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A backlight unit for a display device comprising:
a plurality of light sources arranged in a matrix pattern on at least one substrate, each of the light sources including a red light emitting diode, LED, a green LED, and a blue LED;
a frame accommodating the substrate, the frame including a receiving portion at which the substrate is disposed, and a side portion extending obliquely from edges of the receiving portion;
a reflective sheet covering the substrate, the reflective sheet including a central portion that covers the substrate and a chamfer portion that covers the side portion; and
a phosphor on the chamfer portion.

2. The backlight unit of claim 1, wherein the light sources comprise first outer light sources arranged in a first row of the matrix pattern,
wherein the red, green, and blue LEDs of each of the first outer light sources are arranged in a column direction of the matrix pattern regardless of order,
wherein the chamfer portion comprises a first chamfer portion which is elongated in a row direction of the matrix pattern and adjacent to the first row of the matrix pattern.
wherein the phosphor is provided on the first chamfer portion.

3. The backlight unit of claim 2, wherein each of the first outer light sources comprises a first outermost diode which corresponds to the red, green, or blue LEDs and is closest to the chamfer portion,
wherein the first outermost diodes are composed of one of the red, green, and blue LEDs.

4. The backlight unit of claim 2, wherein each of the first outer light sources comprises a first outermost diode which corresponds to the red, green, or blue LEDs and is closest to the chamfer portion,
wherein a first portion of the first outermost diodes are composed of one of the red, green, and blue LEDs, and a second portion of the first outermost diodes are composed of another one of the red, green, and blue LEDs.

5. The backlight unit of claim 4, wherein the phosphor comprises a first phosphor provided on a portion of the first chamfer portion that is adjacent to the first portion of the first outer diodes; and
a second phosphor different from the first phosphor, the second phosphor provided on another portion of the first chamfer portion that is adjacent to the second portion of the first outermost didoes.

6. The backlight unit of any one of claims 1 to 5, wherein the light sources further comprise second outer light sources arranged in a last row of the matrix pattern,
wherein the red, green, and blue LEDs of each of the second outer light sources are arranged in the column direction of the matrix pattern regardless of order,
wherein the chamfer portion further comprises a second chamfer portion which is elongated in the row direction of the matrix pattern and adjacent to the last row of the matrix pattern,
wherein each of the second outer light sources comprises a second outermost diode which corresponds to the red, green, or blue LEDs and is closest to the second chamfer portion,
wherein the second outermost diodes are composed of one of the red, green, and blue LEDs,
wherein the phosphor is also provided on the second chamfer portion.

7. The backlight unit of any one of claims 2 to 5, wherein the light sources further comprise second outer light sources arranged in a last row of the matrix pattern,
wherein the red, green, and blue LEDs of each of the second outer light sources are arranged in the column direction of the matrix pattern regardless of order,
wherein the chamfer portion further comprises a second chamfer portion which is elongated in the row direction of the matrix pattern and adjacent to the last row of the matrix pattern,
wherein each of the second outer light sources comprises a second outermost diode which corresponds to the red, green, or blue LEDs and is closest to the second chamfer portion,
wherein the second outermost diodes are composed of one of the red, green, and blue LEDs,
wherein the phosphor comprises:
a first phosphor provided on the first chamfer portion; and
a second phosphor different from the first phosphor and provided on the second chamfer portion.

8. The backlight unit of any one of claims 1 to 7, wherein the light sources further comprise third outer light sources arranged in a first column of the matrix pattern,
wherein the red, green, and blue LEDs of each of the third outer light sources are arranged in the row direction of the matrix pattern regardless of order,
wherein the chamfer portion further comprises a third chamfer portion which is elongated in the column direction of the matrix pattern and adjacent to the first column of the matrix pattern,
wherein each of the third outer light sources comprises a third outermost diode which corresponds to the red, green, or blue LEDs and is closest to the third chamfer portion,
wherein the third outermost diodes are composed of one of the red, green, and blue LEDs,
wherein the phosphor is also provided on the third chamfer portion.

9. The backlight unit of any one of claims 1 to 7, wherein the light sources further comprise third outer light sources arranged in a first column of the matrix pattern,
wherein the red, green, and blue LEDs of each of the third outer light sources are arranged in the column direction of the matrix pattern regardless of order.

10. The backlight unit of any one of claims 1 to 9, wherein the light sources further comprise corner light sources disposed at four corners of the matrix pattern,
wherein the red, green, and blue LEDs of each of the corner light sources are arranged in a direction intersecting the row direction and the column direction of the matrix pattern, regardless of order.

11. The backlight unit of claim 10, wherein each of the corner light sources comprises a corner diode which corresponds to the red, green, or blue LEDs, and is closest to a corner portion of the reflective sheet,
wherein the corner diodes are composed of one of the red, green, and blue LEDs.

12. A backlight unit for a display device comprising:
a plurality of light sources arranged in a matrix pattern on a substrate, each of the light sources including a red light emitting diode, LED, a green LED, and a blue LED;
a frame accommodating the substrate, the frame including a receiving portion at which the substrate is disposed, and a side portion extending obliquely from edges of the receiving portion; and
a reflective sheet including a central portion that covers the substrate and a chamfer portion that covers the side portion,
wherein the light sources comprise:
first outer light sources arranged in a first row of the matrix pattern; and
second outer light sources arranged in a last row of the matrix pattern,
wherein the red, green, and blue LEDs of each of at least some of the first and second outer light sources are arranged in a row direction of the matrix pattern regardless of order.

13. The backlight unit of claim 12, wherein the light sources further comprise third outer light sources arranged in a first column of the matrix pattern,
wherein the red, green, and blue LEDs of each of at least some of the third outer light sources are arranged in a column direction of the matrix pattern regardless of order.

14. The backlight unit of claim 12 or 13, wherein the light sources further comprise corner light sources disposed at four corners of the matrix pattern,
wherein the red, green, and blue LEDs of each of the corner light sources are arranged in a direction intersecting the row direction and the column direction of the matrix pattern, regardless of order.

15. The backlight unit of claim 12 or 14, wherein the light sources further comprise third outer light sources arranged in a first column of the matrix pattern,
wherein the red, green, and blue LEDs of each of the third outer light sources are arranged in the row direction of the matrix pattern regardless of order,
wherein each of the third outer light sources comprises a third outermost diode that is closest to the chamfer portion,
wherein a first portion of the third outermost diodes are composed of one of the red, green, and blue LEDs, and a second portion of the third outermost diodes are composed of another one of the red, green, and blue LEDs.
